# EUROPEAN PATENT SPECIFICATION

(11) **EP 2 191 974 B1**
(45) Date of publication and mention of the grant of the patent: **04.05.2016**
(21) Application number: 08829261.0
(22) Date of filing: 03.09.2008
(51) Int. Cl.: B41M 3/14, B42D 25/00

(54) **FORGERY PREVENTION PRINTED MATTER**
DRUCKSACHE MIT FÄLSCHUNGSSICHERUNG
IMPRIMÉ POUR EMPÊCHER LA FALSIFICATION

(30) Priority: 03.09.2007 JP 2007227564; 14.11.2007 JP 2007295146; 22.04.2008 JP 2008111008; 20.06.2008 JP 2008161350; 01.08.2008 JP 2008199731; 01.08.2008 JP 2008199732
(43) Date of publication of application: 02.06.2010
(73) Proprietor: National Printing Bureau, Incorporated Administrative Agency, Tokyo (JP)
(72) Inventor: KIUCHI, Susumu, Tokyo 105-8445 (JP); OHSHIMA, Kazuya, Tokyo 105-8445 (JP); SATOH, Kayoko, Tokyo 105-8445 (JP); KIUCHI, Masato, Tokyo 105-8445 (JP)
(74) Representative: 2K Patentanwälte Blasberg Kewitz & Reichel
(86) International application number: PCT/JP2008/065845
(87) International publication number: WO 2009/031570

(56) References cited:
- EP-A1- 0 375 833
- WO-A2-03/014836
- DE-C1- 10 127 979
- JP-A- 01 043 581
- JP-A- 48 038 698
- JP-A- 2000 037 941
- JP-A- 2001 324 949
- JP-A- 2006 051 646
- JP-A- 2007 106 116
- JP-A- 2007 144 671
- JP-U- 3 120 531

## Description

### TECHNICAL FIELD

The present invention relates to a printed matter which requires an anti-counterfeit or anti-copy technique for securities such as banknotes, stock certificates, and bonds, various kinds of certificates, and important documents.

### BACKGROUND ART

Generally, various techniques are applied to produce an anti-counterfeit effect for valuable printed matters of certificate documents. However, along with the recent advent of high-quality color copying machines and computerized color reproduction techniques, certificate document counterfeit techniques tend to be rich in variety. Measures against certificate document counterfeit cope with this by growing in sophistication. However, this leads to an increase in manufacturing cost necessary for anti-counterfeit, and for example, introducing dedicated facilities including special machines and tools for obtaining an environment to confirm the anti-counterfeit effect sometimes drives up the cost of authenticity determination.

One of useful methods of enabling authenticity determination at low cost is a technique of overlaying a discrimination tool on a printed matter. More specifically, a discrimination tool is overlaid on a printed matter containing an invisible image, thereby making the invisible image visible. The major form of the discrimination tool is a lenticular lens or a transparent sheet (to be referred to as a "parallel line filter" hereinafter) with a parallel line screen printed on it. The techniques of visualizing an invisible image are roughly classified into two types: dot phase modulation and line phase modulation.

As a printed matter whose latent image is visualized upon overlaying a discrimination tool formed from such a parallel line filter and an authenticity determination method therefore, there exists a printed matter having a background image portion printed by parallel line (or dot) objects and a latent image portion printed by parallel line (or dot) objects in a phase different from that of the background image portion. The background image portion and latent image portion of the printed matter appear to be hard to visually recognize discriminately. However, a method is known which allows to visually recognize the background image portion and latent image portion by overlaying a parallel line filter on the printed matter at a predetermined position.

An example of dot phase modulation includes an image forming method and a printed matter with patterns phase-modulated in the first and second directions, in which a first multi-tone image is formed by overlaying a parallel line filter so as to make the first direction of the printed matter coincide with the parallel line pattern of the parallel line filter, and a second multi-tone image is formed by changing the overlay angle of the parallel line filter so as to make the second direction of the printed matter coincide with the parallel line pattern (for example, patent reference 1).

Another example of dot phase modulation is a printed matter in which dots of a dot pattern whose image becomes visible upon overlaying a lens array (e.g., flyeye lens, honeycomb lens, or lenticular lens) on the base material include dots in at least two types of screen line numbers and at least two types of screen angles. If the printed matter is authentic, the percent dot area of the dots of the dot pattern does not change. Hence, an invisible image is visualized by overlaying a lens array. If the printed matter is a duplication, the dots reproduced by the size of the screen line number or the dot angle degrade, and the dot density changes. Hence, an image different from the invisible image becomes visible on the printed matter (for example, patent reference 2).

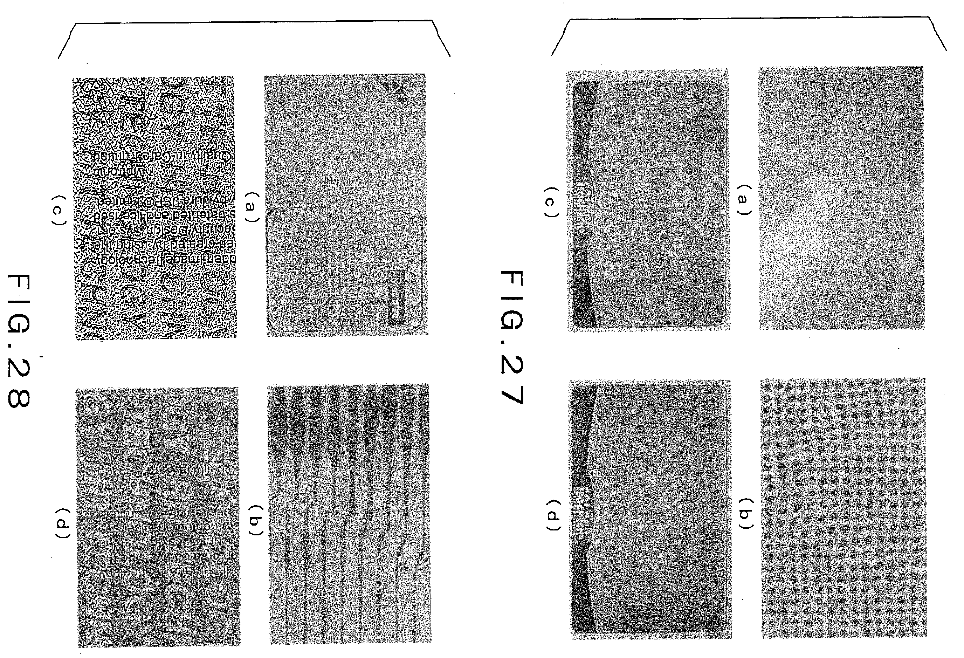

An example of dot phase modulation on abroad is Isogram available from Astron Design, Netherlands (for example, non-patent reference p. 1340). More specifically, a flat pattern having an apparently uniform density, like a printed matter shown in Fig. 27(a), includes an invisible image formed by the phase of fine dots as shown in the enlarged view of Fig. 27(b). When a dedicated sheet is overlaid on the printed matter, the invisible image is made visible as a negative or positive image as shown in Fig. 27(c) or 27(d). However, it is impossible to clearly visualize the image because of the flat pattern having a uniform density.

The present applicants have applied for a patent concerning a printed matter using dot phase modulation. This is a latent image printed matter having two latent image patterns formed by periodically arraying a plurality of isochromatic pixels on a base material. The printed matter has a first latent image pattern (invisible image) in a first region where the plurality of pixels are arrayed with a phase shift in the first direction and a second latent image pattern (invisible image) in a second region printed by a functional ink (for example, patent reference 3).

Examples of line phase modulation are a printed matter having line portions and non-line portions on a base material, in which a plurality of kinds of latent image parallel line patterns each printed in a different color and having a latent image portion formed by shifting the parallel line phase by a 1/2 pitch with respect to a parallel line pattern having a single pitch and width are superimposed at different angles and printed, and a printed matter whose latent image portion is made visible by overlaying a film having the same pitch as that of the parallel line pattern of the printed matter on a plurality of kinds of invisible images (for example, patent reference 4).

An example of line phase modulation on abroad is HIT (Hidden Image Technology) available from Jura, Hungary (for example, non-patent reference p. 1341). A flat pattern having an apparently uniform density, as shown in Fig. 28(a), includes an invisible image formed by the phase of fine parallel lines as shown in the enlarged view of Fig. 28(b). When a dedicated sheet is overlaid on the printed matter, the invisible image is made visible as a negative or positive image as shown in Fig. 28(c) or 28(d). Note that since it may be possible to identify the invisible image of the printed matter shown in Fig. 28(a) by normal observation, a visible image is formed as a camouflage pattern by changing the object width of some parallel lines, as shown in Fig. 28(b). Hollow objects may be used to form the visible image. However, when the invisible image is made visible by overlaying the dedicated sheet, the camouflage pattern is also visualized to impede visibility of the visualized invisible image.

In general, a pattern formed by dot phase modulation or line phase modulation is flat.

There has also been proposed an anti-counterfeit image printed matter, in which a unit block is divided into m columns x n rows to form minimum unit blocks b1, b2, b3, b4,.... having the same shape. Latent images G1, G2, G3, G4,... whose pixel units g1, g2, g3, g4,... are the minimum unit blocks b1, b2, b3, b4,..., respectively, are formed on an image forming sheet. The pixel units g1, g2, g3, g4,... are parallel line patterns each formed from one or more parallel lines. One of the parallel line patterns that are formed from parallel lines at parallel line pitches p including pitches p1, p2, p3, p4,... and parallel line angles θ including parallel line angles θ1, θ2, θ3, θ4,... constructs the anti-counterfeit image printed matter. Visualizing parallel line sheets obtained by forming, on transparent sheets, different parallel line patterns formed from parallel lines having the same parallel line pitches p and parallel line angles θ as those of the parallel line patterns constructing the pixel units g1, g2, g3, g4,... are overlaid, thereby visualizing the latent images G1, G2, G3, G4,...(for example, patent reference 5).

The anti-counterfeit image printed matter according to patent reference 5 visualizes the plurality of latent images by changing the parallel line pattern pitch and angle between the unit pixels. However, the visible image can only be expressed as a uniform background pattern. To visualize the latent images, transparent sheets that require pitches and angles conforming to the parallel line patterns of the unit pixels of the latent images is necessary. That is, a plurality of discrimination tools need to be prepared.
Non-patent reference 1: Optical Security and Counterfeit Deterrence Techniques IV Vol. 4677 (by SPIE - The International Society for Optical Engineering)
Patent reference 1: Japanese Patent No. 4132122
Patent reference 2: Japanese Patent No. 4013450
Patent reference 3: Japanese Patent Application No. 2007-43171
Patent reference 4: Japanese Patent Laid-Open No. 2004-174997
Patent reference 5: Japanese Patent Laid-Open No. 2007-15120

Document WO 03/014836 A2 discloses a matter according to the preamble of claim 1.

### DISCLOSURE OF INVENTION

In the above-described conventional printed matters, since a latent image pattern is formed from printed objects having a uniform density, it is impossible to form an invisible image that can clearly be visualized.

If some type of visible image is formed, it impedes visibility of a visualized invisible image because the visible image is formed from simple hollow objects, like the printed matter described in patent reference 2. Some printed matters require a plurality of discrimination tools, like the printed matter described in patent reference 5.

The present invention has been made in consideration of the above-described situations, and has as its object to provide an anti-counterfeit printed matter which forms an invisible image that can be visualized clearly by a single discrimination tool, and also prevents a visible image from impeding visibility of a visualized invisible image.

According to the present invention, there is provided an anti-counterfeit printed matter characterized in that a plurality of object elements are arranged at a predetermined pitch in a matrix, each object element including a first object and a second object which are arranged along a first direction on both sides of a boundary at a center so as to oppose each other, and a third object and a fourth object which are arranged along a second direction perpendicular to the first direction on both sides of a boundary at the center so as to oppose each other, the first object and the second object of each object element have a negative/positive relationship and the same area, the first object forms one of a positive image and a negative image of a first invisible image, and the second object forms one of the negative image and the positive image of the first invisible image, and the third object and the fourth object of each object element have the negative/positive relationship and the same area, the third object forms one of a positive image and a negative image of a second invisible image, and the fourth object forms one of the negative image and the positive image of the second invisible image.

In the anti-counterfeit printed matter of the present invention, the object element may have a square shape and sides each having a length of not more than 1 mm.

In the anti-counterfeit printed matter of the present invention, the object element may further include a fifth object arranged in a region where the first object, the second object, the third object, and the fourth object do not exist, and the fifth object may form a visible image.

In the anti-counterfeit printed matter of the present invention, each of the first object, the second object, the third object, and the fourth object can have one of a circular shape and a polygonal shape.

In the anti-counterfeit printed matter of the present invention, each of the first object, the second object, the third object, and the fourth object may have a semicircular shape, the first object and the second object may be arranged so as to oppose each other, thereby forming one circle, the third object and the fourth object may be arranged so as to oppose each other, thereby forming one circle, and a half of the first object may overlap a half of the third object, a half of the first object may overlap a half of the fourth object, a half of the second object may overlap a half of the third object, and a half of the second object may overlap a half of the fourth object so that the first object, the second object, the third object, and the fourth object form one circle.

In the anti-counterfeit printed matter of the present invention, each of the first object, the second object, the third object, and the fourth object may have an isosceles triangular shape, the first object and the second object may be arranged so as to oppose each other, thereby forming one rectangle, the third object and the fourth object may be arranged so as to oppose each other, thereby forming one rectangle, and a half of the first object may overlap a half of the third object, a half of the first object may overlap a half of the fourth object, a half of the second object may overlap a half of the third object, and a half of the second object may overlap a half of the fourth object so that the first object, the second object, the third object, and the fourth object form one rectangle.

In the anti-counterfeit printed matter of the present invention, each of the fifth objects may be arranged at the center of the object element so as to form a first visible image, the first object and the second object may be arranged on both sides of the fifth object so as to oppose each other, the third object and the fourth object may be arranged on both sides of the fifth object so as to oppose each other, and sixth objects may be arranged in four corners of the object element, respectively, so as to form a second visible image.

In the anti-counterfeit printed matter of the present invention, the first objects, the second objects, the third objects, the fourth objects, the fifth objects, and the sixth objects may be printed using ink containing a luminescent material, the anti-counterfeit printed matter may further comprise seventh objects each having an object area not more than an object area of the fifth object and/or the sixth object, the seventh objects being printed, using an arbitrary color ink, on at least some of the fifth objects and/or the sixth objects printed using the ink containing the luminescent material, and the seventh object may form a third visible image.

In the anti-counterfeit printed matter of the present invention, the first objects, the second objects, the third objects, the fourth objects, the fifth objects and/or the sixth objects may be printed using ink containing a luminescent material, and a desired pattern may be formed, by solid printing using a colorless transparent material, on at least some objects of the first objects, the second objects, the third objects, the fourth objects, and the fifth objects and/or the sixth objects.

According to the present invention, there is provided an anti-counterfeit printed matter characterized in that a plurality of first invisible image elements and a plurality of second invisible image elements are alternately arrayed, each first invisible image element including a plurality of first object elements periodically arranged at a predetermined pitch along a predetermined direction, and each first object element including a first object and a second object which are arranged on both sides of a boundary at a center so as to oppose each other, each second invisible image element including a plurality of second object elements periodically arranged at the same pitch as the predetermined pitch along the same direction as the predetermined direction, and each second object element including a third object and a fourth object which are arranged on both sides of a boundary at the center so as to oppose each other, the first object and the second object of each first object element have a negative/positive relationship, the same area, and the same color, the first object forms one of a positive image and a negative image of a first invisible image, and the second object forms one of the negative image and the positive image of the first invisible image, the third object and the fourth object of each second object element have the negative/positive relationship, the same area, and the same color, and the third object forms one of a positive image and a negative image of a second invisible image, and the fourth object forms one of the negative image and the positive image of the second invisible image.

An anti-counterfeit printed matter according to the present invention is characterized in that the pitch of the first object elements and the second object elements is not more than 1 mm.

An anti-counterfeit printed matter according to the present invention is characterized in that the first object and the second object which construct the first object element and the third object and the fourth object which construct the second object element have the same shape.

An anti-counterfeit printed matter according to the present invention is characterized in that the first object, the second object, the third object, and the fourth object have the same shape and the same color.

An anti-counterfeit printed matter according to the present invention is characterized in that the first object element formed from the first object and the second object and the second object element formed from the third object and the fourth object have different colors.

An anti-counterfeit printed matter according to the present invention is characterized in that in the first invisible image element and the second invisible image element, fifth objects are arranged at positions overlapping some objects of the first object, the second object, the third object, and the fourth object, each of the fifth object has an area not less than an area of the first object, the second object, the third object, and the fourth object, and the fifth object forms a visible image.

An anti-counterfeit printed matter according to the present invention is characterized in that a color density of the fifth object is not more than a color density of the first object, the second object, the third object, and the fourth object.

An anti-counterfeit printed matter according to the present invention is characterized in that the fifth object has the same shape as that of the first object, the second object, the third object, and the fourth object.

An anti-counterfeit printed matter according to the present invention is characterized in that arranging the fifth objects at the positions overlapping some objects of the first object, the second object, the third object, and the fourth object indicates, when periodically arraying the plurality of first invisible image elements and the plurality of the second invisible image elements, arranging, at the positions of the some objects which should be arranged originally, not the some objects but only the fifth objects, or arranging the some objects first and then arranging the fifth objects by overprinting.

An anti-counterfeit printed matter according to the present invention is characterized in that the first objects to the fourth objects or the first objects to the fifth objects are printed using ink containing a luminescent material, the anti-counterfeit printed matter further comprises sixth objects each having an object area not more than an object area of the first object to the fourth object or the first object to the fifth object, the sixth objects being printed, using an arbitrary color ink, on at least some objects selected from the first objects to the fourth objects or the first objects to the fifth objects printed using the ink containing the luminescent material, and the sixth object forms a third visible image.

An anti-counterfeit printed matter according to the present invention is characterized in that the first objects to the fourth objects or the first objects to the fifth objects are printed using ink containing a luminescent material, and a desired pattern is formed, by solid printing using a colorless transparent material, on at least some objects of the first objects to the fourth objects or the first objects to the fifth objects.

According to the present invention, there is provided an anti-counterfeit printed matter in which a plurality of units are periodically arranged at a predetermined pitch in a predetermined region on a base material, each unit including a first object and a second object which are arranged (tightly) along a first direction on both sides of a boundary at a center so as to oppose each other, in each of the plurality of units arranged, the first object and the second object have a negative/positive relationship, the same area, and the same color, the first object and the second object form an invisible image by combining one object turned on with the other object turned off, and a third object having an object area ratio almost 1/2 that of the first object and the second object and almost the same color as that of the first object and the second object is arranged on a boundary line between the first object and the second object to relax density imbalance, in the predetermined region of the plurality of units arranged adjacent, at a position where, out of the first objects and the second objects arranged to form the invisible image, off objects are arranged adjacent to each other.

An anti-counterfeit printed matter according to the present invention is characterized in that the predetermined pitch of the units is not more than 1 mm.

An anti-counterfeit printed matter according to the present invention is characterized in that fourth objects are arranged by overprinting, or only the fourth objects are arranged at positions of some objects where the first object and/or the second object should form the invisible image originally, each of the fourth objects has an area not less than an area of the first object and the second object, and the fourth object forms a visible image.

An anti-counterfeit printed matter according to the present invention is characterized in that a color density of the fourth object is not more than a color density of the first object and the second object.

An anti-counterfeit printed matter according to the present invention is characterized in that the first objects, the second objects, the third objects, and the fourth objects are printed using ink containing a luminescent material, and a desired pattern is formed, by solid printing using a colorless transparent material, on some objects of the first objects, the second objects, the third objects, and the fourth objects.

According to present invention, there is provided an anti-counterfeit printed matter in which a plurality of units are periodically arranged at a predetermined pitch in a predetermined region on a base material, each unit including a first object and a second object which are arranged along a first direction on both sides of a boundary at a center so as to oppose each other and a third object and a fourth object which are arranged along a second direction perpendicular to the first direction on both sides of a boundary at the center so as to oppose each other, in each of the plurality of units arranged, the first object and the second object have a negative/positive relationship, and the third object and the fourth object have the negative/positive relationship, the first object, the second object, the third object, and the fourth object have the same area and the same color, the first object and the second object form a first invisible image by combining one object turned on with the other object turned off, a fifth object having an object area ratio almost 1/2 that of the first object and the second object is arranged on a boundary line between the units to relax density imbalance, in the predetermined region of the plurality of units arranged adjacent, at a position where, out of the first objects and the second objects arranged to form the first invisible image, off objects are arranged adjacent to each other, the third object and the fourth object form a second invisible image by combining one object turned on with the other object turned off, and a sixth object having an object area ratio almost 1/2 that of the third object and the fourth object is arranged on a boundary line between the units to relax density imbalance, in the predetermined region of the plurality of units arranged adjacent, at a position where, out of the third objects and the fourth objects arranged to form the second invisible image, off objects are arranged adjacent to each other.

An anti-counterfeit printed matter according to the present invention is characterized in that the unit has a square shape and sides each having a length of not more than 1 mm.

An anti-counterfeit printed matter according to the present invention is characterized in that the unit further comprises a seventh object arranged in a region where the first object, the second object, the third object, and the fourth object do not exist, and the seventh object forms a visible image.

An anti-counterfeit printed matter according to the present invention is characterized in that each of the first object, the second object, the third object, and the fourth object has one of a circular shape and a polygonal shape.

An anti-counterfeit printed matter according to the present invention is characterized in that each of the first object, the second object, the third object, and the fourth object has one of a semicircular shape and an isosceles triangular shape, when each of the first object and the second object has the semicircular shape, the first object and the second object form one circle, and when each of the first object and the second object has the isosceles triangular shape, the first object and the second object form one rectangle, when each of the third object and the fourth object has the semicircular shape, the third object and the fourth object form one circle, and when each of the third object and the fourth object has the isosceles triangular shape, the third object and the fourth object form one rectangle, and a half of the first object overlaps a half of the third object, a half of the first object overlaps a half of the fourth object, a half of the second object overlaps a half of the third object, and a half of the second object overlaps a half of the fourth object so that the first object, the second object, the third object, and the fourth object form one of one circle and one rectangle.

An anti-counterfeit printed matter according to the present invention is characterized in that the seventh object is arranged at a center of the unit so as to form a first visible image, the first object and the second object are arranged on both sides of the seventh object so as to oppose each other, and the third object and the fourth object are arranged on both sides of the seventh object so as to oppose each other, and eighth objects are arranged in four corners of the unit, respectively, so as to form a second visible image.

An anti-counterfeit printed matter according to the present invention is characterized in that a ninth object having an object area ratio almost 1/2 that of the first object, the second object, the third object, and the fourth object is arranged at the center of the unit to relax density imbalance, in the predetermined region, at a position where the first object and the second object should originally be arranged adjacent to each other in the first direction so as to form the first invisible image and the third object and the fourth object should originally be arranged adjacent to each other in the second direction so as to form the second invisible image.

An anti-counterfeit printed matter according to the present invention is characterized in that a unit in which the first object, the second object, the third object, and the fourth object do not exist further comprises a ninth object arranged at the center of the unit, and the ninth object has almost the same object area as an object area of one of the first object, the second object, the third object, and the fourth object.

An anti-counterfeit printed matter according to the present invention is characterized in that the first objects, the second objects, the third objects, the fourth objects, the fifth objects, the sixth objects, the seventh objects, the eighth objects, and the ninth objects are printed using ink containing a luminescent material, the anti-counterfeit printed matter further comprises 10th objects each having an object area not more than an object area of the seventh object and/or the eighth object, the 10th objects being printed, using an arbitrary color ink, on some objects of the seventh objects and/or the eighth objects printed using the ink containing the luminescent material, and the 10th object forms a third visible image.

An anti-counterfeit printed matter according to the present invention is characterized in that the first objects, the second objects, the third objects, the fourth objects, the fifth objects, the sixth objects, the seventh objects, the eighth objects, and the ninth objects are printed using ink containing a luminescent material, and a desired pattern is formed, by solid printing using a colorless transparent material, on some objects of the first objects, the second objects, the third objects, the fourth objects, the fifth objects, the sixth objects, the seventh objects, the eighth objects, and the ninth objects.

According to the present invention, there is provided an anti-counterfeit printed matter characterized in that a plurality of first object elements are arranged at a predetermined pitch, each first object element being formed by making pairs of first objects arranged along a first direction and second objects arranged in the same direction as that of the first objects, a plurality of second object elements are arranged at a predetermined pitch, each second object element being formed by making pairs of third objects arranged along a second direction different from the first direction and fourth objects arranged in the same direction as that of the third objects, a plurality of third object elements are arranged at a predetermined pitch, each third object element being formed by making pairs of fifth objects arranged along a third direction different from the first direction and the second direction and sixth objects arranged in the same direction as that of the fifth objects, the first object and the second object which pair off have the same area, the third object and the fourth object which pair off have the same area, the fifth object and the sixth object which pair off have the same area, each first object element including the first object and the second object forms a first invisible image by an on/off relationship, the first object forms one of a positive image and a negative image of the first invisible image, and the second object forms one of the negative image and the positive image of the first invisible image, each second object element including the third object and the fourth object forms a second invisible image by the on/off relationship, the third object forms one of a positive image and a negative image of the second invisible image, and the fourth object forms one of the negative image and the positive image of the second invisible image, and each third object element including the fifth object and the sixth object forms a third invisible image by the on/off relationship, the fifth object forms one of a positive image and a negative image of the third invisible image, and the sixth object forms one of the negative image and the positive image of the third invisible image.

An anti-counterfeit printed matter according to the present invention is characterized in that as the different directions, when the first direction in which the first objects and the second objects are arrayed is 0°, the second direction in which the third objects and the fourth objects are arrayed is 60°, and the third direction in which the fifth objects and the sixth objects are arrayed is 120°.

An anti-counterfeit printed matter according to the present invention is characterized in that the first object, the second object, the third object, the fourth object, the fifth object, and the sixth object have the same shape and the same color.

An anti-counterfeit printed matter according to the present invention is characterized in that the first object element including the first object and the second object, the second object element including the third object and the fourth object, and the third object element including the fifth object and the sixth object have different colors.

An anti-counterfeit printed matter according to the present invention is characterized in that the first objects, the second objects, the third objects, the fourth objects, the fifth objects, and the sixth objects are printed using ink containing a luminescent material, and a desired pattern is formed, by solid printing using a colorless transparent material, on at least some objects of the first objects, the second objects, the third objects, the fourth objects, the fifth objects, and the sixth objects.

An anti-counterfeit printed matter according to the present invention is characterized by further comprising both or one of a seventh object and an eighth object arranged in a region where the first object, the second object, the third object, the fourth object, the fifth object, and the sixth object do not exist, wherein the seventh object forms a first visible image, and the eighth object forms a second visible image.

An anti-counterfeit printed matter according to the present invention is characterized in that the seventh object and/or the eighth object is arranged and formed at a center of one of a hexagonal array and a triangular array formed by any of the first objects, the second objects, the third objects, the fourth objects, the fifth objects, and the sixth objects.

An anti-counterfeit printed matter according to the present invention is characterized in that each of the first object, the second object, the third object, the fourth object, the fifth object, and the sixth object has one of a circular shape, a semicircular or smaller shape, and a polygonal shape.

An anti-counterfeit printed matter according to the present invention is characterized in that the seventh object and/or the eighth object has one of a circular shape and a polygonal shape.

An anti-counterfeit printed matter according to the present invention is characterized in that the seventh objects and the eighth objects are printed using ink containing a luminescent material, and a desired pattern is formed, by solid printing using a colorless transparent material, on at least some objects of the seventh objects and the eighth objects.

An anti-counterfeit printed matter according to the present invention is characterized in that the first objects, the second objects, the third objects, the fourth objects, the fifth objects, and the sixth objects are printed using ink containing a luminescent material, the anti-counterfeit printed matter further comprises ninth objects each having an object area not more than an object area of the seventh object and/or the eighth object, the ninth objects being printed, using an arbitrary color ink, on some objects of the seventh objects and/or the eighth objects, and the ninth object forms a third visible image.

According to the present invention, there is provided an anti-counterfeit printed matter which forms an invisible image that can be visualized clearly by a single discrimination tool, and also prevents a visible image from impeding visibility of a visualized invisible image, thereby solving the defects of print reproduction.

### BRIEF DESCRIPTION OF THE DRAWINGS

Fig. 1 is a perspective view showing a printed matter and a discrimination tool according to the first to third embodiments of the present invention;
Fig. 2 is an explanatory view showing an example of a pattern visually recognized upon visually observing the printed matter;
Fig. 3 shows explanatory views of examples of patterns visually recognized when the discrimination tool is overlaid on the printed matter at predetermined angles;
Fig. 4 shows explanatory views of examples of patterns visually recognized when the discrimination tool is overlaid on the printed matter at 90° with respect to the predetermined angles;
Fig. 5 is an explanatory view showing the structure of one object unit on a printed matter according to the first embodiment of the present invention;
Fig. 6 is an explanatory view showing a state in which the object units are arranged in a matrix on the printed matter according to the first embodiment;
Fig. 7 is an explanatory view showing a state in which visual observation is done while overlaying a lenticular lens on the printed matter according to the first embodiment;
Fig. 8 shows explanatory views of a state in which the lenticular lens is placed on the printed matter according to the first embodiment so as to locate the center lines on objects A, and a magnified state of the objects visually recognized at this time, respectively;
Fig. 9 shows explanatory views of a state in which the lenticular lens is placed on the printed matter according to the first embodiment so as to locate the center lines on objects A', and a magnified state of the objects visually recognized at this time, respectively;
Fig. 10 shows explanatory views of a state in which the lenticular lens is placed on the printed matter according to the first embodiment so as to locate the center lines on objects B, and a magnified state of the objects visually recognized at this time, respectively;
Fig. 11 shows explanatory views of a state in which the lenticular lens is placed on the printed matter according to the first embodiment so as to locate the center lines on objects B', and a magnified state of the objects visually recognized at this time, respectively;
Fig. 12 shows explanatory views of the structure of one object unit on a printed matter according to the second embodiment of the present invention;
Fig. 13 is an explanatory view showing a state in which the object units are arranged in a matrix on the printed matter according to the second embodiment;
Fig. 14 is an explanatory view showing a state in which visual observation is done while overlaying a lenticular lens on the printed matter according to the second embodiment;
Fig. 15 shows explanatory views of a state in which the lenticular lens is placed on the printed matter according to the second embodiment so as to locate the center lines on objects A, and a magnified state of the objects visually recognized at this time, respectively;
Fig. 16 shows explanatory views of a state in which the lenticular lens is placed on the printed matter according to the second embodiment so as to locate the center lines on objects A', and a magnified state of the objects visually recognized at this time, respectively;
Fig. 17 shows explanatory views of a state in which the lenticular lens is placed on the printed matter according to the second embodiment so as to locate the center lines on objects B, and a magnified state of the objects visually recognized at this time, respectively;
Fig. 18 shows explanatory views of a state in which the lenticular lens is placed on the printed matter according to the second embodiment so as to locate the center lines on objects B', and a magnified state of the objects visually recognized at this time, respectively;
Fig. 19 is an explanatory view showing a pattern formed on a printed matter according to the third embodiment of the present invention;
Fig. 20 shows explanatory views of the structure of one object unit on the printed matter according to the third embodiment;
Fig. 21 is an explanatory view showing a state in which the object units are arranged in a matrix on the printed matter according to the third embodiment;
Fig. 22 is an explanatory view showing a state in which visual observation is done while overlaying a lenticular lens on the printed matter according to the third embodiment;
Fig. 23 shows explanatory views of a state in which the lenticular lens is placed on the printed matter according to the third embodiment so as to locate the center lines on objects A, and a magnified state of the objects visually recognized at this time, respectively;
Fig. 24 shows explanatory views of a state in which the lenticular lens is placed on the printed matter according to the third embodiment so as to locate the center lines on objects A', and a magnified state of the objects visually recognized at this time, respectively;
Fig. 25 shows explanatory views of a state in which the lenticular lens is placed on the printed matter according to the third embodiment so as to locate the center lines on objects B, and a magnified state of the objects visually recognized at this time, respectively;
Fig. 26 shows explanatory views of a state in which the lenticular lens is placed on the printed matter according to the third embodiment so as to locate the center lines on objects B', and a magnified state of the objects visually recognized at this time, respectively;
Fig. 27 shows explanatory views of an example of a conventional printed matter;
Fig. 28 shows explanatory views of another example of a conventional printed matter;
Fig. 29 is an explanatory view showing examples of other shapes of the objects on the printed matter according to the first embodiment;
Fig. 30 shows explanatory views of examples of other shapes of the objects on the printed matter according to the second embodiment;
Fig. 31 shows explanatory views of examples of other shapes of the objects on the printed matter according to the third embodiment;
Fig. 32 is a view showing a state in which objects A, A', B, B', C, and D made of a luminescent material and objects F made of a color ink are printed;
Fig. 33 shows views of the positional relationship between an illumination light source 9, an eyepoint 10, and a printed matter 1 upon observing the printed matter 1 in the diffused light region and the specular reflected light region;
Fig. 34 shows views of a case in which the printed matter 1 is visually observed in the diffused light region and a case in which the printed matter 1 is visually observed in the specular reflected light region, respectively;
Fig. 35 is a view showing a state in which objects A, A', B, B', C, and D made of a luminescent material and a pattern G made of a colorless transparent material are printed;
Fig. 36 shows views of a case in which the printed matter 1 is visually observed in the diffused light region and a case in which the printed matter is visually observed in the specular reflected light region, respectively;
Fig. 37 shows views of examples of patterns visually recognized when the centers of lens elements of a lenticular lens serving as a discrimination tool are overlaid on the centers of objects A or B;
Fig. 38 shows views of examples of patterns visually recognized when the centers of lens elements of a lenticular lens serving as a discrimination tool are overlaid on the centers of objects A' or B';
Fig. 39 shows views of the arrangements of object elements;
Fig. 40 shows views of the arrangements of invisible image elements;
Fig. 41 shows views of states in which a plurality of invisible image elements are arrayed;
Fig. 42 is a view showing a state in which the objects are arranged in a matrix on the printed matter by arraying the plurality of invisible image elements;
Fig. 43 is an enlarged view of part of Fig. 42;
Fig. 44 shows explanatory views of the sizes of an object constructing an invisible image and an object constructing a visible image;
Fig. 45 is a view in which visual observation is done while overlaying a lenticular lens serving as a discrimination tool on a printed matter according to the sixth embodiment of the present invention;
Fig. 46 shows views of a state in which the lenticular lens is placed on the printed matter according to the sixth embodiment so as to locate the center lines on objects A, and a magnified state of the objects visually recognized at this time, respectively;
Fig. 47 shows views of a state in which the lenticular lens is placed on the printed matter according to the sixth embodiment so as to locate the center lines on objects A', and a magnified state of the objects visually recognized at this time, respectively;
Fig. 48 shows views of a state in which the lenticular lens is placed on the printed matter according to the sixth embodiment so as to locate the center lines on objects B, and a magnified state of the objects visually recognized at this time, respectively;
Fig. 49 shows views of a state in which the lenticular lens is placed on the printed matter according to the sixth embodiment so as to locate the center lines on objects B', and a magnified state of the objects visually recognized at this time, respectively;
Fig. 50 shows views of the shapes of objects constructing an invisible image and those constructing a visible image;
Fig. 51 is a schematic view showing a case in which a first object element, a second object element, and an object constructing an invisible image have different object shapes;
Fig. 52 is a view showing a state in which objects A, A', B, B', and C made of a luminescent material and objects D made of a color ink are printed;
Fig. 53 shows views of the positional relationship between an illumination light source 8, an eyepoint 9, and a printed matter 1 upon observing the printed matter 1 in the diffused light region and the specular reflected light region;
Fig. 54 shows views of a case in which a printed matter 1 according to the seventh embodiment of the present invention is visually observed in the diffused light region and a case in which the printed matter 1 is visually observed in the specular reflected light region, respectively;
Fig. 55 is a view showing a state in which objects A, A', B, B', and C made of a luminescent material and objects E made of a colorless transparent material are printed;
Fig. 56 shows views of a case in which a printed matter 1 according to the eighth embodiment of the present invention is visually observed in the diffused light region and a case in which the printed matter 1 is visually observed in the specular reflected light region, respectively;
Fig. 57 is an explanatory view showing a state in which visual observation from the front is done while overlaying a discrimination tool 2 on a printed pattern 3 of the printed matter 1;
Fig. 58 shows explanatory views of a state in which visual observation is done while overlaying a lenticular lens on the printed matter and an example of an instability factor of printed matter quality in the reproduction process or print process, respectively;
Fig. 59 shows explanatory views of the structure of one object unit on a printed matter according to the ninth embodiment of the present invention and a state in which the object units are arranged in a matrix on the printed matter, respectively;
Fig. 60 is a flowchart illustrating an algorithm that executes object deletion and addition to relax density imbalance upon naked eye observation;
Fig. 61 shows views of a state in which objects A'[h,v] of units [h,v] are deleted in accordance with the algorithm in Fig. 60;
Fig. 62 shows views of a state in which objects a and E each having an object area 1/2 that of the object A or A' are added in accordance with the algorithm in Fig. 60;
Fig. 63 is an explanatory view showing a state in which visual observation is done while overlaying a lenticular lens on the printed matter according to the ninth embodiment;
Fig. 64 shows explanatory views of a state in which the lenticular lens is placed on the printed matter according to the ninth embodiment so as to locate the center lines on the objects A, and a magnified state of the objects visually recognized at this time, respectively;
Fig. 65 shows explanatory views of the structure of one object unit on a printed matter according to the 10th embodiment of the present invention and a state in which the object units are arranged in a matrix on the printed matter, respectively;
Fig. 66 shows views of a state in which objects A'[h,v] of units [h,v] are deleted in accordance with the algorithm in Fig. 60;
Fig. 67 shows views of a state in which objects a and E each having an object area 1/2 that of the object A or A' are added in accordance with the algorithm in Fig. 60;
Fig. 68 is an explanatory view showing a state in which visual observation is done while overlaying a lenticular lens on the printed matter according to the 10th embodiment;
Fig. 69 shows explanatory views of a state in which the lenticular lens is placed on the printed matter according to the 10th embodiment so as to locate the center lines on the objects A, and a magnified state of the objects visually recognized at this time, respectively;
Fig. 70 is an explanatory view showing a pattern formed on a printed matter according to the 11th embodiment of the present invention;
Fig. 71 shows explanatory views of examples of patterns visually recognized when a discrimination tool is overlaid on the printed matter at predetermined angles;
Fig. 72 shows explanatory views of examples of patterns visually recognized when the discrimination tool is overlaid on the printed matter at 90° with respect to the predetermined angles;
Fig. 73 shows explanatory views of the structure of one object unit on the printed matter according to the 11th embodiment;
Fig. 74 shows explanatory views of states in which the object units are arranged in a matrix on the printed matter according to the 11th embodiment;
Fig. 75 is a flowchart illustrating an algorithm that executes object deletion and addition to relax density imbalance upon naked eye observation;
Fig. 76 shows views of a state in which objects A'[h,v] of units [h,v] are deleted in accordance with the algorithm in Fig. 60 and a state in which objects B'[h,v] of units [h,v] are deleted in accordance with the algorithm in Fig. 75;
Fig. 77 is a view showing a state in which deletion of the objects A'[h,v] of units [h,v] and deletion of the objects B'[h,v] of units [h,v] are applied to a printed pattern 3;
Fig. 78 shows views of a state in which objects a and E each having an object area 1/2 that of the object A or A' are added in accordance with the algorithm in Fig. 60 and a state in which objects b and E each having an object area 1/2 that of the object B or B' are added in accordance with the algorithm in Fig. 75;
Fig. 79 is a view showing a state in which addition of the objects a, b, and E is applied to the printed pattern 3;
Fig. 80 is a view showing the printed pattern 3 on which objects C to form a first visible image (design: pattern) and objects D to form a second visible image (design: pattern) are arranged;
Fig. 81 is an explanatory view showing a state in which visual observation is done while overlaying a lenticular lens on the printed matter according to the 11th embodiment;
Fig. 82 shows explanatory views of a state in which the lenticular lens is placed on the printed matter according to the 11th embodiment so as to locate the center lines on the objects A, and a magnified state of the objects visually recognized at this time, respectively;
Fig. 83 shows explanatory views of a state in which the lenticular lens is placed on the printed matter according to the 11th embodiment so as to locate the center lines on the objects B, and a magnified state of the objects visually recognized at this time, respectively;
Fig. 84 shows explanatory views of examples of other shapes of the objects on the printed matter according to the 11th embodiment;
Fig. 85 is a view showing a state in which objects A, A', a, B, B', b, C, D, and E made of a luminescent material and objects F made of a color ink are printed;
Fig. 86 shows views of the positional relationship between an illumination light source 9, an eyepoint 10, and the printed matter 1 upon observing the printed matter 1 in the diffused light region and the specular reflected light region;
Fig. 87 shows views of a case in which the printed matter 1 is visually observed in the diffused light region and a case in which the printed matter 1 is visually observed in the specular reflected light region, respectively;
Fig. 88 is a view showing a state in which objects A, A', a, B, B', b, C, D, and E made of a luminescent material and a pattern G made of a colorless transparent material are printed;
Fig. 89 shows views of a case in which the printed matter 1 is visually observed in the diffused light region and a case in which the printed matter 1 is visually observed in the specular reflected light region, respectively;
Fig. 90 is a view showing a state in which an object E' is added when the object A or A' and the object B or B' are completely lost in a unit [h,v];
Fig. 91 shows explanatory views of examples of other shapes of objects on a printed matter according to the 15th embodiment of the present invention;
Fig. 92 shows explanatory views of examples of patterns visually recognized when a discrimination tool is overlaid on a printed matter according to the 16th embodiment of the present invention at predetermined angles;
Fig. 93 shows explanatory views of examples of patterns visually recognized when the discrimination tool is overlaid on the printed matter at 120° with respect to the predetermined angles;
Fig. 94 shows explanatory views of examples of patterns visually recognized when the discrimination tool is overlaid on the printed matter at 60° with respect to the predetermined angles;
Fig. 95 is an explanatory view showing a basic object arrangement having a hexagonal array according to the 16th to 23rd embodiments of the present invention;
Fig. 96 is an explanatory view in which visual observation is done while overlaying a lenticular lens on printed matters according to the 16th to 23rd embodiments of the present invention;
Fig. 97 is an explanatory view showing five types of intervals S that can resolve invisible images according to the 16th to 23rd embodiments;
Fig. 98 is an explanatory view showing a graphic region to periodically arrange eight types of units (a) to (h) in a matrix;
Fig. 99 is a schematic view showing units arranged in a matrix to form a printed pattern 3 on a printed matter according to the 17th embodiment;
Fig. 100 shows explanatory views of the object structures of eight types of units (a) to (h) according to the 17th embodiment based on the object arrangement shown in the schematic view of Fig. 99;
Fig. 101 is a schematic view showing units arranged in a matrix to form a printed pattern 3 on a printed matter according to the 18th embodiment of the present invention;
Fig. 102 shows explanatory views of the object structures of eight types of units (a) to (h) according to the 18th embodiment based on the object arrangement shown in the schematic view of Fig. 101;
Fig. 103 is an explanatory view showing a pattern formed on the printed matter according to the 18th embodiment;
Fig. 104 is a schematic view showing units arranged in a matrix to form a printed pattern 3 on a printed matter according to the 19th embodiment of the present invention;
Fig. 105 shows explanatory views of the object structures of eight types of units (a) to (h) according to the 19th embodiment based on the object arrangement shown in the schematic view of Fig. 104;
Fig. 106 is a schematic view showing units arranged in a matrix to form a printed pattern 4 printed on a printed matter according to the 20th embodiment of the present invention;
Fig. 107 shows explanatory views of the object structures of eight types of units (a) to (h) according to the 20th embodiment based on the object arrangement shown in the schematic view of Fig. 106;
Fig. 108 is a schematic view showing units arranged in a matrix to form a printed pattern 5 printed on a printed matter according to the 21st embodiment of the present invention;
Fig. 109 shows explanatory views of the object structures of eight types of units (a) to (h) according to the 21st embodiment based on the object arrangement shown in the schematic view of Fig. 108;
Fig. 110 is a view showing a state in which objects A, B, C, A', B', C', D, and E made of a luminescent material and objects F made of a color ink are printed;
Fig. 111 shows views of the positional relationship between an illumination light source 9, an eyepoint 10, and a printed matter 1 upon observing the printed matter 1 in the diffused light region and the specular reflected light region;
Fig. 112 shows explanatory views of a case in which the printed matter 1 is visually observed in the diffused light region and a case in which the printed matter 1 is visually observed in the specular reflected light region, respectively; and
Fig. 113 shows explanatory views of a case in which the printed matter 1 is visually observed in the diffused light region and a case in which the printed matter 1 is visually observed in the specular reflected light region, respectively.

### BEST MODE FOR CARRYING OUT THE INVENTION

Anti-counterfeit printed matters according to the first to 23rd embodiments of the present invention will now be described with reference to the accompanying drawings. However, the present invention is not limited to the first to 23rd embodiments to be explained below, and various changes and modifications can be made within the technical scope of the invention as defined in the appended claims.

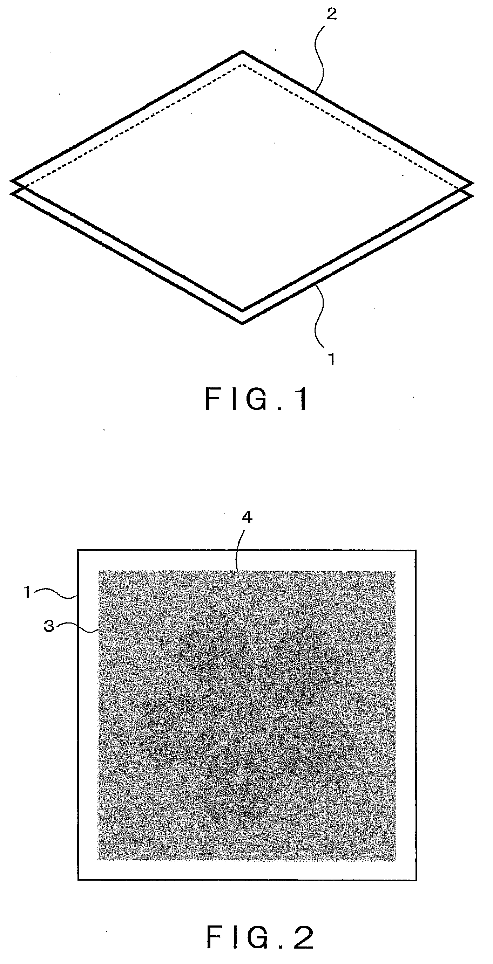

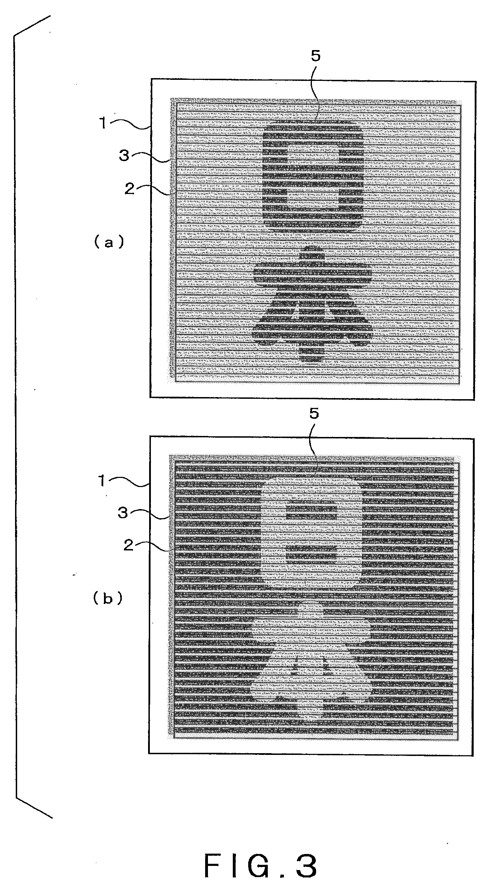

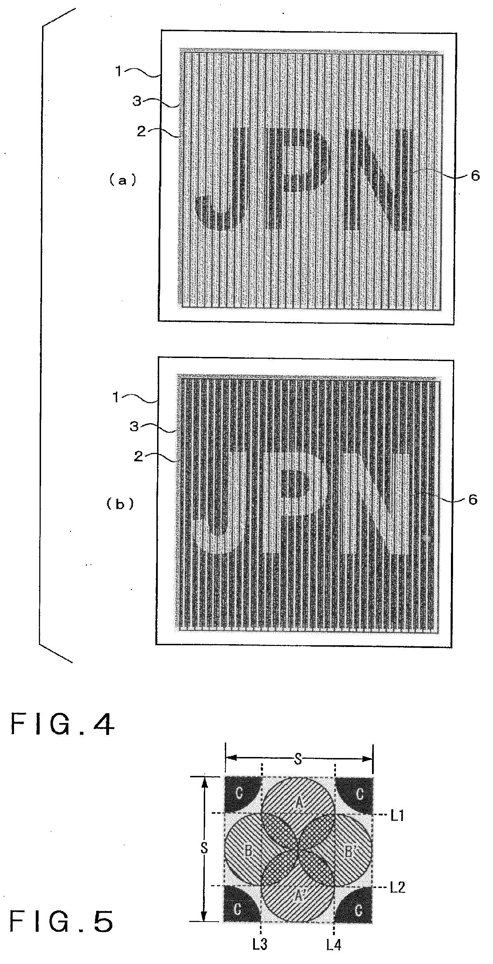

An anti-counterfeit printed matter according to the first to third embodiments of the present invention easily visualizes an invisible image by overlaying a discrimination tool 2 on a printed matter 1, as shown in Fig. 1, thereby determining authenticity. The discrimination tool 2 is, e.g., a lenticular lens or a parallel line filter created by forming, on a transparent filter, a plurality of straight lines in a parallel line pattern along one direction. Upon visually observing a printed pattern 3 on the printed matter 1 under a normal visual condition, a pattern 4 formed from an arbitrary graphic pattern, characters, and the like is visually recognized, as shown in Fig. 2. When the discrimination tool 2 is overlaid on the printed matter 1 at a predetermined angle (0°), a first invisible image 5 as shown in Fig. 3(a) or 3(b) is visualized as a visible image. When the discrimination tool 2 is overlaid on the printed matter 1 at 90° with respect to the predetermined angle, a second invisible image 6 as shown in Fig. 4(a) or 4(b) is visualized as a visible image. Each image is observed as a negative or positive image, as shown in Fig. 3(a) or 3(b) and Fig. 4(a) or 4(b), depending on the relative positional relationship between the discrimination tool 2 and the printed matter 1. This is incorporated within the range of the effects of the present invention.

### (1) First Embodiment

An anti-counterfeit printed matter according to the first embodiment of the present invention will be described.

Fig. 5 is a partially enlarged view of the structure of one object unit of a printed pattern on the printed matter according to the first embodiment. A vertical/horizontal size S is 1 mm or less, and for example, 340 µm. The objects are arranged periodically in a matrix on the surface of the printed matter. Each object includes at least three object elements. Objects A and A' pair off and have a negative/positive relationship. The negative/positive relationship indicates that for example, when one is black (on), the other is white (off), and when one is colored, the other is colorless. That is, the two objects are never black or white simultaneously. The objects A and A' have the same area. The objects A and A' are not visually recognized under a normal visual condition. A first invisible image (negative or positive) is formed from only the objects A, or a first invisible image (positive or negative) is formed from only the objects A'.

Similarly, objects B and B' pair off and have a negative/positive relationship and the same area. A second invisible image (negative or positive) is formed from only the objects B, or a second invisible image (positive or negative) is formed from only the objects B'.

Objects C construct a visible image (design: pattern). The objects C construct a pattern formed from an arbitrary graphic pattern, characters, and the like visually recognized by the naked eye in a normal visual recognition state.

The visible image is an image that is visually recognizable under normal visible light. The invisible image is an image that is not visually recognizable or is very hard to visually recognize under normal visible light.

As for the objects A and A' and the objects B and B' in a square having the vertical/horizontal size S, the circular objects A and A' each having a length 1/2 the length S are arranged in the vertical axis direction, whereas the circular objects B and B' each having a length 1/2 the length S are arranged in the horizontal axis direction. A 1/4 part of the object C is arranged in each of the four corners of the square while aligning the centers of the objects with the corners.

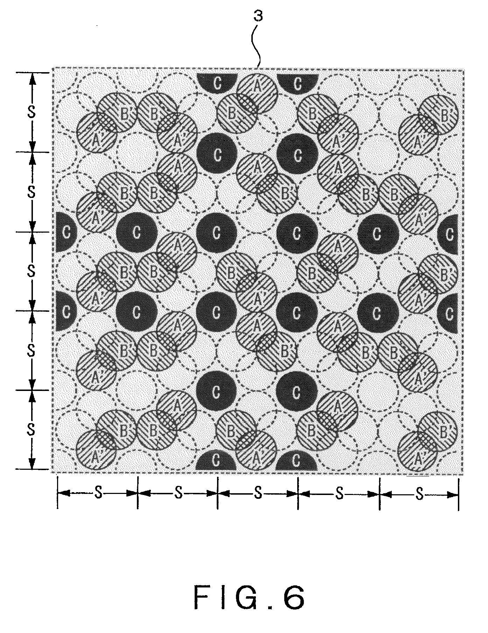

The objects having the above-described structure are continuously tightly arranged periodically in a matrix on the printed matter, as shown in Fig. 6. Fig. 6 schematically illustrates the plurality of objects arranged in a matrix to form the printed pattern 3 on the printed matter so as to clarify the compositions of a first invisible image, second invisible image, and first visible image. In the printed pattern 3, the total object area of the objects A equals that of the objects A'. Since the paired objects have the negative/positive relationship, the first invisible image is invisible in normal visual observation. Similarly, the second invisible image formed from the objects B and B' is invisible.

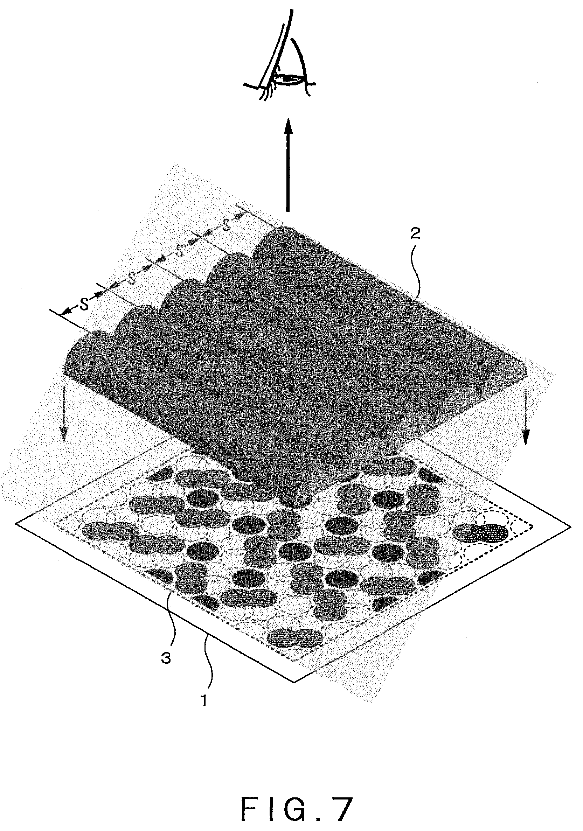

For example, as shown in Fig. 7, overlaying the discrimination tool 2 formed from a lenticular lens on the printed pattern 3 of the printed matter 1 in this state and visually observing the printed pattern from the front allow to visualize the invisible image formed on the printed pattern 3 as a visible image. Note that in the first embodiment, the length S is 340 µm, and the printed pattern 3 is printed on a coated paper sheet by offset printing. However, the length S, printed matter base material, printing method, printing material, and printing apparatus are not particularly limited.

In normal visual observation, the visible image is visually recognized, but the invisible image is not visually recognized. When the discrimination tool is overlaid at a predetermined position on the printed pattern, the visible image that is visually recognizable so far cannot be identified anymore. Conversely, the invisible image is visually recognized. The principle of the image switch effect of the printed matter according to the first embodiment will be described below.

When the visible image is visually recognized, but the invisible image is not visually recognized, the objects C construct the visible image, and the objects A or A' and the objects B or B' constructing the invisible images form the entire background image. Since the objects A and A' and the objects B and B' have the negative/positive relationship and the same area, they are never identified as images (patterns).

The lenticular lens serving as a discrimination tool is placed at a predetermined position on the printed matter so as to make the center line of each lens element coincide with the center of the object A, i.e., a line L1 in Fig. 5. In this case, the objects A are magnified so that the image (pattern) constructed by the objects A can be identified. At this time, the areas of the objects C constructing the visible image and the objects B and B' constructing the invisible image are smaller than that of the magnified objects A. The objects B and B' have the negative/positive relationship. For this reason, the objects B and B' are visually recognized not as an image but only as a uniform background. That is, the image switches in fact. When the discrimination tool is moved in the vertical axis direction to magnify the objects A', the first invisible image visually recognized based on the objects A is visually recognized in a reversed negative/positive state. When the discrimination tool is rotated by 90° to make the center line of each lens element of the lenticular lens coincide with a line L3 in Fig. 5 and magnify the objects B, or when the discrimination tool is moved from this state in the horizontal axis direction to magnify the objects B', the second invisible image is visually recognized in a reversed negative/positive state in accordance with the same principle.

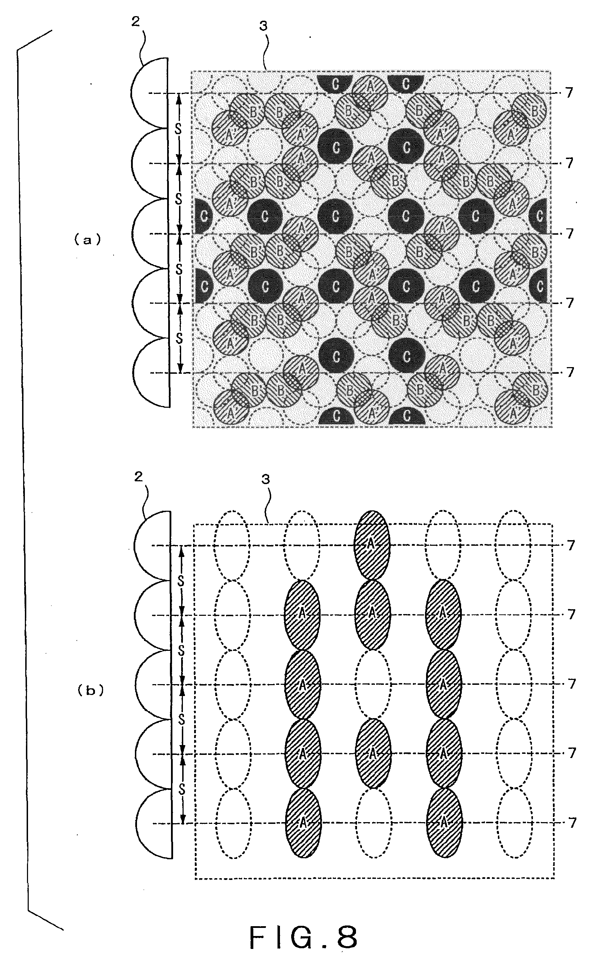

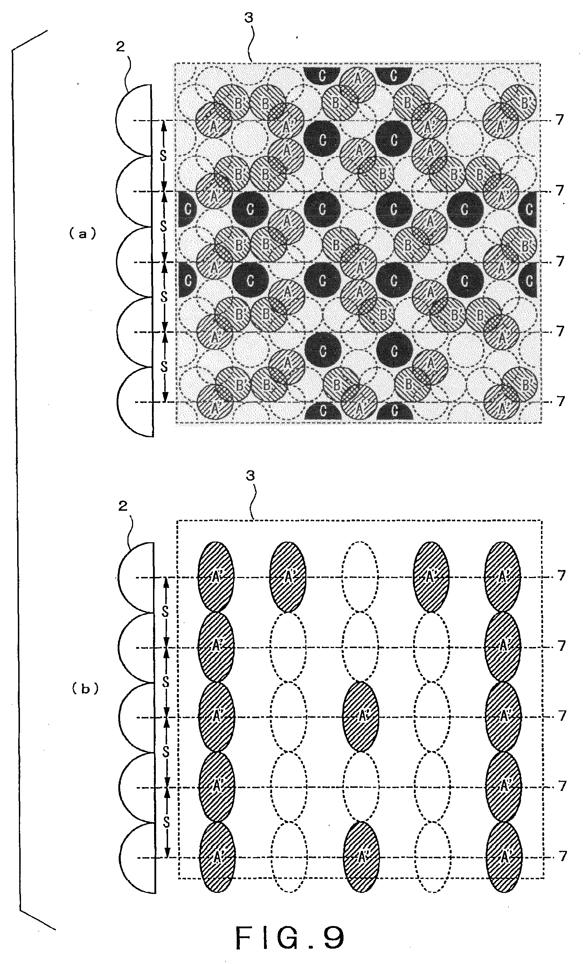

Fig. 8 shows a state in which the discrimination tool 2 formed from a lenticular lens is overlaid on the printed pattern 3 of the printed matter 1 at a predetermined angle and, more specifically, so as to make the center line of each lens element coincide with the line L1 in Fig. 5, and the printed pattern 3 is visually observed from the front. When each center line 7 of the lenticular lens exists at the position shown in Fig. 8(a) so as to coincide with the line L1 in Fig. 5, the objects A are located on the center lines 7. Since the objects A located on the center lines 7 look enlarged due to the characteristics of the lenticular lens, a visible image having the graphic pattern shown in Fig. 8(b) is visualized upon visual observation. When each center line 7 of the lenticular lens exists at the position shown in Fig. 9(a) so as to coincide with a line L2 in Fig. 5, the objects A' are located on the center lines 7. Since the objects A' located on the center lines 7 look enlarged due to the characteristics of the lenticular lens, a visible image having the graphic pattern shown in Fig. 9(b) is visualized upon visual observation. The objects A and A' have the negative/positive relationship. Hence, the first invisible image as shown in Fig. 3(a) or 3(b) described above is visualized as a negative or positive visible image.

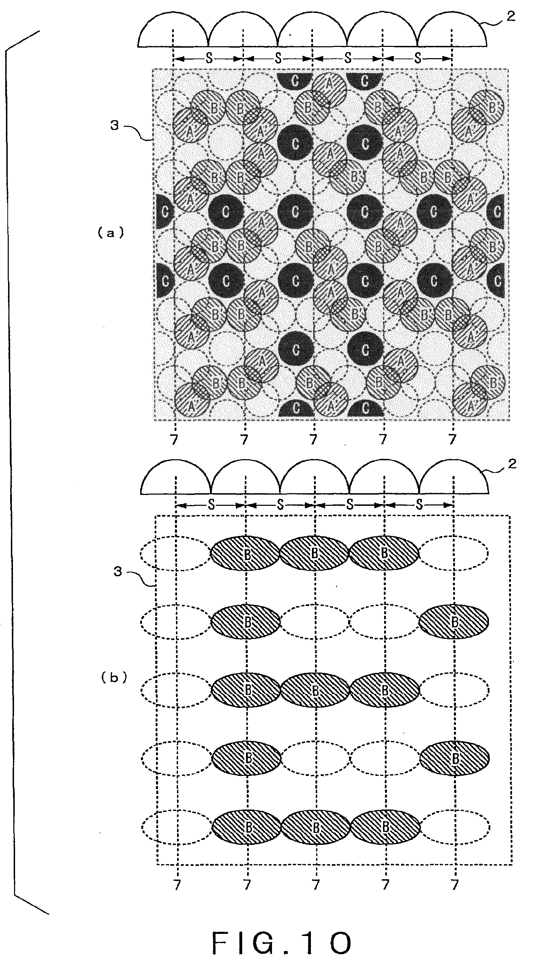

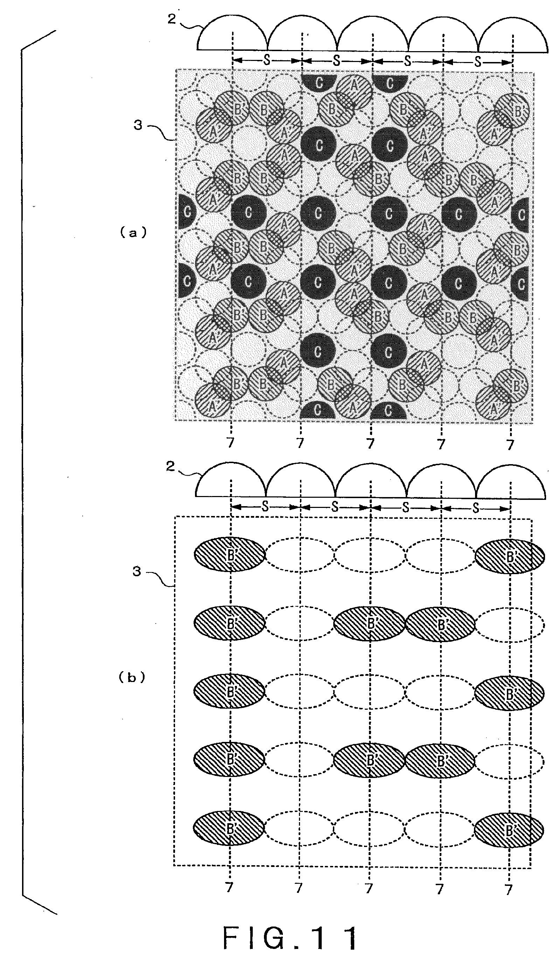

Fig. 10 shows a state in which the discrimination tool 2 is overlaid on the printed pattern 3 of the printed matter 1 at 90° so as to make the line L2 in Fig. 5 and the center line of each lens element of the lenticular lens coincide with the line L3 in Fig. 5, and the printed pattern 3 is visually observed from the front. In this case, each center line 7 of the lenticular lens exists at the position shown in Fig. 10(a), and the objects B are located on the center lines 7. Since the objects B located on the center lines 7 look enlarged due to the characteristics of the lenticular lens, a visible image having the graphic pattern shown in Fig. 10(b) is visualized upon visual observation. When each center line 7 of the lenticular lens exists at the position shown in Fig. 11(a) so as to coincide with a line L4 in Fig. 5, the objects B' are located on the center lines 7. Since the objects B' located on the center lines 7 look enlarged due to the characteristics of the lenticular lens, a visible image having the graphic pattern shown in Fig. 11(b) is visualized upon visual observation. That is, the second invisible image as shown in Fig. 4(a) or 4(b) described above is visualized as a negative or positive visible image.

Note that when discriminating the first and second invisible images using the discrimination tool, the visible image formed from the objects C is nearly invisible or hardly visible. Hence, the visible image does not impede the visibility of the first and second invisible images visualized as visible images.

The discrimination tool 2 need not always be the lenticular lens. The same effect can be obtained using, e.g., a parallel line filter. In the parallel line filter, portions corresponding to the parallel lines on the filter hide objects constructing the visible image so that only the objects constructing the invisible image can be identified. The filter may fail in completely hiding the visible image and allow to visually recognize it to some extent. However, this does not impair the effect of the present invention, and the parallel line filter suffices for simple discrimination. Note that this also applies to the second and third embodiments to be described later.

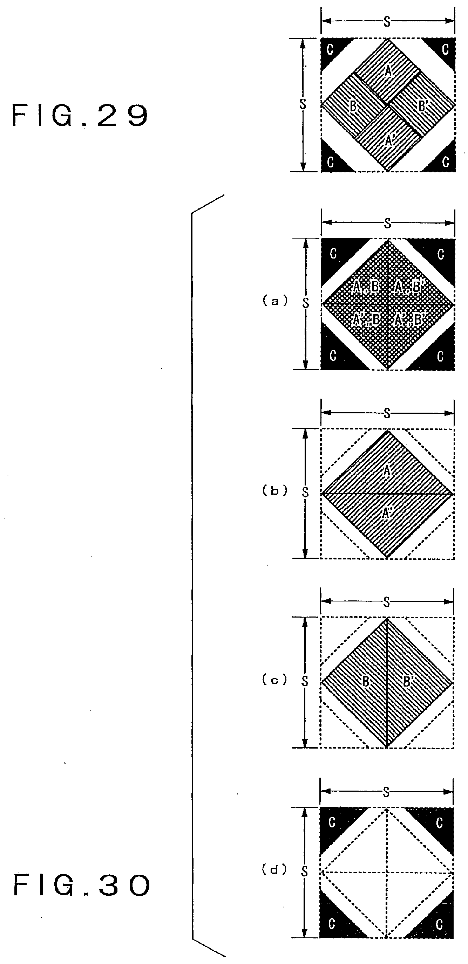

Each of the objects A, A', B, and B' of one object unit on the printed matter 1 according to the first embodiment has a circular shape. However, the shape is not limited to this. For example, each object may have a polygonal shape such as a rectangle as shown in Fig. 29. The object shape is not particularly limited as far as one object unit has at least three object elements, the objects A and A' pair off in the negative/positive relationship and have the same area so as to construct the first invisible image, the objects B and B' pair off in the negative/positive relationship and have the same area so as to construct the second invisible image, and the objects C are visually recognized as the first visible image (design: pattern).

The first embodiment is useful for printed matters such as securities because it is possible to form a clear visible image having a design and high degree of freedom using the objects C without impeding the visibility of a visualized invisible image. In addition, overlaying a single discrimination tool on the printed matter enables to easily and clearly visualize the invisible images formed from the objects A and A' and the objects B and B'. Furthermore, the cost can be reduced because only single color printing for printing the objects of the printed matter according to the present invention in the same color can provide a sufficient anti-counterfeit effect, and the reproduction and printing methods and the like are not particularly limited.

### (2) Second Embodiment

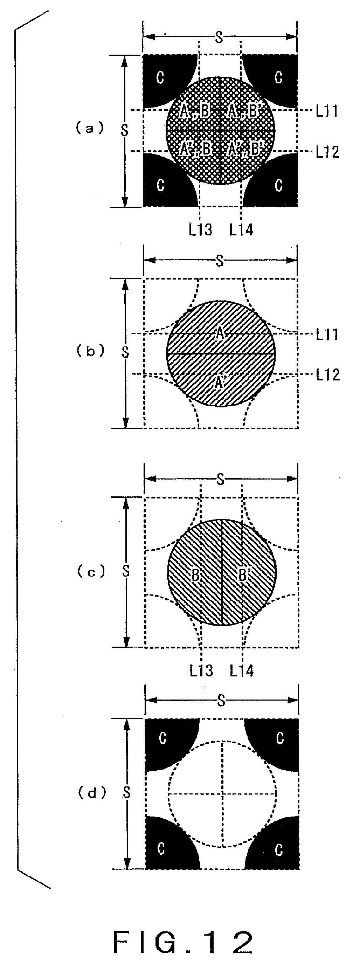

Fig. 12 shows enlarged views of the constituent elements of one object unit of a printed pattern on a printed matter according to the second embodiment of the present invention. As shown in Fig. 12(a), a printed pattern 3 includes at least three object elements. As shown in Fig. 12(b), objects A and A' pair off in a negative/positive relationship and have the same area so as to construct a first invisible image. The objects A and A' are arranged in a square to be vertically symmetrical with respect to the center.

As shown in Fig. 12(c), objects B and B' pair off in a negative/positive relationship and have the same area so as to construct a second invisible image. The objects B and B' are arranged in the square to be bilaterally symmetrical with respect to the center. A 1/4 part of an object C is arranged in each of the four corners of the square while aligning the centers of the objects with the corners. The objects C construct a first visible image (design: pattern).

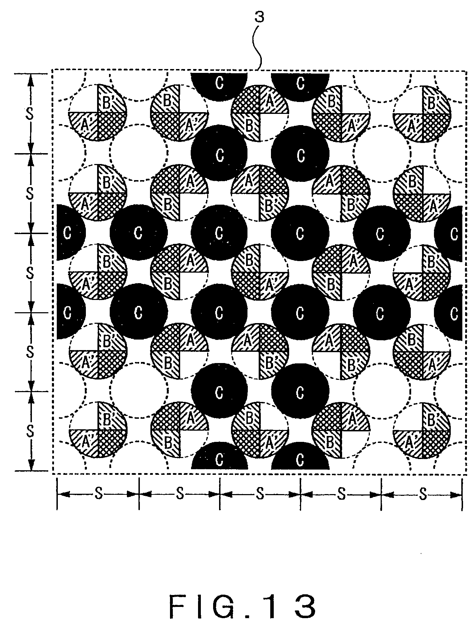

Fig. 13 schematically illustrates a state in which the objects A and A' form the first invisible image, the objects B and B' form the second invisible image, and the objects C form the first visible image.

Since the total object area of the objects A equals that of the objects A', the first invisible image is invisible in a normal visual observation state. In addition, since the total object area of the objects B equals that of the objects B', the second invisible image is invisible.

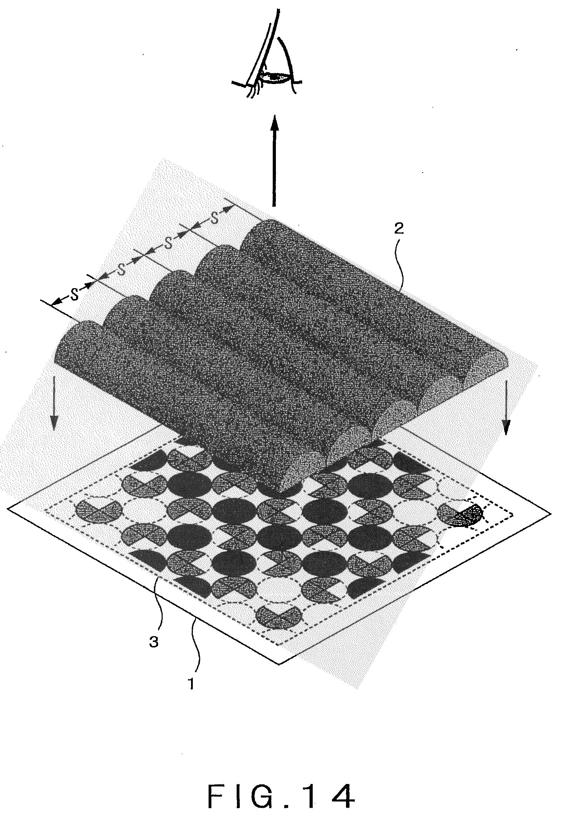

The first or second invisible image can be visualized as a visible image by visually observing the printed pattern from the front while overlaying a discrimination tool at a predetermined position of the printed pattern 3 on a printed matter 1, as shown in Fig. 14. Note that in the second embodiment as well, a length S is 340 µm, and the printed pattern 3 is printed on a coated paper sheet by offset printing, as in the above-described first embodiment. However, the length S, the printing method, the printing material, and the printing apparatus are not particularly limited.

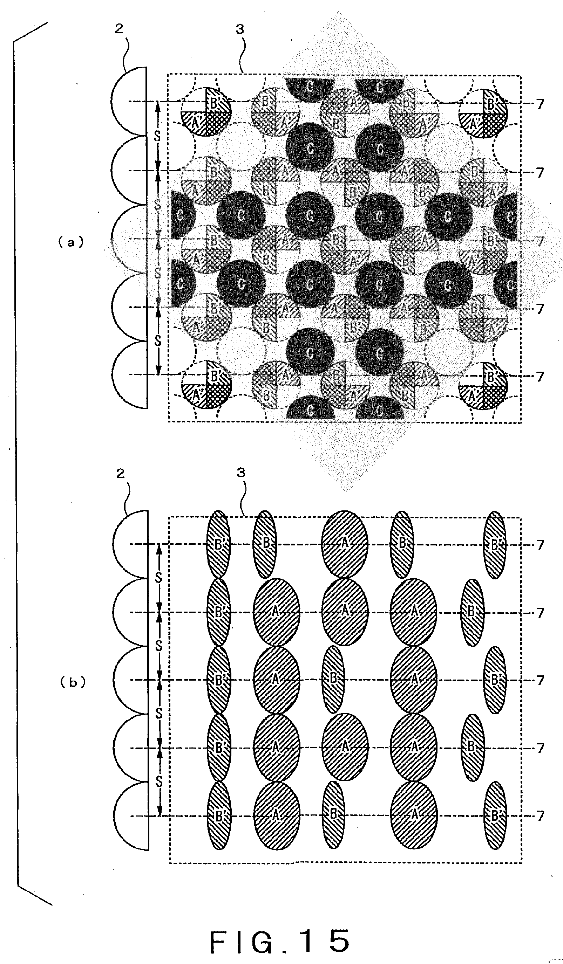

Fig. 15 shows a state in which the discrimination tool 2 formed from a lenticular lens is overlaid on the printed pattern 3 of the printed matter 1 so as to make a center line 7 of each lens element of the lenticular lens coincide with a line L11 in Fig. 12, and the printed pattern 3 is visually observed from the front. In this case, each center line 7 of the lenticular lens exists at the position shown in Fig. 15(a), and the objects A, B, and B' are located on the center lines 7. Out of the objects A, B, and B' located on the center lines 7, the objects A having a relatively large area look enlarged due to the characteristics of the lenticular lens. For this reason, a visible image having the graphic pattern shown in Fig. 15(b) formed from the objects A having a relatively large area and the objects B and B' having a relatively small area is visualized upon visual observation. The objects B and B' have the negative/positive relationship and the same area. As a result, the graphic pattern formed from the objects A is visually recognized as a visible image.

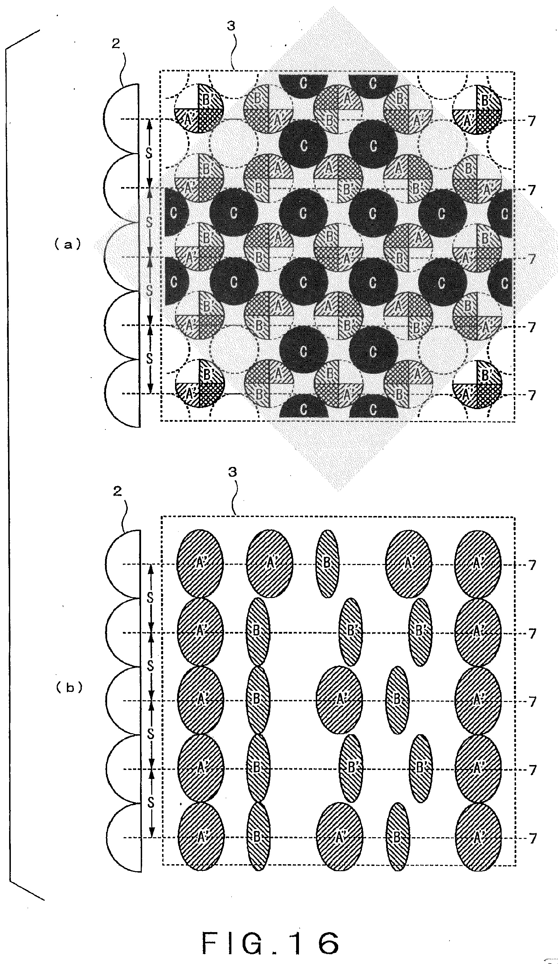

When each center line 7 of the lenticular lens exists at the position shown in Fig. 16(a) so as to coincide with a line L12 in Fig. 12, the objects A', B, and B' are located on the center lines 7. The objects A', B, and B' located on the center lines 7 look enlarged due to the characteristics of the lenticular lens. Since the objects A' having a large area especially look more enlarged, a visible image having the graphic pattern shown in Fig. 16(b) is visualized upon visual observation. Since the objects B and B' have the negative/positive relationship and the same area, the graphic pattern formed from the objects A' is visually recognized as a visible image. That is, the first invisible image as shown in Fig. 3(a) or 3(b) is visualized as a negative or positive visible image.

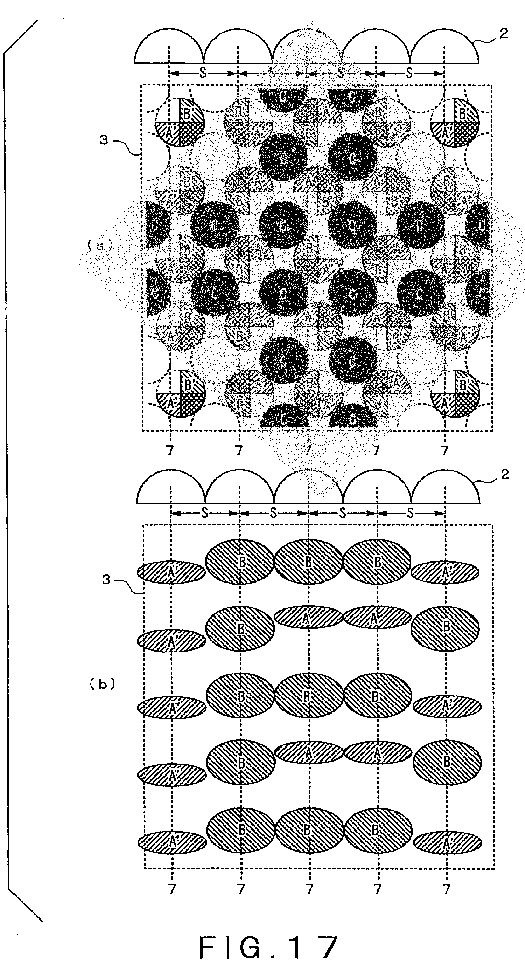

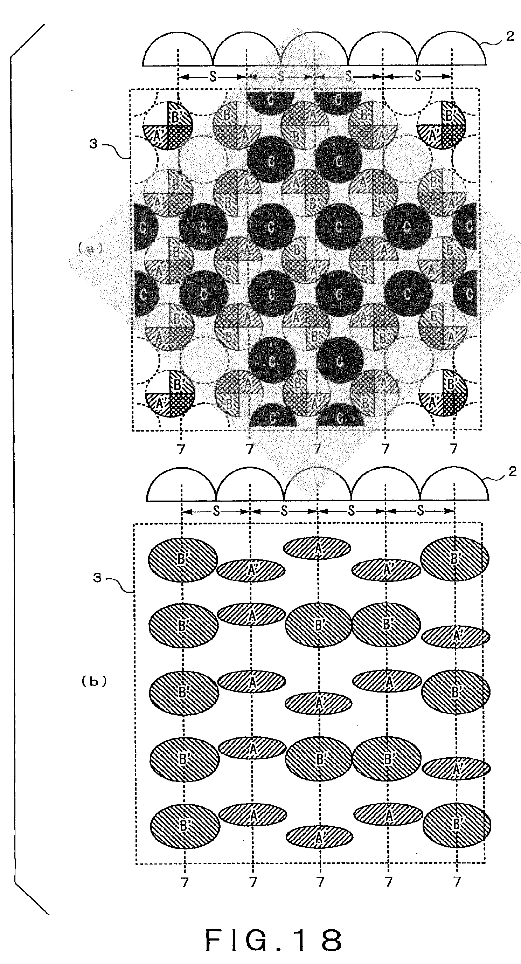

Fig. 17 shows a state in which the discrimination tool 2 formed from a lenticular lens is overlaid on the printed pattern 3 of the printed matter 1 so as to make the center line 7 of each lens element of the lenticular lens coincide with a line L13 in Fig. 12, and the printed pattern 3 is visually observed from the front. In this case, each center line 7 of the lenticular lens exists at the position shown in Fig. 17(a), and the objects B, A, and A' are located on the center lines 7. Since the objects B located on the center lines 7 look more enlarged due to the characteristics of the lenticular lens, and the objects A and A' have the negative/positive relationship, a visible image having the graphic pattern shown in Fig. 17(b) is visualized upon visual observation. When each center line 7 of the lenticular lens exists at the position shown in Fig. 18(a) so as to coincide with a line L14 in Fig. 12, the objects B', A, and A' are located on the center lines 7. Because of the characteristics of the lenticular lens and the negative/positive relationship of the objects A and A', the objects B' located on the center lines 7 look enlarged, and a visible image having the graphic pattern shown in Fig. 18(b) is visualized upon visual observation. That is, the second invisible image as shown in Fig. 4(a) or 4(b) described above is visualized as a negative or positive visible image.

As described in the first embodiment, the discrimination tool 2 need not always be the lenticular lens. The same effect can be obtained using, e.g., a parallel line filter. In observation using the discrimination tool 2, the objects C are very difficult to visually recognize. Hence, the visible image does not impede the visibility of the first and second invisible images visualized as visible images.

Each object of the printed pattern 3 on the printed matter 1 according to the second embodiment need not always have the circular object shape shown in Fig. 12 but may have a polygonal object shape such as a rectangle as shown in Fig. 30(a). That is, the object shape of the second embodiment is not particularly limited as far as the printed pattern 3 includes at least three object elements, and more specifically, the objects A and A' pair off, as shown in Fig. 30(b), to form the first invisible image, and are arranged in the square to be vertically symmetrical with respect to the center, the objects B and B' pair off, as shown in Fig. 30(c), to form the second invisible image, and are arranged in the square to be bilaterally symmetrical with respect to the center, and the objects C are visually recognized as the first visible image (design: pattern), as shown in Fig. 30(d). The shape of each of the objects A and A' is not limited as far as their object area ratios match each other. The shape of each of the objects B and B' is not limited as far as their object area ratios match each other.

The second embodiment is useful for printed matters such as securities because it is possible to form a clear visible image having a design and high degree of freedom using the objects C without impeding the visibility of a visualized invisible image. In addition, overlaying a single discrimination tool on the printed matter enables to easily and clearly visualize the invisible images formed from the objects A and A' and the objects B and B'. Furthermore, the cost can be reduced because only single color printing for printing the objects of the printed matter according to the present invention in the same color can provide a sufficient anti-counterfeit effect, and the reproduction and printing methods and the like are not particularly limited.

### (3) Third Embodiment

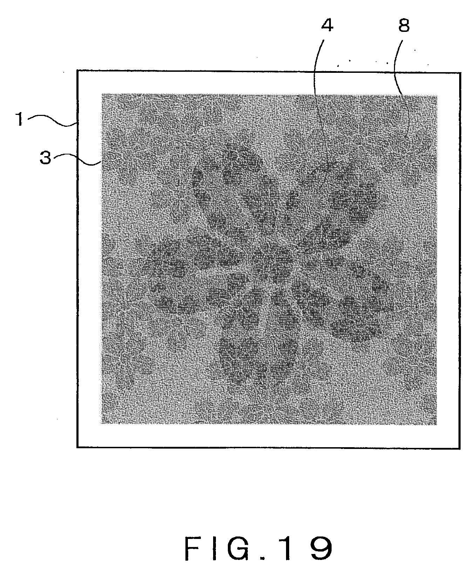

In the first and second embodiments, upon visually observing the printed pattern 3 on the printed matter 1 under a normal condition, the pattern 4 formed from a graphic pattern and characters, as shown in Fig. 2, is visually recognized. In the third embodiment, a pattern 8 formed from an arbitrary graphic pattern and characters can be formed in addition to a pattern 4, as shown in Fig. 19. For example, the patterns 4 and 8 shown in Fig. 19 are superimposed. The arrangement is not limited to this, and various design expressions are employable.

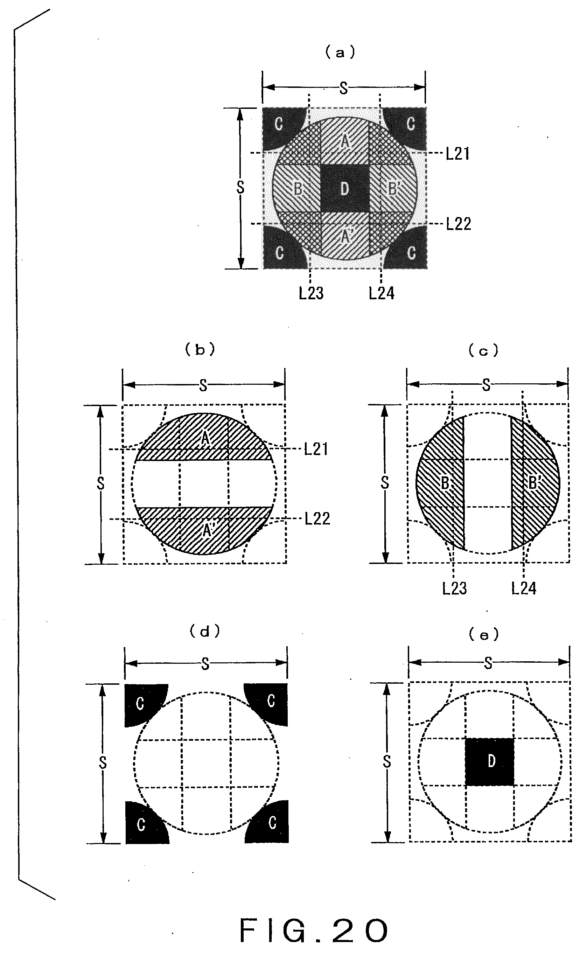

Fig. 20 shows enlarged views of the constituent elements of one object unit of the printed pattern formed on the printed matter according to the third embodiment. As shown in Fig. 20(a), a printed pattern 3 includes at least four object elements. As shown in Fig. 20(b), objects A and A' pair off to form a first invisible image. The objects A and A' are arranged in a square to be vertically symmetrical with respect to the center. As shown in Fig. 20(c), objects B and B' pair off to form a second invisible image. The objects B and B' are arranged in the square to be bilaterally symmetrical with respect to the center. As shown in Fig. 20(d), objects C form a first visible image (design: pattern) so as to serve as objects that construct the pattern 4 formed from an arbitrary graphic pattern and characters as shown in Fig. 19. A 1/4 part of the object C is arranged in each of the four corners of the square while aligning the centers of the objects with the corners. As shown in Fig. 20(e), objects D form a second visible image (design: pattern) so as to serve as objects that construct the pattern 8 formed from an arbitrary graphic pattern and characters as shown in Fig. 19. Each object D is arranged while aligning its center with the center of the square.

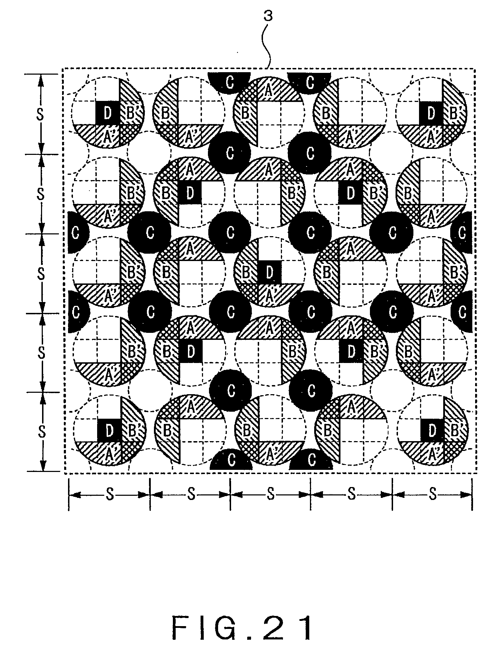

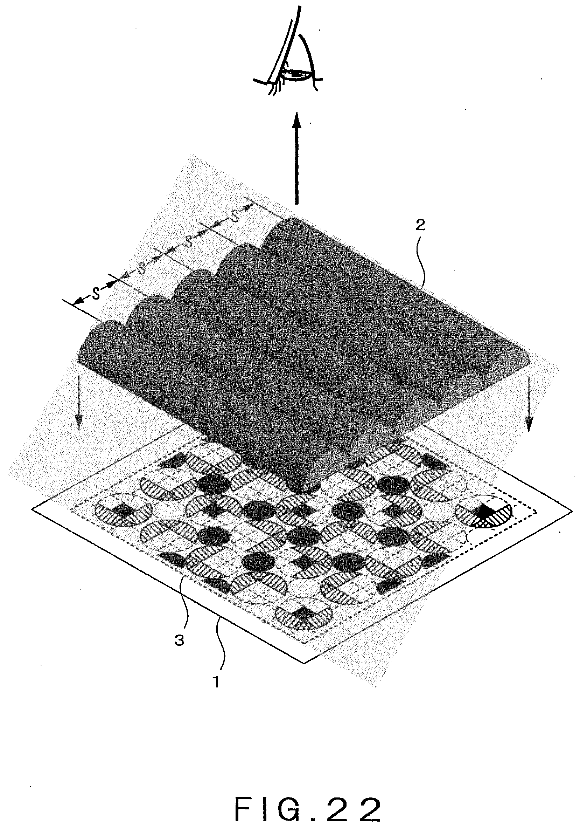

Fig. 21 schematically shows the positional relationship of the objects of the printed pattern 3. Since the objects A and A' having a negative/positive relationship have the same total object area, the first invisible image is invisible. Similarly, since the objects B and B' having a negative/positive relationship have the same total object area, the second invisible image is invisible. For example, as shown in Fig. 22, overlaying a discrimination tool 2 on the printed pattern 3 of a printed matter 1 and visually observing the printed pattern from the front allow to visualize the invisible image formed on the printed pattern 3 as a visible image. Note that in the third embodiment, a length S is 340 µm, and the printed pattern 3 is printed on a coated paper sheet by offset printing, as in the above-described first and second embodiments. However, the length S, printing method, printing material, and printing apparatus are not particularly limited.

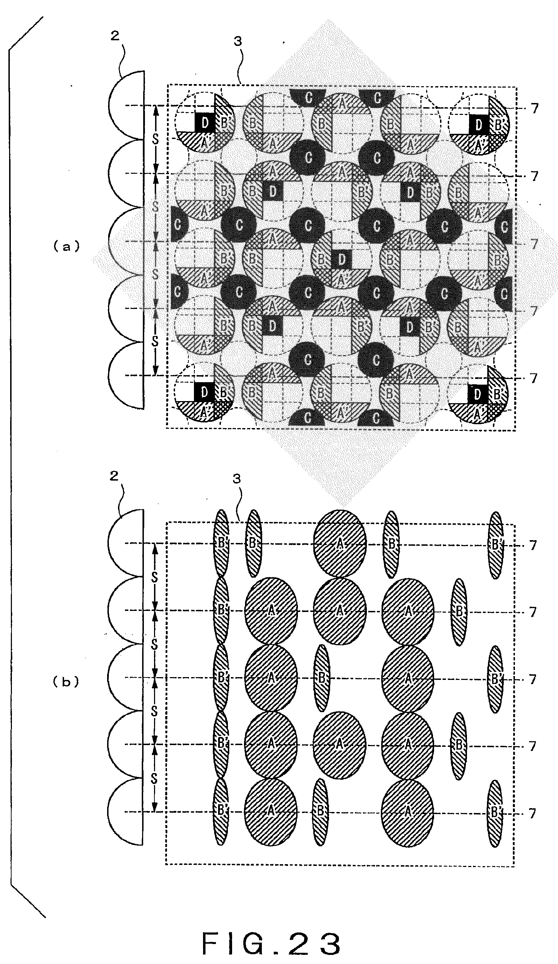

Fig. 23 shows a state in which the discrimination tool 2 formed from a lenticular lens is overlaid on the printed pattern 3 of the printed matter 1 so as to make a center line 7 of each lens element of the lenticular lens coincide with a line L21 in Fig. 20, and the printed pattern 3 is visually observed from the front. In this case, each center line 7 of the lenticular lens exists at the position shown in Fig. 23(a), and the objects A, B, and B' are located on the center lines 7. Since the objects A, B, and B' located on the center lines 7 look enlarged due to the characteristics of the lenticular lens, a visible image having the graphic pattern shown in Fig. 23(b) is visualized upon visual observation. Since the objects B and B' have the negative/positive relationship and the same area, the image formed from these objects is not visually recognized. For this reason, only the first invisible image formed from the objects A is visually recognized.

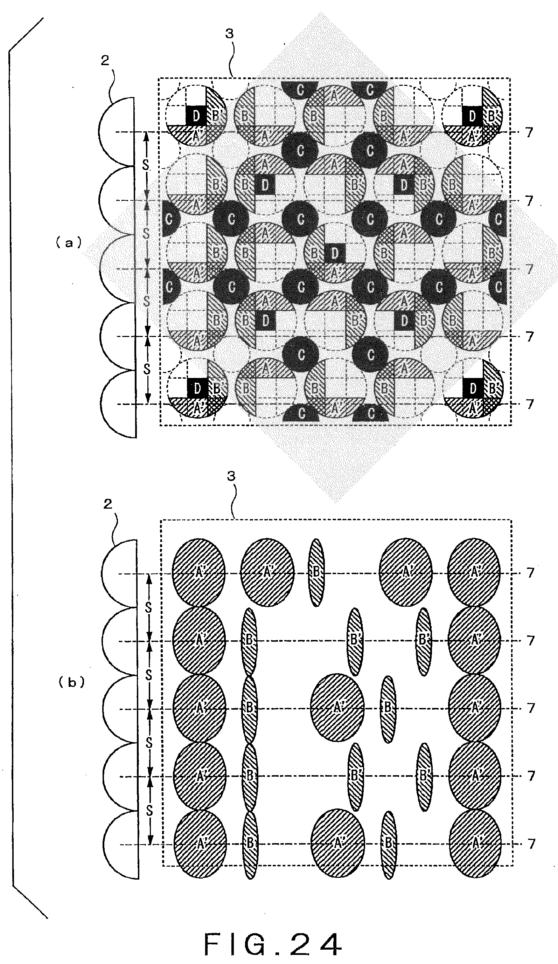

When each center line 7 of the lenticular lens exists at the position shown in Fig. 24(a) so as to coincide with a line L22 in Fig. 20, the objects A', B, and B' are located on the center lines 7. Since the objects A', B, and B' located on the center lines 7 look enlarged due to the characteristics of the lenticular lens, a visible image having the graphic pattern shown in Fig. 24(b) is visualized upon visual observation. In this case as well, the image formed from the objects B and B' is not visually recognized, and the first invisible image formed from the objects A' is visually recognized in a negative/positive state reverse to that of the image of the objects A. That is, the first invisible image shown as in Fig. 3(a) or 3(b) is visualized as a negative or positive visible image.

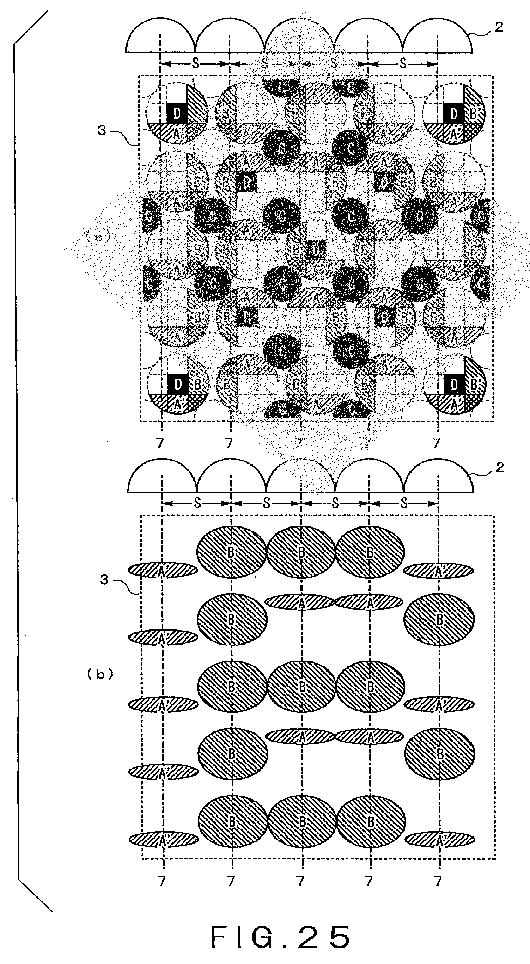

Fig. 25 shows a state in which the discrimination tool 2 formed from a lenticular lens is overlaid on the printed pattern 3 of the printed matter 1 so as to make the center line 7 of each lens element of the lenticular lens coincide with a line L23 in Fig. 20, and the pattern 3 of the printed matter 1 is visually observed from the front. In this case, each center line 7 of the lenticular lens exists at the position shown in Fig. 25(a), and the objects B, A, and A' are located on the center lines 7. Since the objects B, A, and A' located on the center lines 7 look enlarged due to the characteristics of the lenticular lens, a visible image having the graphic pattern shown in Fig. 25(b) is visualized upon visual observation. However, the objects A and A' have the negative/positive relationship and the same area. For this reason, the second invisible image formed from the objects B is visually recognized.

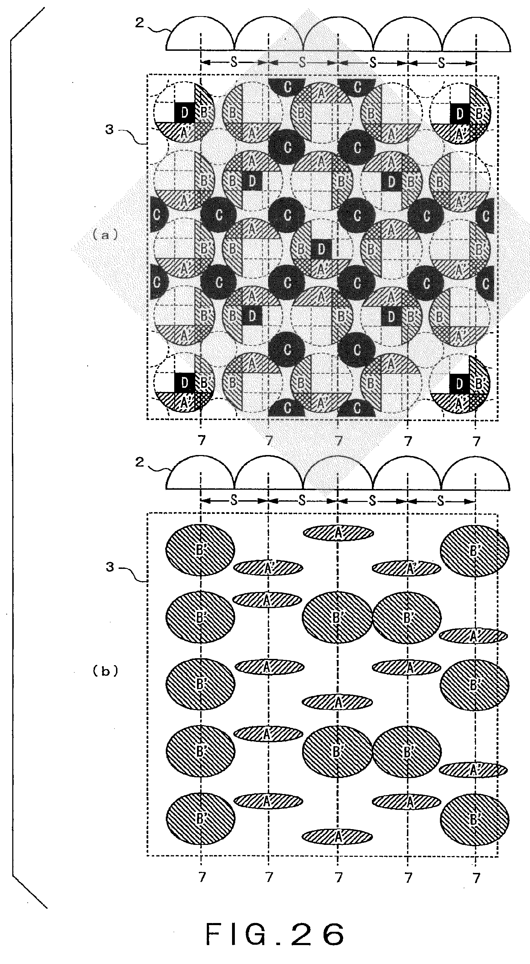

When each center line 7 of the lenticular lens exists at the position shown in Fig. 26(a) so as to coincide with a line L24 in Fig. 20, the objects B', A, and A' are located on the center lines 7. Since the objects B', A, and A' located on the center lines 7 look enlarged because of the characteristics of the lenticular lens, a visible image having the graphic pattern shown in Fig. 26(b) is visualized upon visual observation. In this case as well, the second invisible image formed from the objects B' is visually recognized due to the same reason.

That is, the second invisible image as shown in Fig. 4(a) or 4(b) described above is visualized as a negative or positive visible image.

In the third embodiment, a lenticular lens is used as the discrimination tool. However, as in the above-described first and second embodiments, the same effect can be obtained using, e.g., a parallel line filter. In observation using the lenticular lens, the objects C are rarely visually recognized. Hence, the visible image does not impede the visibility of the first and second invisible images visualized as visible images.

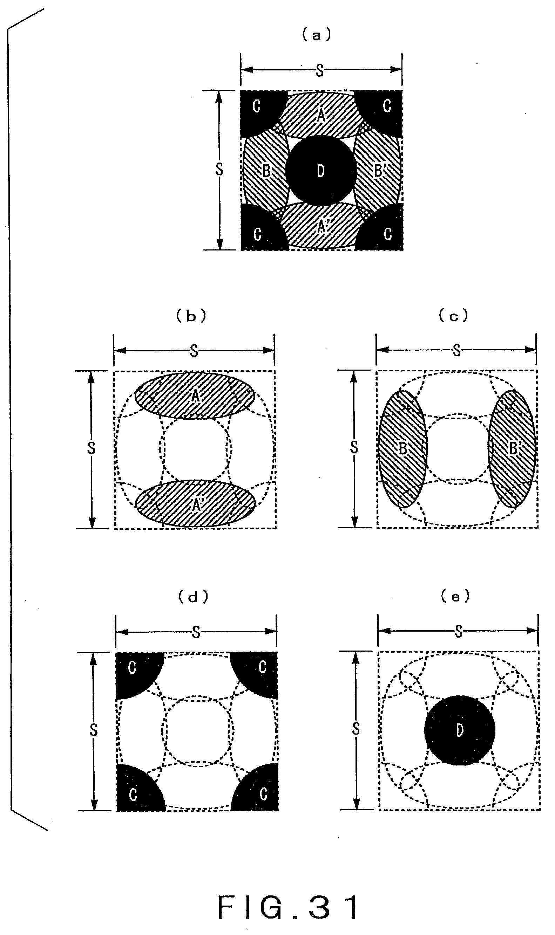

Each object of the printed pattern 3 on the printed matter 1 according to the third embodiment need not always have the circular shape shown in Fig. 20 but may have an elliptical shape as shown in Fig. 31(a). The printed pattern 3 includes at least four object elements. The objects A and A' pair off, as shown in Fig. 31(b), to construct the first invisible image, and are arranged in the square to be vertically symmetrical with respect to the center. The objects B and B' pair off, as shown in Fig. 31(c), to construct the second invisible image, and are arranged in the square to be bilaterally symmetrical with respect to the center. Objects C are visually recognized as the first visible image (design: pattern), as shown in Fig. 31(d). Objects D are visually recognized as the second visible image (design: pattern), as shown in Fig. 31(e). The objects A and A' have the same area, and the objects B and B' also have the same area. The shape of each object is not limited as far as they have the above-described structure.

The third embodiment is useful for printed matters such as securities because it is possible to form clear visible images each having a design and high degree of freedom using the objects C and D without impeding the visibility of a visualized invisible image. In addition, overlaying a single discrimination tool on the printed matter enables to easily and clearly visualize the invisible images formed from the objects A and A' and the objects B and B'. Furthermore, the cost can be reduced because only single color printing for printing the objects of the printed matter according to the present invention in the same color can provide a sufficient anti-counterfeit effect, and the reproduction and printing methods and the like are not particularly limited.

### (4) Fourth Embodiment

In each of the first to third embodiments, an anti-counterfeit printed matter having at least one type of invisible image visually recognizable using a discrimination tool such as a lenticular lens has been described. As an anti-counterfeit printed matter according to the fourth embodiment, an example will be described in which an invisible image visually recognizable without using any discrimination tool is formed in addition to at least one type of invisible image visually recognizable using a discrimination tool such as a lenticular lens.

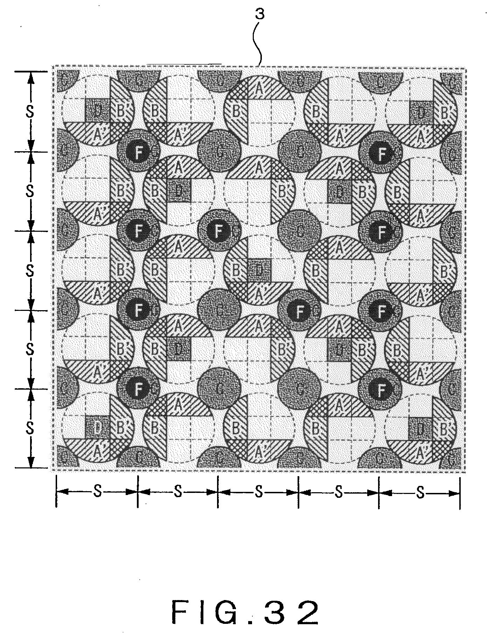

Fig. 32 shows an object arrangement according to the fourth embodiment. The basic object arrangement is the same as in Fig. 21. Objects A, A', B, B', C, and D shown in Fig. 32 construct a printed pattern 3 by ink containing a luminescent material such as silver ink with metallic luster. Objects F are printed on the objects C of the printed pattern 3 using an arbitrary color ink such as light purple ink. The objects F construct an image that appears depending on the printed matter observation condition, apart from the first visible image constructed by the objects C and the second visible image constructed by the objects D. In the fourth embodiment, the objects F are arranged to construct a character "N". The object area of the object C is equal to or larger than that of the object F. Note that the luminescent material and the color ink of the fourth embodiment are not particularly limited.

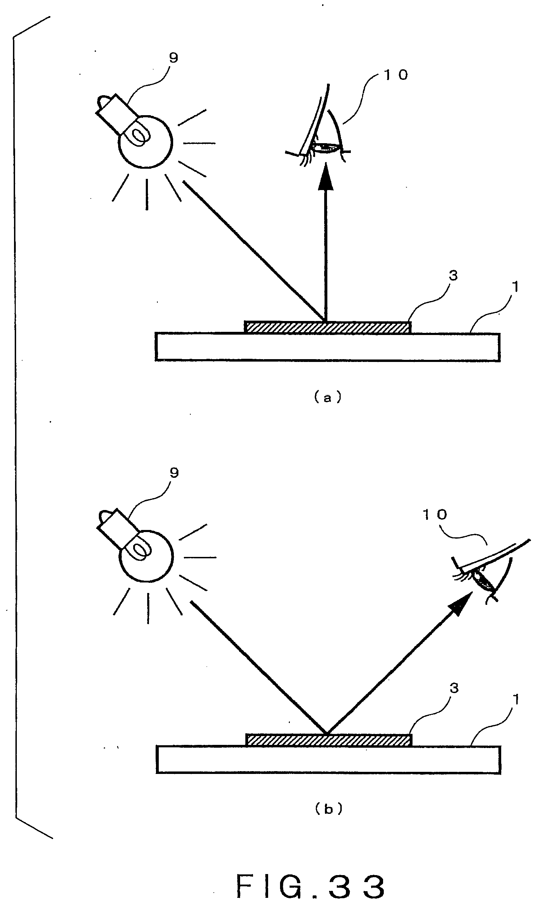

Fig. 33 shows the positional relationship between an illumination light source 9, an eyepoint 10, and a printed matter 1 upon observing the printed matter 1 having the printed pattern 3 according to the fourth embodiment in the diffused light region and the specular reflected light region. Observation in the diffused light region is done when the illumination light source 9, eyepoint 10, and printed matter 1 have the positional relationship shown in Fig. 33(a). Observation in the specular reflected light region is done when the illumination light source 9, eyepoint 10, and printed matter 1 have the positional relationship shown in Fig. 33(b).

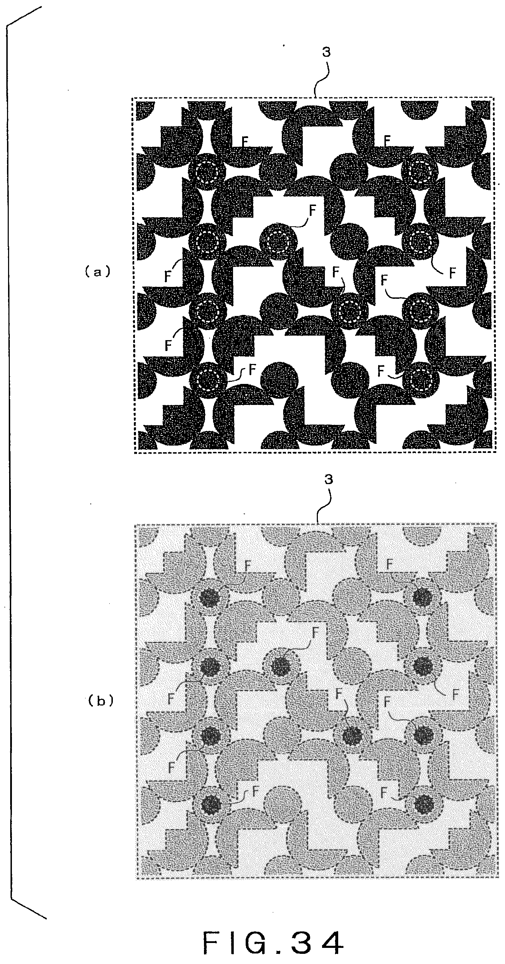

When the printed matter 1 is visually observed in the diffused light region, as shown in Fig. 33(a), the light purple objects F formed on the printed pattern 3 are hard to visually recognize, and two types of visible images constructed by the objects C and D made of silver ink can mainly be recognized visually, as shown in Fig. 34(a). On the other hand, when the printed matter 1 is visually observed in the specular reflected light region, as shown in Fig. 33(b), the brightness of the objects A, A', B, B', C, and D made of silver ink rises due to the luminescent action caused by the specular reflected light, and only the objects F made of light purple ink without the luminescent action are enhanced and visually recognized, as shown in Fig. 34(b). Hence, the character "N" constructed by arranging the objects F is observed.

### (5) Fifth Embodiment

In the fifth embodiment, an example will be described in which an invisible image visually recognizable without using any discrimination tool is formed in addition to at least one type of invisible image visually recognizable using a discrimination tool such as a lenticular lens, as in the fourth embodiment.

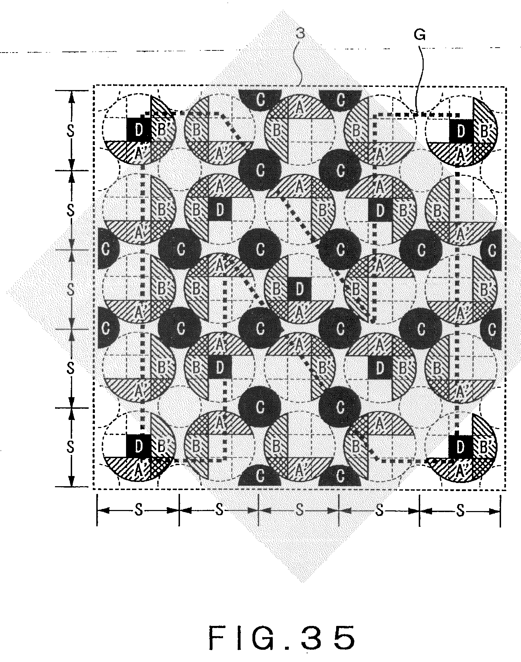

Fig. 35 shows an object arrangement according to the fifth embodiment. The basic object arrangement is the same as in Fig. 2-1. Objects A, A', B, B', C, and D shown in Fig. 35 construct a printed pattern 3 by ink containing a luminescent material such as silver ink with metallic luster. A pattern G made of a colorless transparent material such as a transparent varnish is printed on the printed pattern 3. The pattern G has no special positional relationship to the arrangement of the objects A, A', B, B', C, and D. In the fifth embodiment, the pattern G is arranged to construct a character "N". Note that the luminescent material and the colorless transparent material of the fifth embodiment are not particularly limited.

Fig. 33 shows the positional relationship between an illumination light source 9, an eyepoint 10, and a printed matter 1 upon observing the printed matter 1 having the printed pattern 3 according to the fifth embodiment in the diffused light region and the specular reflected light region. Observation in the diffused light region is done when the illumination light source 9, eyepoint 10, and printed matter 1 have the positional relationship shown in Fig. 33(a). Observation in the specular reflected light region is done when the illumination light source 9, eyepoint 10, and printed matter 1 have the positional relationship shown in Fig. 33(b).

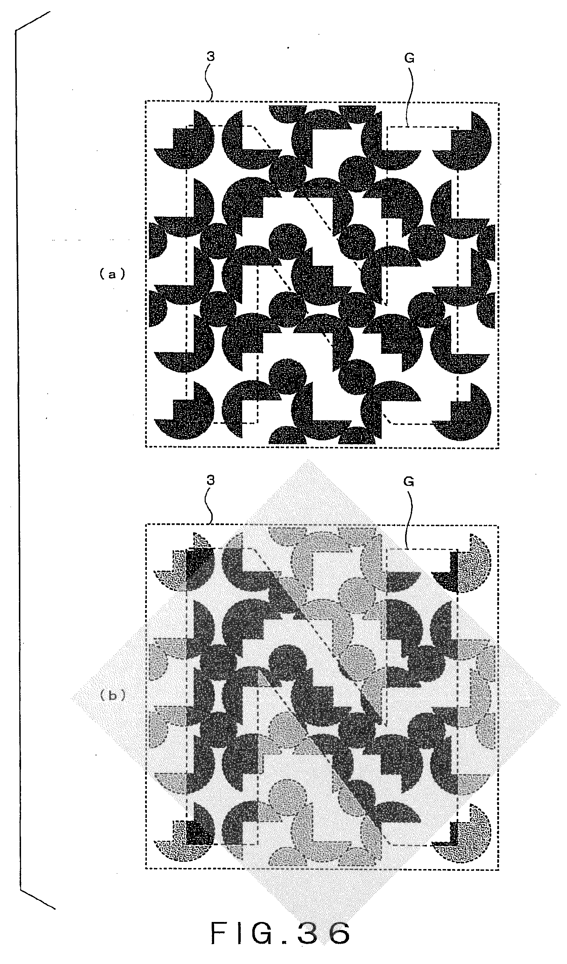

When the printed matter 1 is visually observed in the diffused light region, as shown in Fig. 33(a), the pattern G formed on the printed pattern 3 using the colorless transparent material is completely transparent, and two types of visible images constructed by the objects C and D made of silver ink can mainly be recognized visually, as shown in Fig. 36(a). On the other hand, when the printed matter 1 is visually observed in the specular reflected light region, as shown in Fig. 33(b), the brightness of the objects A, A', B, B', C, and D made of silver ink rises due to the luminescent action caused by the specular reflected light, but the luminescent action of the objects A, A', B, B', C, and D is suppressed in the portion of the pattern G made of the colorless transparent material, as shown in Fig. 36(b). Only the pattern G is thus enhanced and visually recognized due to the difference in luminescence. Hence, the character "N" constructed by arranging the pattern G is observed.

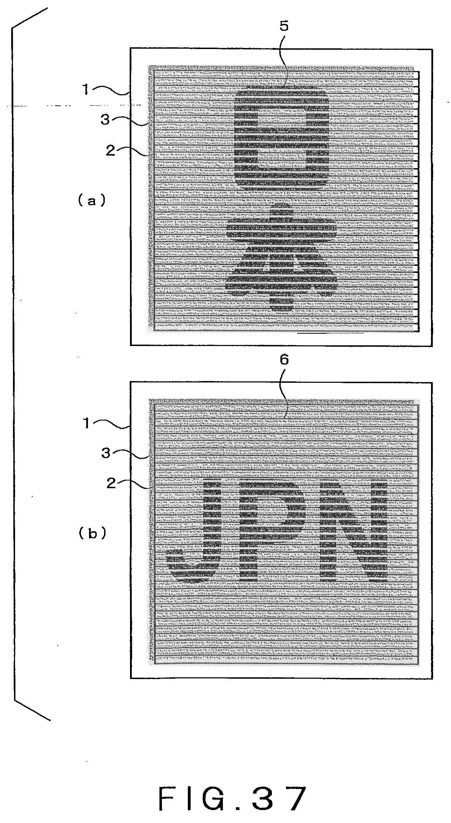

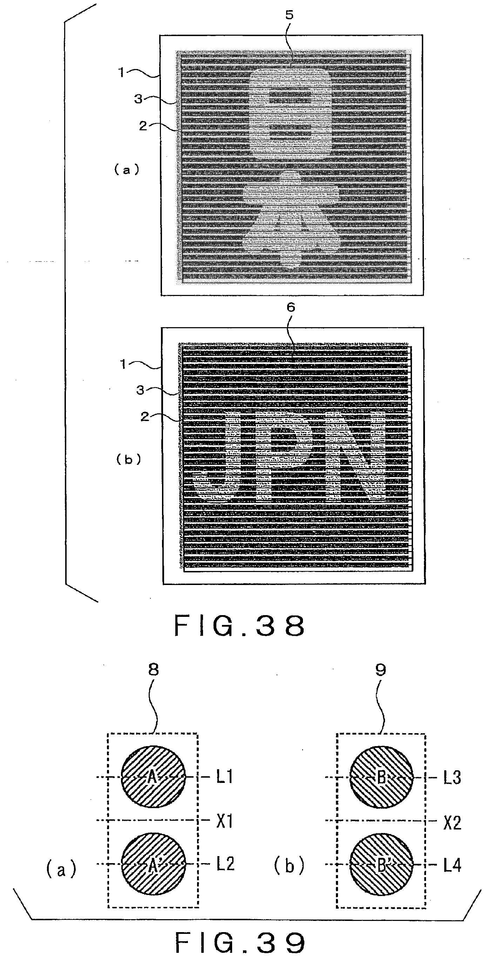

In the sixth to eighth embodiments to be explained below, when a discrimination tool 2 is overlaid on the printed matter 1 at a predetermined angle (0°), a first invisible image 5 as shown in Fig. 37(a) appears as a visible image. When the discrimination tool 2 is shifted from that position slightly in the vertical axis direction, a second invisible image 6 as shown in Fig. 37(b) appears as a visible image. When the discrimination tool 2 is further shifted slightly in the vertical axis direction and overlaid, the first invisible image 5 as shown in Fig. 38(a) appears in the positive state. When the discrimination tool 2 is shifted from that position slightly in the vertical axis direction, the second invisible image 6 as shown in Fig. 38(b) appears in the positive state. Each image is observed as a negative or positive image, as shown in Fig. 37(a) or 38(a) and Fig. 37(b) or 38(b), depending on the relative positional relationship between the discrimination tool 2 and the printed matter 1. This is incorporated within the range of the effects of the present invention.

### (6) Sixth Embodiment

An anti-counterfeit printed matter according to the sixth embodiment of the present invention will be described below.

Fig. 39 shows objects which construct an invisible image of an anti-counterfeit printed matter 1 according to the sixth embodiment. As shown in Fig. 39(a), objects A and A' oppose to a virtual center line X1 and have a negative/positive relationship. The negative/positive relationship indicates that for example, when one is black (on), the other is white (off), and when one is colored, the other is colorless. That is, the two objects are never black or white simultaneously. The objects A and A' have the same area and construct a first object element 8.

In Fig. 39(b), objects B and B' oppose to a virtual center line X2 and have a negative/positive relationship, as in Fig. 39(a). The objects B and B' have the same area and construct a second object element 9.

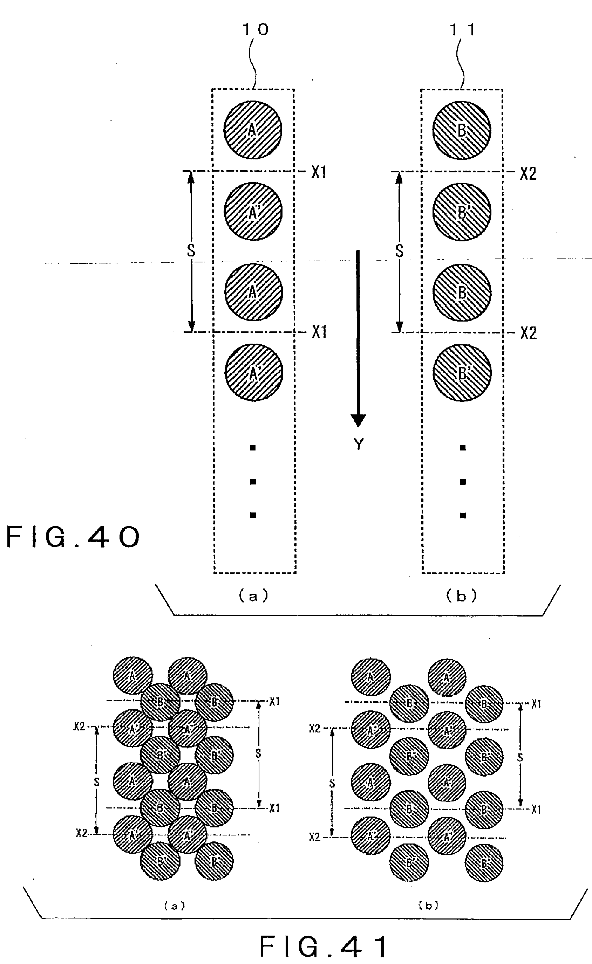

Fig. 40 shows a state in which a plurality of object elements described above are arranged in a predetermined direction Y. Fig. 40(a) shows a first invisible image element 10 formed by arranging a plurality of first object elements 8 in the predetermined direction Y. Fig. 40(b) shows a second invisible image element 11 formed by arranging a plurality of second object element 9 in the predetermined direction Y that is the same as the direction in which the first object elements 8 are arranged. A distance (pitch) S of the center lines X1 of the object elements of the first invisible image element 10 is constant. The distance (pitch) S of the center lines X2 of the object elements of the second invisible image element 11 is also constant. The pitch S in the first invisible image element 10 equals the pitch S in the second invisible image element 11. Note that the pitch S is 1 mm or less considering the design in the visible state.

Fig. 41 shows states in which a plurality of first invisible image elements 10 and second invisible image elements 11 described above are arrayed periodically. The periodical array indicates arranging the elements such that the centers of the objects B and B' of the second object elements 9 of the second invisible image element 11 are located on the center lines X1 of the first object elements 8 of the first invisible image element 10. Since the pitch S in the first invisible image element 10 equals the pitch S in the second invisible image element 11, the second invisible image element 11 is arrayed with a shift of 1/4 pitch with respect to the first invisible image element 10. Note that Fig. 41(a) is a view showing the first invisible image elements 10 and the second invisible image elements 11 which are arrayed in contact with each other, and Fig. 41(b) is a view showing the first invisible image elements 10 and the second invisible image elements 11 which are arrayed while being spaced apart from each other. Considering the design in the visible state, the elements are preferably in contact, as shown in Fig. 41(a).

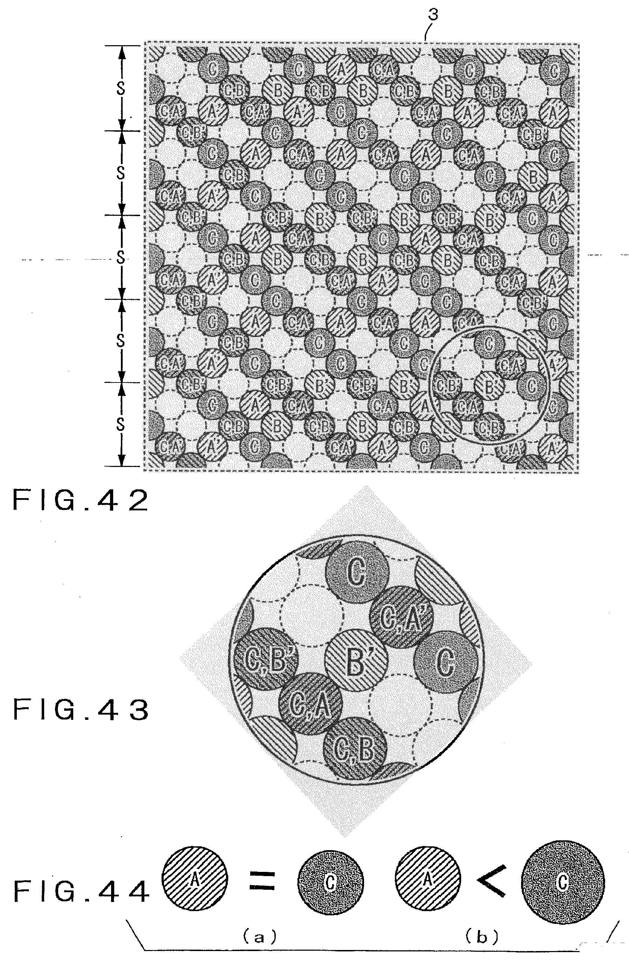

The first invisible image elements 10 and second invisible image elements 11 are continuously tightly arranged periodically in a matrix on the base material, as shown in Fig. 42. Fig. 42 schematically illustrates the plurality of objects arranged in a matrix to form a printed pattern 3 on the printed matter so as to clarify the compositions of a first invisible image, second invisible image, and visible image. Fig. 43 is an enlarged view of the circled portion in Fig. 42. Note that blank objects indicated by dotted lines in Figs. 42 and 43 represent that since each object element is formed from a pair of objects having a negative/positive relationship, as described above, when one is black (on), the other is white (off).

Objects C in Fig. 42 construct a visible image (design: pattern) on the printed matter, and represent a pattern formed from an arbitrary graphic pattern, characters, and the like visually recognized by the naked eye in a normal visual recognition state. The visible image is an image that is visually recognizable under normal visible light. The invisible image is an image that is not visually recognizable or is very hard to visually recognize under normal visible light. The objects C are arranged to overlap some of the objects A, A', B, and B' of the invisible images, thereby constructing a visible image, as shown in Fig. 42. The number of objects C constructing the visible image is preferably suppressed to about 1/2 the total number of objects by alternately arranging the objects C such that the visible image (design: pattern) constructed by them does not completely hide the objects A, A', B, and B'.

As for the positional relationship between the objects C and the objects A, A', B, and B' constructing the invisible images, the objects C are arranged to overlap some of the objects, as described above. To enable to clearly visually recognize the visible image, the size of the object C is equal to that of the other objects, as shown in Fig. 44(a), or larger, as shown in Fig. 44(b). That is, a relationship "area of object C ≥ area of objects A, A', B, and B'" holds. Preferably, all objects have the same size. In the sixth embodiment, all objects are designed to have the same size.

Regarding arranging the objects C to overlap some of the objects A, A', B, and B', for example, not the objects A but the objects C may be arranged at positions where the objects A should be arranged. Alternatively, the objects A are arranged first, and the objects C may then be arranged by overprinting.

The objects A, A', B, and B' constructing the invisible images and the objects C constructing the visible image can have a single color (same color) considering the cost. Alternatively, a plurality of colors may be used to obtain a colorful outlook. However, since the objects A and A' and the objects B and B', i.e., the object elements of the invisible images form pairs, the objects A and A' need to have the same color, and the objects B and B' need to have the same color. As for the color relationship between the objects C constructing the visible image and the objects A, A', B, and B' constructing the invisible images, if the density of the objects C is higher than that of the objects A, A', B, and B', the visible image impedes appearance of the invisible images upon overlaying a discrimination tool to visualize them. Hence, the density of the objects C is preferably equal to or lower than that of the objects A, A', B, and B'. Especially, when the objects C are overprinted on some of the objects A, A', B, and B', the colors inevitably mix upon overprinting, and the density rises. To minimize the increase in the density, it is necessary to lower the density of the objects C.

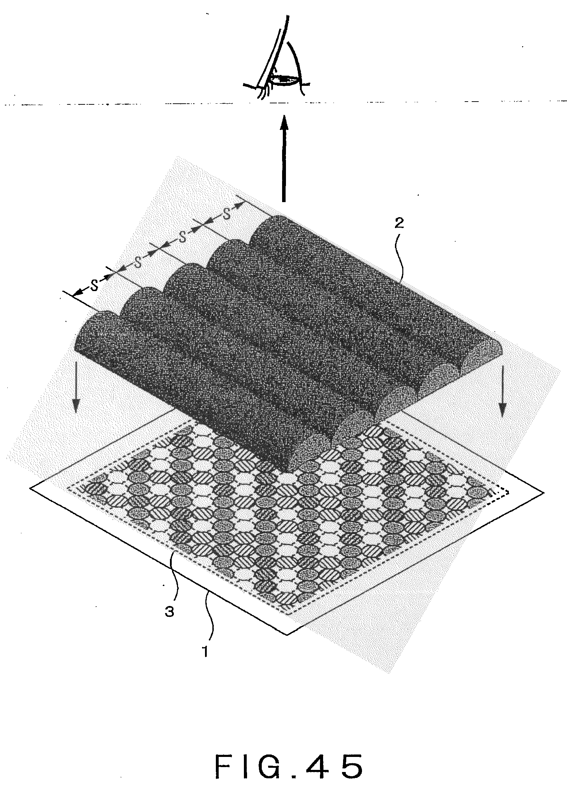

For example, as shown in Fig. 45, overlaying a discrimination tool 2 formed from a lenticular lens on the printed pattern 3 of the printed matter 1 in this state and visually observing the printed pattern from the front allow to visualize the invisible image formed on the printed pattern 3 as a visible image. Note that in the sixth embodiment, the distance (pitch) S is 340 µm, and the printed pattern 3 is printed on a coated paper sheet by offset printing. However, the distance (pitch) S, printed matter base material, printing method, printing material, and printing apparatus are not particularly limited.

In normal visual observation, the visible image is visually recognized, but the invisible image is not visually recognized. When the discrimination tool is overlaid at a predetermined position on the printed pattern, the visible image that is visually recognizable so far cannot be identified anymore. Conversely, the invisible image is visually recognized. The principle of the image switch effect of the printed matter according to the sixth embodiment will be described below.

When the visible image is visually recognized, but the invisible image is not visually recognized, the objects C construct the visible image, and the objects A or A' and the objects B or B' constructing the invisible images form the entire background image. Since the objects A and A' and the objects B and B' have the negative/positive relationship and the same area, they are never identified as images (patterns).

The lenticular lens serving as a discrimination tool is placed at a predetermined position on the printed matter so as to make the center line of each lens element coincide with the center of the object A, i.e., a line L1 in Fig. 39. In this case, the objects A are magnified so that the image (pattern) constructed by the objects A can be identified. At this time, the areas of the objects C constructing the visible image and the objects B and B' constructing the invisible image are smaller than that of the magnified objects A. The objects B and B' have the negative/positive relationship. For this reason, the objects B and B' are visually recognized not as an image but only as a uniform background. That is, the image switches in fact. When the discrimination tool is moved in the vertical axis direction to make the center line of each lens element of the discrimination tool 2 coincide with a line L2 in Fig. 39 and magnify the objects A', the first invisible image visually recognized based on the objects A is visually recognized in a reversed negative/positive state.

When the discrimination tool is shifted in the vertical axis direction to make the center line of each lens element of the lenticular lens coincide with a line L3 in Fig. 39 and magnify the objects B, or when the discrimination tool is further moved from this state in the vertical axis direction to make the center line of each lens element of the discrimination tool 2 coincide with a line L4 in Fig. 39, the second invisible image is visually recognized in a reversed negative/positive state in accordance with the same principle.

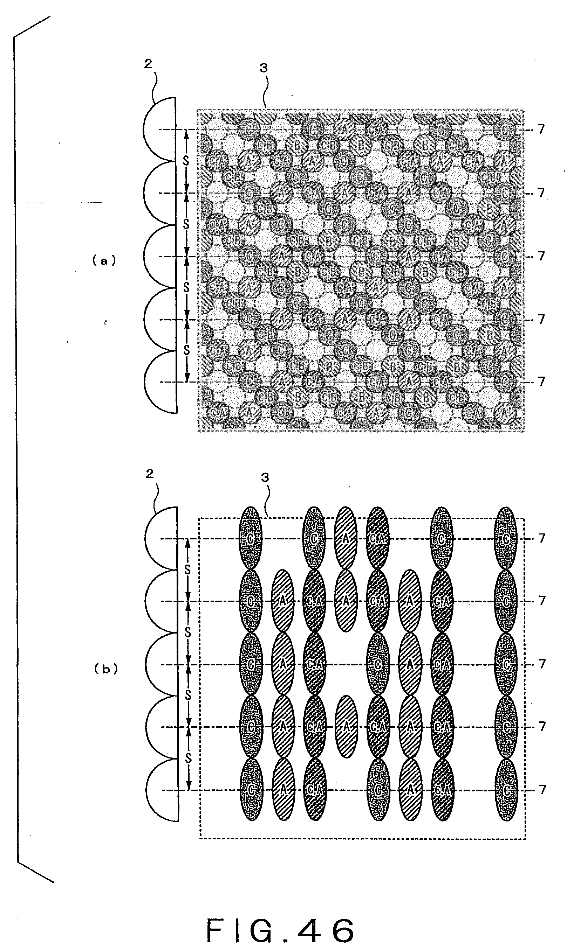

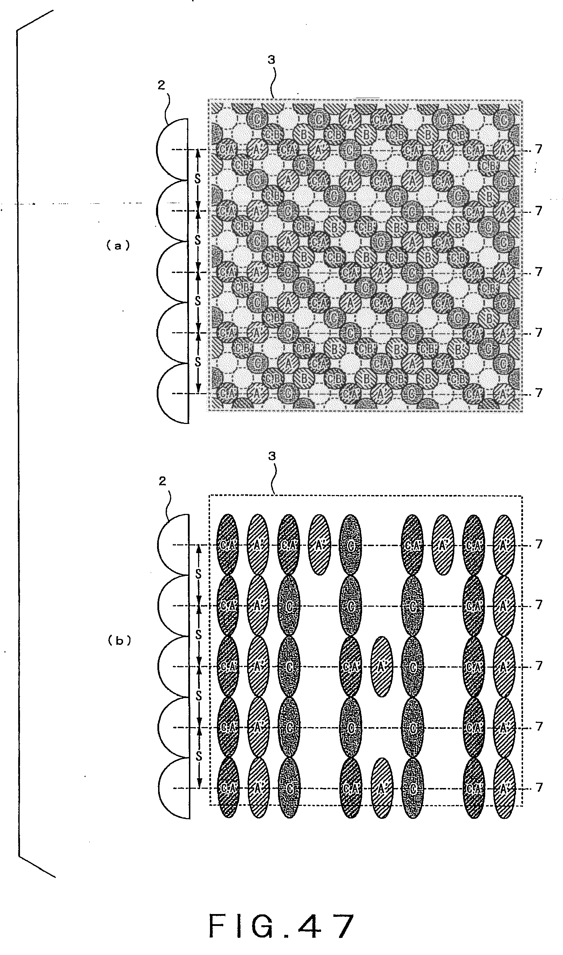

Fig. 46 shows a state in which the discrimination tool 2 formed from a lenticular lens is overlaid on the printed pattern 3 of the printed matter 1 and, more specifically, so as to make the center line of each lens element coincide with the line L1 in Fig. 39, and the printed pattern 3 is visually observed from the front. When each center line 7 of the lenticular lens exists at the position shown in Fig. 46(a) so as to coincide with the line L1 in Fig. 39, the objects A are located on the center lines 7. Since the objects A located on the center lines 7 look enlarged due to the characteristics of the lenticular lens, a visible image having the graphic pattern shown in Fig. 46(b) is visualized upon visual observation. When each center line 7 of the lenticular lens exists at the position shown in Fig. 47(a) so as to coincide with the line L2 in Fig. 39, the objects A' are located on the center lines 7. Since the objects A' located on the center lines 7 look enlarged due to the characteristics of the lenticular lens, a visible image having the graphic pattern shown in Fig. 47(b) is visualized upon visual observation. The objects A and A' have the negative/positive relationship. Hence, the first invisible image as shown in Fig. 37(a) or 38(b) described above is visualized as a negative or positive visible image.

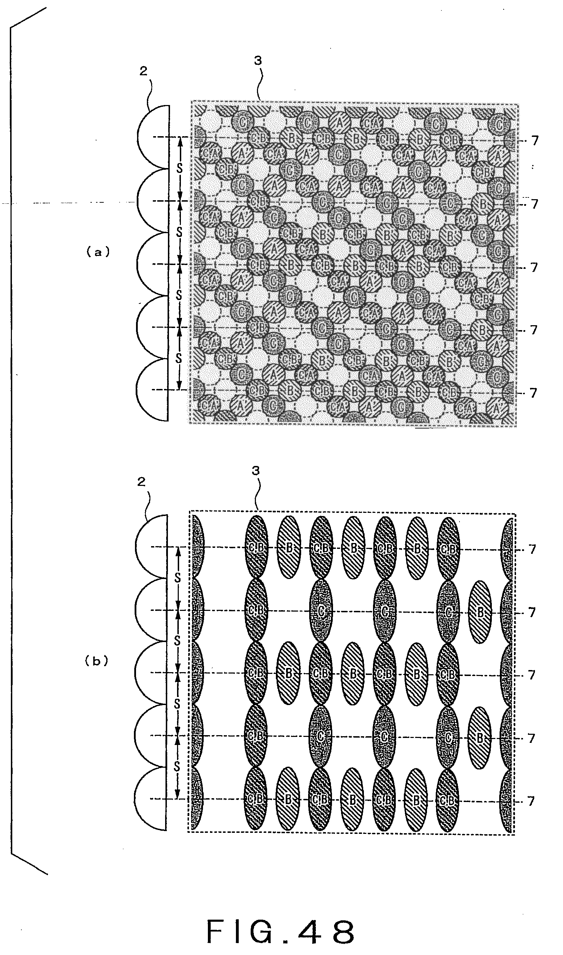

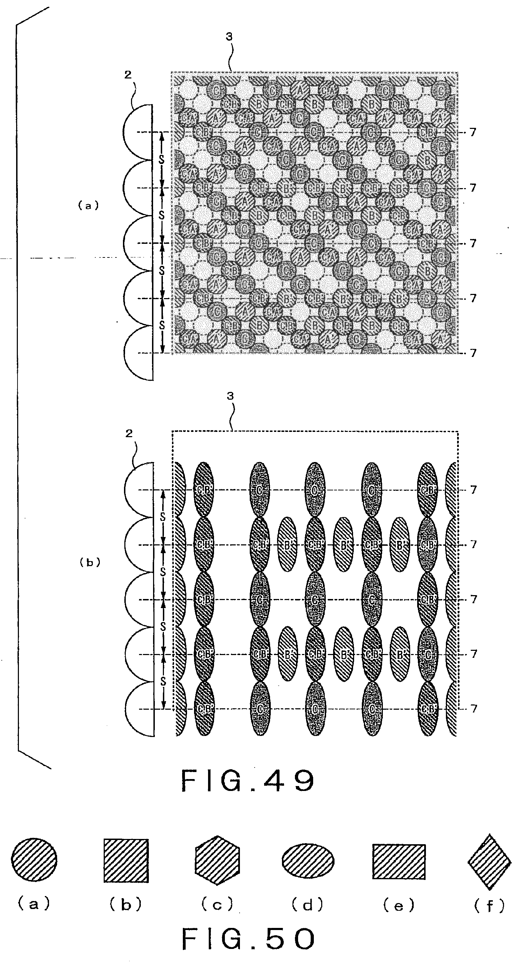

Fig. 48 shows a state in which the discrimination tool 2 is shifted in the vertical axis direction and overlaid on the printed pattern 3 of the printed matter 1 so as to make the center line of each lens element of the lenticular lens coincide with the line L3 in Fig. 39, and the printed pattern 3 is visually observed from the front. In this case, each center line 7 of the lenticular lens exists at the position shown in Fig. 48(a), and the objects B are located on the center lines 7. Since the objects B located on the center lines 7 look enlarged due to the characteristics of the lenticular lens, a visible image having the graphic pattern shown in Fig. 48(b) is visualized upon visual observation. When each center line 7 of the lenticular lens exists at the position shown in Fig. 49(a) so as to coincide with the line L4 in Fig. 39, the objects B' are located on the center lines 7. Since the objects B' located on the center lines 7 look enlarged due to the characteristics of the lenticular lens, a visible image having the graphic pattern shown in Fig. 49(b) is visualized upon visual observation. That is, the second invisible image as shown in Fig. 37(b) or 38(b) described above is visualized as a negative or positive visible image.

Note that when discriminating the first and second invisible images using the discrimination tool, the visible image formed from the objects C is nearly invisible or hardly visible. Hence, the visible image does not impede the visibility of the first and second invisible images visualized as visible images.

The discrimination tool 2 need not always be the lenticular lens. The same effect can be obtained using, e.g., a parallel line filter. In the parallel line filter, portions corresponding to the parallel lines on the filter hide objects constructing the visible image so that only the objects constructing the invisible image can be identified. The filter may fail in completely hiding the visible image and allow to visually recognize it to some extent. However, this does not impair the effect of the present invention, and the parallel line filter suffices for simple discrimination.

Each of the objects A, A', B, and B' of one object unit on the printed matter 1 according to the sixth embodiment has a circular shape. However, the shape is not limited to this. As shown in Fig. 50, various shapes such as a circle (a), square (b), hexagon (c), ellipse (d), rectangle (e), and rhombus (f) are usable. In this case, the objects A, A', B, B', and C may have different shapes. The object shape is not particularly limited as far as the objects A and A' pair off in the negative/positive relationship and have the same area so as to construct the first invisible image, the objects B and B' pair off in the negative/positive relationship and have the same area so as to construct the second invisible image, and the objects C are visually recognized as the visible image (design: pattern).

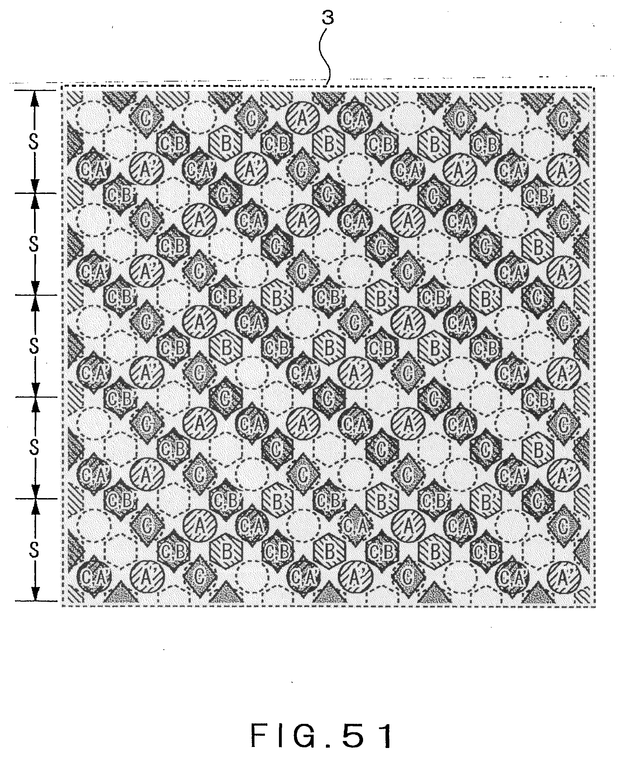

Fig. 51 is a schematic view of a printed matter using objects having different shapes.

The objects A and A' constructing the first object elements have a circular shape. The objects B and B' constructing the second object elements have a hexagonal shape. The objects C constructing the visible image have a rhombic shape. In this state as well, the objects A and A' constructing the first object elements have the same area and same color. The objects B and B' constructing the second object elements have the same are and same color. The objects C constructing the visible image have the same area as those of the other objects but a color different from those of the other objects. The first object elements and second object elements are arrayed while being spaced apart from each other.

Even with the arrangement shown in Fig. 51, when the lenticular lens serving as the discrimination tool 2 is placed while being shifted slightly in the vertical axis direction so as to make the center line of each lens element of the lenticular lens coincide with the centers of the objects, i.e., the lines L1, L2, L3, and L4, the invisible image constructed by the objects A, the invisible image constructed by the objects A' (the positive image of the invisible image constructed by the objects A), the invisible image constructed by the objects B, and the invisible image constructed by the objects B' (the positive image of the invisible image constructed by the objects B) appear.

The sixth embodiment is useful for printed matters such as securities because it is possible to form a clear visible image having a design and high degree of freedom using the objects C without impeding the visibility of a visualized invisible image. In addition, overlaying a single discrimination tool on the printed matter enables to easily and clearly visualize the invisible images formed from the objects A and A' and the objects B and B'. Furthermore, the cost can be reduced because only single color printing for printing the objects of the printed matter according to the sixth embodiment in the same color can provide a sufficient anti-counterfeit effect, and the reproduction and printing methods and the like are not particularly limited.

### (7) Seventh Embodiment

The seventh embodiment of the present invention will be described. In the sixth embodiment, an anti-counterfeit printed matter having at least one type of invisible image that can be authenticated using a discrimination tool such as a lenticular lens has been described. A form using a latent image pattern visually recognizable without using any discrimination tool such as a lenticular lens will be explained.

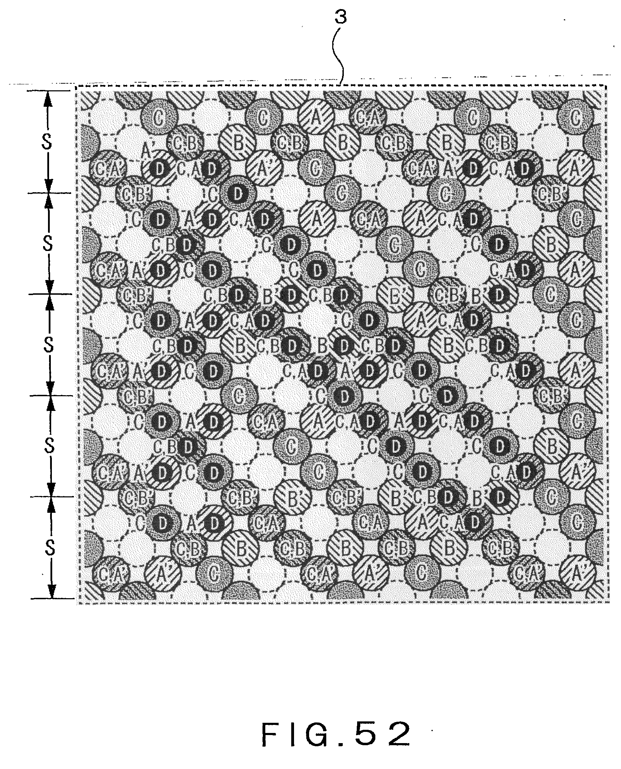

Fig. 52 shows an object arrangement according to the seventh embodiment. The basic object arrangement is the same as in Fig. 42. Objects A, A', B, B', and C shown in Fig. 52 construct a printed pattern by ink containing a luminescent material such as silver ink with metallic luster. Objects D are printed on arbitrary objects selected from the above-described objects using an arbitrary color ink such as light purple ink. The objects D construct a latent image that appears depending on the printed matter observation condition, apart from the visible image constructed by the objects C. The area of the object D is equal to or smaller than those of the objects A, A', B, B', and C. Note that the luminescent material and the color ink of the seventh embodiment are not particularly limited.

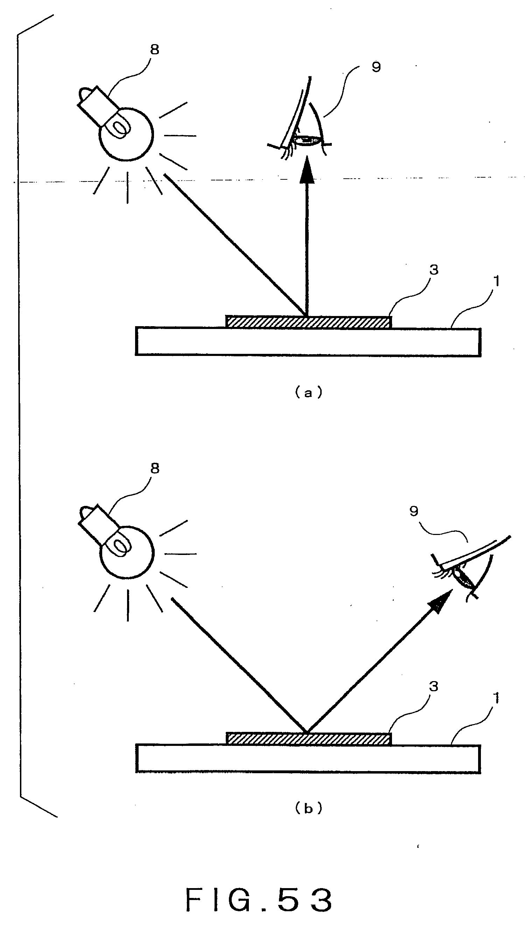

Fig. 53 shows the positional relationship between an illumination light source 8, an eyepoint 9, and a printed matter 1 upon observing the printed matter 1 having the printed pattern according to the seventh embodiment in the diffused light region and the specular reflected light region. Observation in the diffused light region is done when the illumination light source 8, eyepoint 9, and printed matter 1 have the positional relationship shown in Fig. 53(a). Observation in the specular reflected light region is done when the illumination light source 8, eyepoint 9, and printed matter 1 have the positional relationship shown in Fig. 53(b).

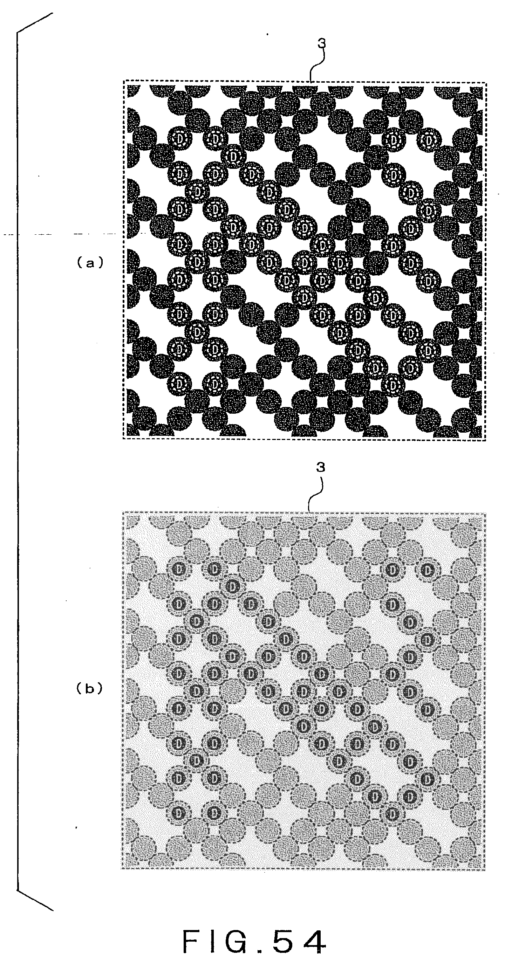

When the printed matter 1 is visually observed in the diffused light region, as shown in Fig. 53(a), the light purple objects D formed on the printed pattern are hard to visually recognize, and the visible image constructed by the objects C made of silver ink can mainly be recognized visually, as shown in Fig. 54(a). On the other hand, when the printed matter 1 is visually observed in the specular reflected light region, as shown in Fig. 53(b), the brightness of the objects A, A', B, B', and C made of silver ink rises due to the luminescent action caused by the specular reflected light, and only the objects D made of light purple ink without the luminescent action are enhanced and visually recognized, as shown in Fig. 54(b). Hence, the character "N" constructed by arranging the objects D is observed.

### (8) Eighth Embodiment

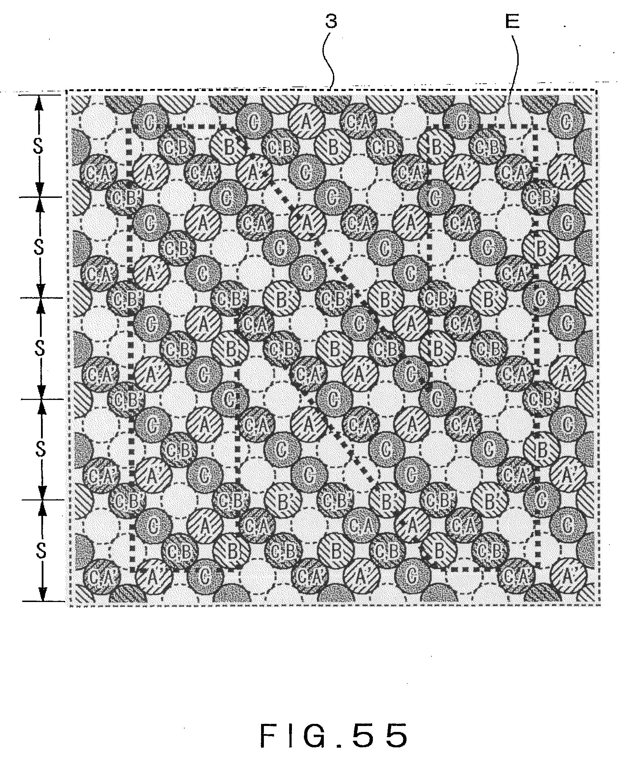

The eighth embodiment which forms a latent image pattern by a method different from those of the above-described sixth and seventh embodiments will be described next. Fig. 55 shows an object arrangement according to the eighth embodiment. The basic object arrangement is the same as in Fig. 42. Objects A, A', B, B', and C are printed by ink containing a luminescent material. A pattern made of a colorless transparent material such as a transparent varnish is printed on the printed pattern. The pattern has no special positional relationship to the arrangement of the objects A, A', B, B', and C, and an arbitrary pattern can be formed.

Fig. 53 shows the positional relationship between an illumination light source 8, an eyepoint 9, and a printed matter 1 upon observing the printed matter 1 having the printed pattern according to the eighth embodiment in the diffused light region and the specular reflected light region. Observation in the diffused light region is done when the illumination light source 8, eyepoint 9, and printed matter 1 have the positional relationship shown in Fig. 53(a). Observation in the specular reflected light region is done when the illumination light source 8, eyepoint 9, and printed matter 1 have the positional relationship shown in Fig. 53(b).

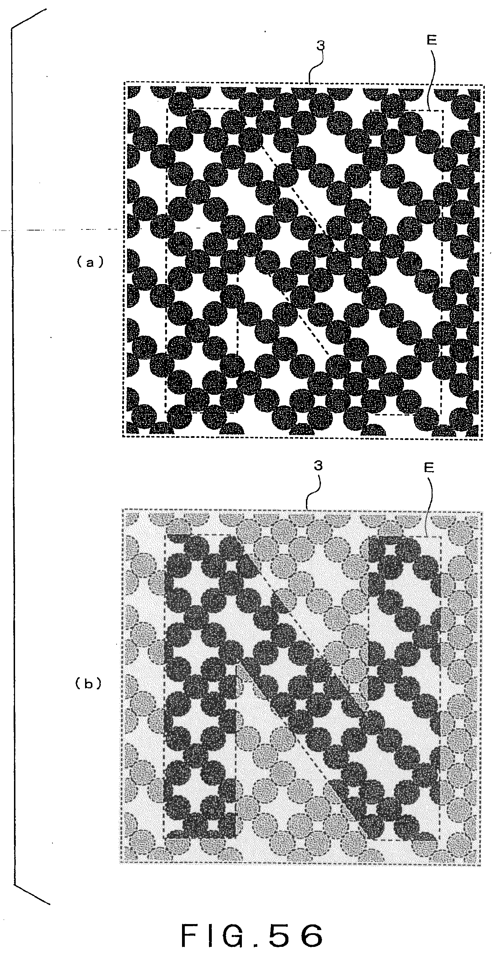

When the printed matter 1 is visually observed in the diffused light region, as shown in Fig. 53(a), objects E of transparent varnish formed on the printed pattern are hard to visually recognize, and the visible image constructed by the objects C made of silver ink can mainly be recognized visually, as shown in Fig. 56(a). On the other hand, when the printed matter 1 is visually observed in the specular reflected light region, as shown in Fig. 53(b), the brightness of the objects A, A', B, B', and C made of silver ink rises due to the luminescent action caused by the specular reflected light, and only the objects E made of transparent varnish without the luminescent action are enhanced and visually recognized, as shown in Fig. 56(b). Hence, the character "N" constructed by arranging the objects E is observed.

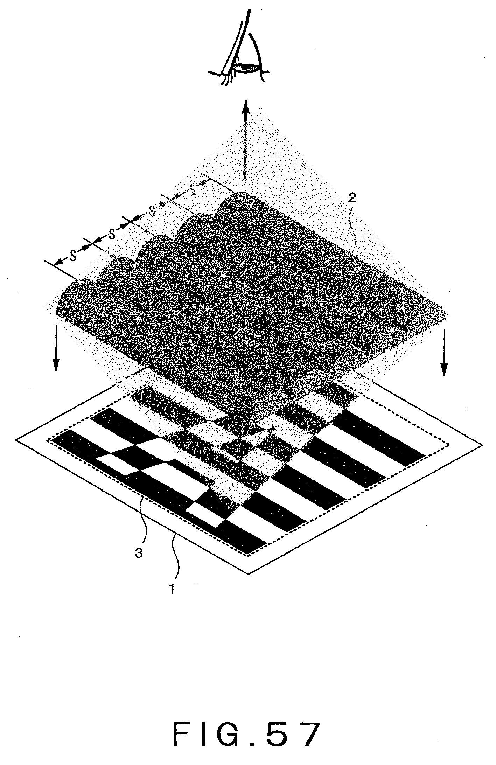

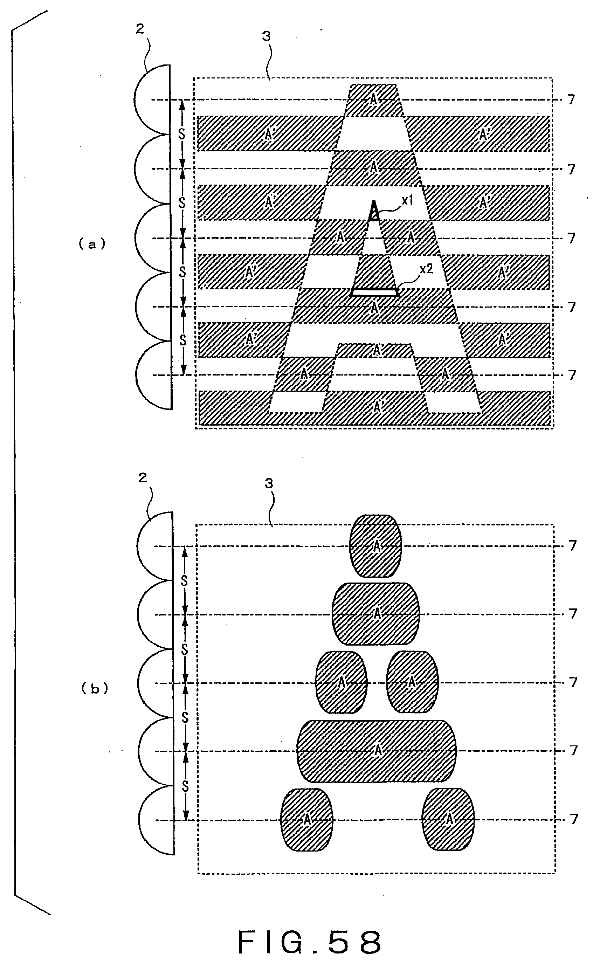

In both dot phase modulation and line phase modulation, defects of print reproduction may be generated by cutting of the parallel line pattern at the unit block boundary, as described in patent reference 5, or the state of the boundary of the invisible image formed on the pattern. For example, a discrimination tool 2 formed from a lenticular lens is overlaid on a printed pattern 3 of a printed matter 1, which has a parallel line pitch S of 340 µm, as shown in Fig. 57. Fig. 58 shows a state in which the printed pattern is visually observed from the front. When each center line 7 of the lenticular lens exists at the position shown in Fig. 58(a), the objects A are located on the center lines 7. Since the objects A located on the center lines 7 look enlarged due to the characteristics of the lenticular lens, a visible image having the graphic pattern shown in Fig. 58(b) is visualized upon visual observation.

However, in printing schemes such as a letterpress scheme, intaglio scheme, and stencil printing (silk-screen) in which the reproducibility of the plate-making material depends on the minimum line width or in digital printing in which the image reproducibility depends on the image resolution setting, an image area x1 shown in Fig. 58(a) has a minimum object width of 30 µm or less and may vanish in the reproduction process or print process. This portion hard to reproduce on printing is an instability factor of printed matter quality. A non-image area x2 has a minimum non-object width of 30 µm or less and may be buried in neighboring expanded objects in the reproduction process or print process. This portion hard to reproduce on printing is an instability factor of printed matter quality.

In addition, even if some type of invisible image is formed, the boundary portion of the invisible image may be hard to reproduce on printing depending on the state of the boundary, resulting in defects in print reproduction.

The ninth to 14th embodiments to be explained below solve the problems associated with the defects of print reproduction.

### (9) Ninth Embodiment

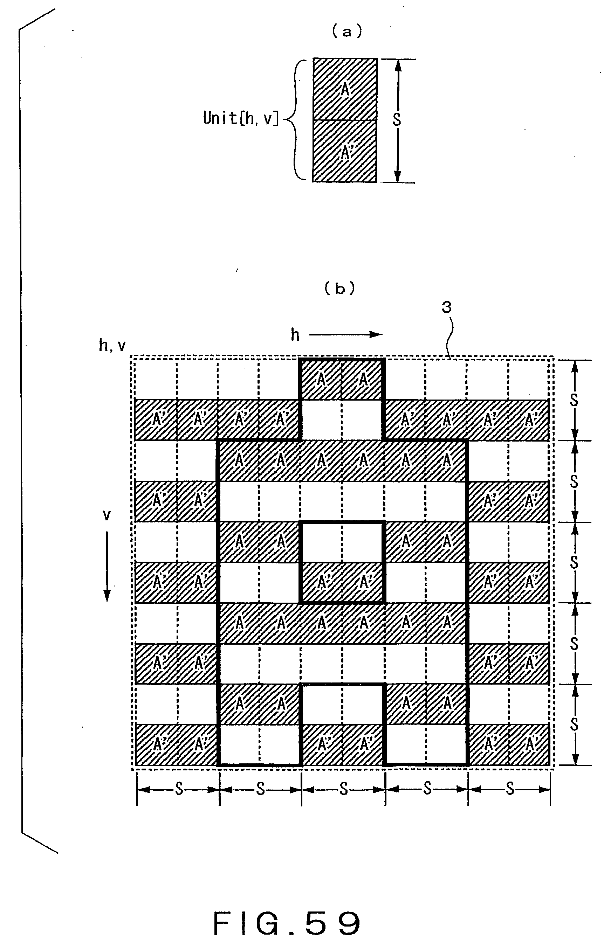

An anti-counterfeit printed matter according to the ninth embodiment of the present invention will be described. Fig. 59 shows a partially enlarged view of the structure of one object unit of the printed pattern of a printed matter according to the ninth embodiment, and a view schematically illustrating the objects arranged in a matrix to form a printed pattern 3 on the printed matter so as to clarify the composition. A vertical size S is 1 mm or less, and for example, 340 µm. The objects shown in Fig. 59(a) form a minimum unit called a unit and include objects A and A'. The objects in Fig. 59(a) are periodically arranged in a matrix on the surface of the printed matter. The objects A and A' pair off and have an on/off relationship. The on/off relationship indicates that for example, when one is black (on), the other is white (off), and when one is colored, the other is colorless. That is, the two objects are never black or white simultaneously on principle. The objects A and A' have the same area. The objects A and A' are not visually recognized under a normal visual condition. An invisible image (negative or positive) is formed from only the objects A, or an invisible image (positive or negative) is formed from only the objects A'.

The objects having the above-described structure are continuously tightly arranged periodically in a matrix on the printed matter in the vertical and horizontal directions, as shown in Fig. 59(b). Fig. 59(b) is a view schematically illustrating the plurality of objects arranged in the number v of vertical steps and the number h of horizontal steps in a matrix to form the printed pattern 3 on the printed matter so as to clarify the composition of the invisible image indicated by bold solid lines. Note that in the ninth embodiment, the number of steps indicates the number of units repeated on the printed pattern 3. The number of steps is not particularly limited. The number of steps is proportional to the resolution of a visible image or invisible image. The bold solid lines indicating the invisible image just explain the positions and are not visually recognized, as shown in Fig. 59(b), in fact. In the printed pattern 3, the total area of the objects A equals that of the objects A'. When the objects A and A' are arranged in the horizontal direction, parallel lines made of the group of objects A and parallel lines made of the group of objects A' are formed. That is, Fig. 59(b) shows a state in which an invisible image is formed by line phase modulation. In this state, however, upon observation by the naked eye, since both the objects A and A' are on (colored) near units in which a plurality of objects A and a plurality of objects A' are arranged in a matrix, the density appears to be high (dark). Additionally, since both the objects A and A' are off (not colored) near units in which a plurality of objects A and a plurality of objects A' are arranged in a matrix, the density appears to be low (light). That is, density imbalance may occur upon naked eye observation.

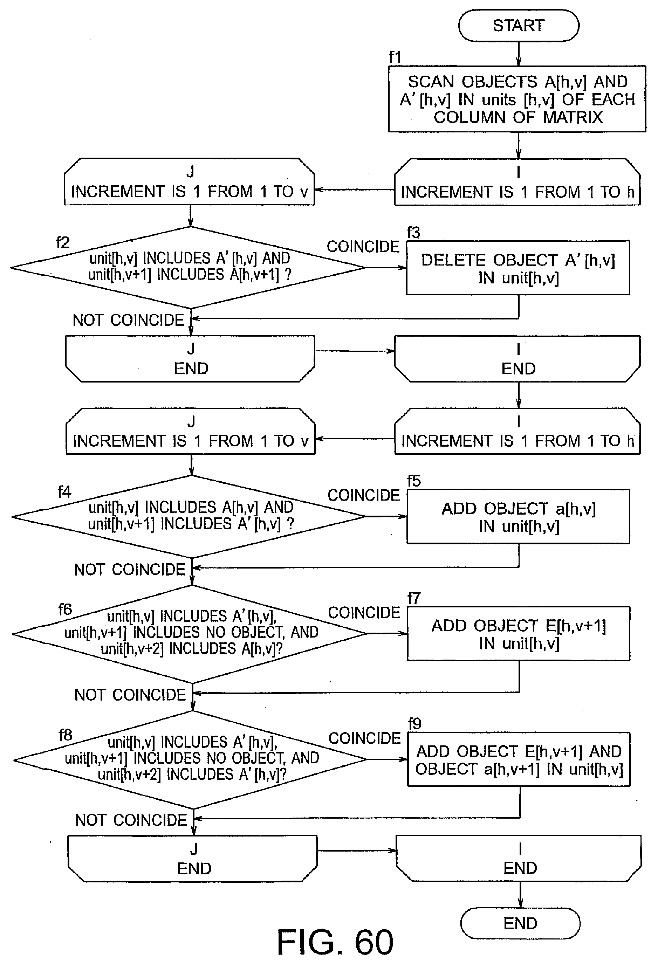

To relax the density imbalance, object deletion and addition are executed, for each unit [h,v] that is the minimum unit, using the algorithm shown in Fig. 60. Note that [v] is the number of steps corresponding to the number of units counted vertically from the upper side, and [h] is the number of steps corresponding to the number of units counted horizontally from the left side. In a process f1, concerning the units [h,v] of each column of the matrix, the objects A[h,v] and A'[h,v] are sequentially detected. Note that as for the method of detecting the objects A[h,v] and A'[h,v], for example, if the printed pattern 3 is a binary image having the bitmap format, the object A[h,v] or A'[h,v] may be identified and deleted in a process target unit by processing called labeling in general.

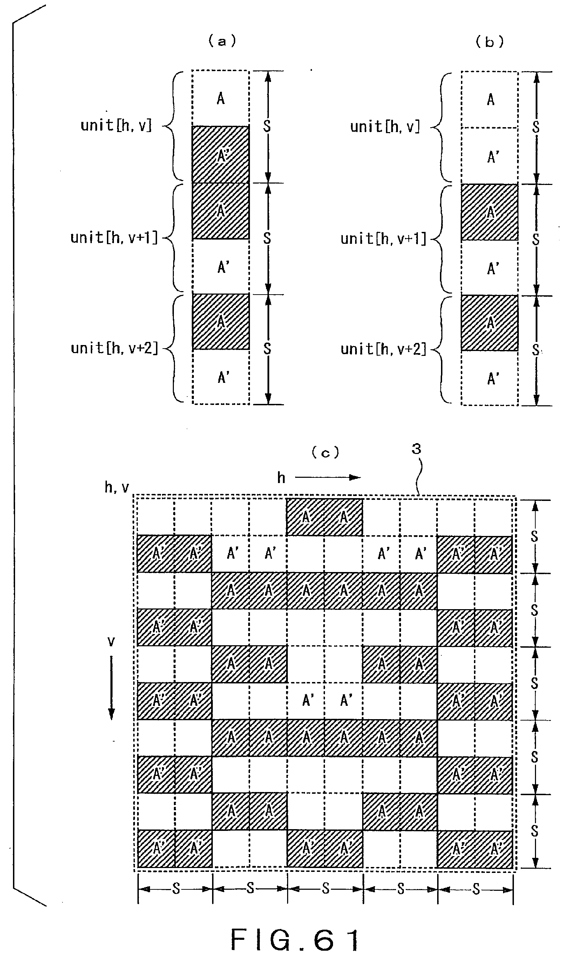

Next, if a condition that the unit [h,v] includes the object A'[h,v], and the unit [h,v+1] includes the object A[h,v+1] is satisfied in a process f2, the object A'[h,v] which should be arranged originally in the unit [h,v] is deleted in a process f3. More specifically, when the unit [h,v], unit [h,v+1], and unit [h,v+2] are arranged, and the object A'[h,v] of the unit [h,v] is adjacent to the object A[h,v+1] of the unit [h,v+1], as shown in Fig. 61(a), the object A'[h,v] of the unit [h,v] is deleted, as shown in Fig. 61(b). If the condition of the process f2 is not satisfied, the process advances to a process f4. Note that when the processes f2 and f3 are applied to the printed pattern 3 shown in Fig. 59(b), the printed pattern 3 shown in Fig. 61(c) is obtained. When the objects A' are partially deleted, the total area of the objects A' becomes smaller than that of the objects A.

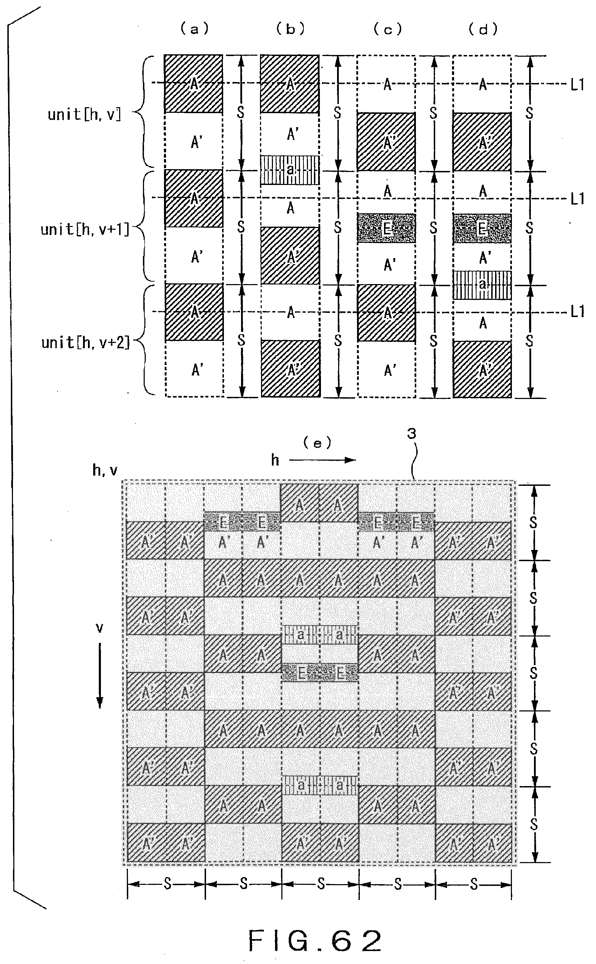

If a condition that the unit [h,v] includes the object A[h,v], and the unit [h,v+1] includes the object A'[h,v] is satisfied in the process f4, an object is added between the unit [h,v] and the unit [h,v+1] in a process f5. More specifically, an object a having an object area 1/2 or almost 1/2 that of the object A or A' is added between the unit [h,v] and the unit [h,v+1], as shown in Fig. 62(b). This relaxes the density imbalance upon naked eye observation between the unit [h,v] and the unit [h,v+1].

If a condition that the unit [h,v] includes the object A'[h,v], the unit [h,v+1] includes no object, and the unit [h,v+2] includes the object A[h,v+2] is satisfied in a process f6, an object E is added at the center of the unit [h,v+1] in a process f7. More specifically, the object E having an object area 1/2 or almost 1/2 that of the object A or A' is added at the center of the unit [h,v+1], as shown in Fig. 62(c). This relaxes the density imbalance upon naked eye observation between the unit [h,v] and the unit [h,v+2].

If a condition that the unit [h,v] includes the object A'[h,v], the unit [h,v+1] includes no object, and the unit [h,v+2] includes the object A'[h,v+2] is satisfied in a process f8, the object E is added at the center of the unit [h,v+1], and the object a is added between the unit [h,v+1] and the unit [h,v+2] in a process f9. More specifically, the object E having an object area 1/2 or almost 1/2 that of the object A or A' is added at the center of the unit [h,v+1], and the object a having an object area 1/2 or almost 1/2 that of the object A or A' is added between the unit [h,v+1] and the unit [h,v+2], as shown in Fig. 62(d). This relaxes the density imbalance upon naked eye observation between the unit [h,v] and the unit [h,v+2]. Hence, when the processes f4 to f8 are applied to the printed pattern 3 shown in Fig. 59(b), the density imbalance upon naked eye observation is relaxed all over the printed pattern 3 shown in Fig. 62(e).

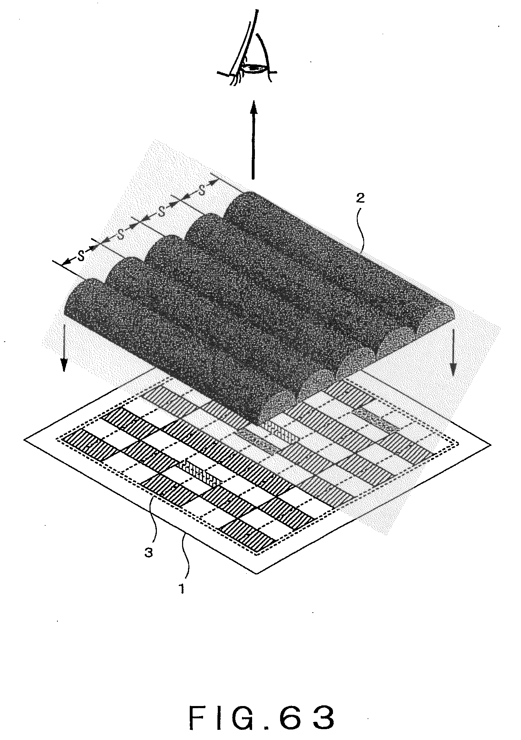

For example, as shown in Fig. 63, overlaying a discrimination tool 2 formed from a lenticular lens on the printed pattern 3 of a printed matter 1 in this state and visually observing the printed pattern from the front allow to visualize the invisible image formed on the printed pattern 3 as a visible image. Note that in the ninth embodiment, the length S is 340 µm, and the printed pattern 3 is printed on a coated paper sheet by offset printing. However, the length S, printed matter base material, printing method, printing material, and printing apparatus are not particularly limited.

The lenticular lens serving as a discrimination tool is placed at a predetermined position on the printed matter so as to make the center line of each lens element coincide with the center of the object A, i.e., a line L1 in Fig. 62. In this case, the objects A are magnified so that the image (pattern) constructed by the objects A can be identified. When the discrimination tool is moved in the vertical axis direction to magnify the objects A', the first invisible image visually recognized based on the objects A is visually recognized in a reversed negative/positive state.

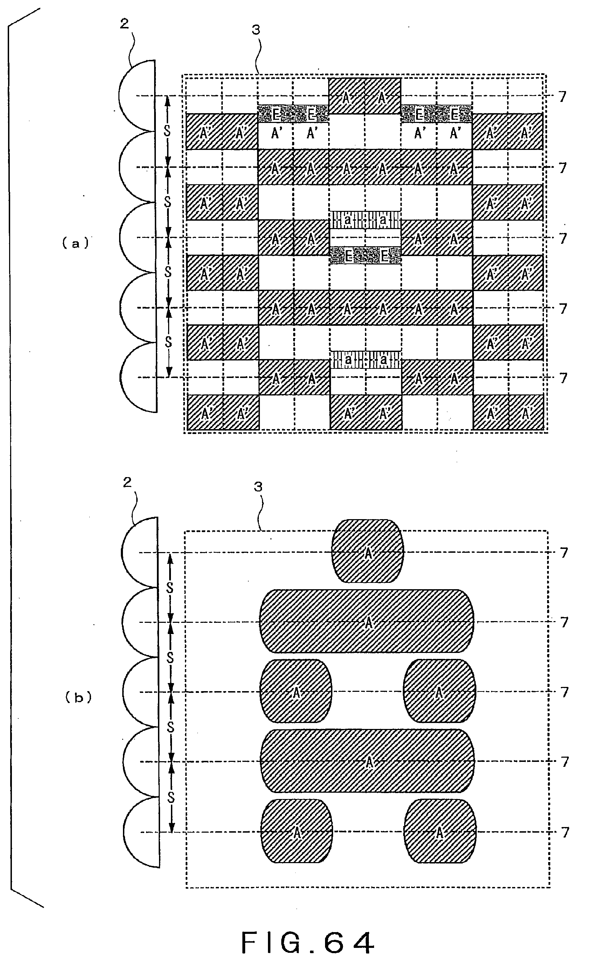

Fig. 64 shows a state in which the discrimination tool 2 formed from a lenticular lens is overlaid on the printed pattern 3 of the printed matter 1 at a predetermined angle and, more specifically, so as to make the center line of each lens element coincide with the line L1 in Fig. 62, and the printed pattern 3 is visually observed from the front. When each center line 7 of the lenticular lens exists at the position shown in Fig. 64(a) so as to coincide with the line L1 in Fig. 62, the objects A are located on the center lines 7. Since the objects A located on the center lines 7 look enlarged due to the characteristics of the lenticular lens, a visible image having the graphic pattern shown in Fig. 64(b) is visualized upon visual observation. The objects A and A' have the negative/positive relationship. Hence, the first invisible image is visualized as a negative or positive visible image.

The discrimination tool 2 need not always be the lenticular lens. The same effect can be obtained using, e.g., a parallel line filter. In the parallel line filter, portions corresponding to the parallel lines on the filter hide objects constructing the visible image so that only the objects constructing the invisible image can be identified. The filter may fail in completely hiding the visible image and allow to visually recognize it to some extent. However, this does not impair the effect of the present invention, and the parallel line filter suffices for simple discrimination. Note that this also applies to the 10th and 14th embodiments to be described later.

According to the ninth embodiment, overlaying a single discrimination tool on the printed matter enables to easily and clearly visualize the invisible images formed from the objects A and A'. In addition, the cost can be reduced because only single color printing for printing the objects of the printed matter according to the ninth embodiment in the same color can provide a sufficient anti-counterfeit effect, and the reproduction and printing methods and the like are not particularly limited. Furthermore, the minimum width of the objects a and E is set to be equal to or more than the minimum object width that allows to maintain printed matter quality. This inevitably eliminates the instability factor of the printed matter quality.

### (10) 10th Embodiment

An anti-counterfeit printed matter according to the 10th embodiment of the present invention will be described.

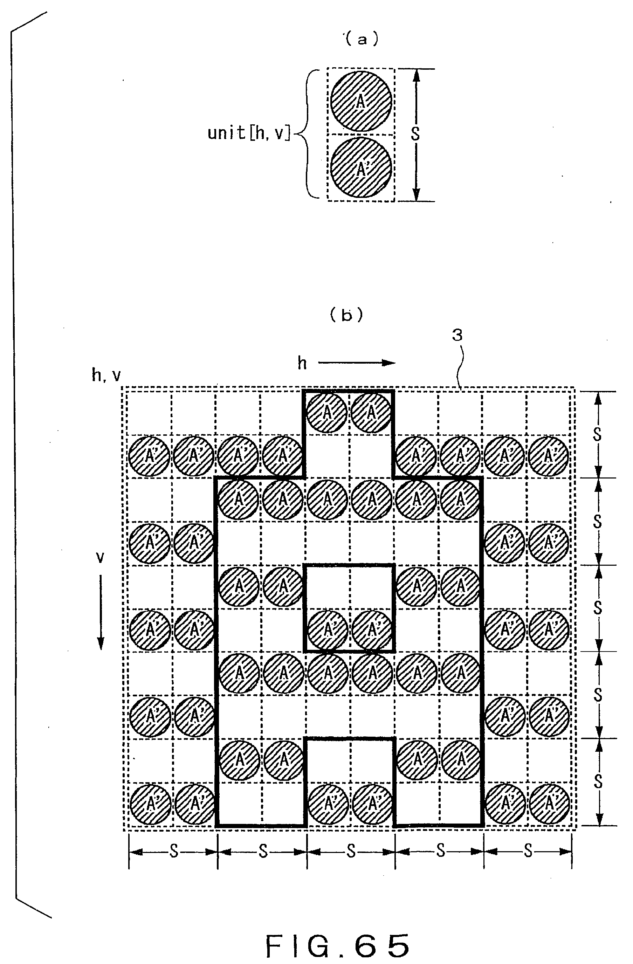

In the ninth embodiment, an example of line phase modulation has been described. In the 10th embodiment of the present invention, an example of dot phase modulation will be explained. Fig. 65 shows a partially enlarged view of the structure of one object unit of the printed pattern of a printed matter according to the 10th embodiment, and a view schematically illustrating the objects arranged in a matrix to form a printed pattern 3 on the printed matter so as to clarify the composition. A vertical size S is 1 mm or less, and for example, 340 µm. The objects shown in Fig. 65(a) form a minimum unit called a unit and include objects A and A'. The objects in Fig. 65(a) are periodically arranged in a matrix on the surface of the printed matter. The objects A and A' pair off and have an on/off relationship. The on/off relationship indicates that for example, when one is black (on), the other is white (off), and when one is colored, the other is colorless. That is, the two objects are never black or white simultaneously on principle. The objects A and A' have the same area. The objects A and A' are not visually recognized under a normal visual condition. An invisible image (negative or positive) is formed from only the objects A, or an invisible image (positive or negative) is formed from only the objects A'.

The objects having the above-described structure are continuously tightly arranged periodically in a matrix on the printed matter in the vertical and horizontal directions, as shown in Fig. 65(b). Fig. 65(b) is a view schematically illustrating the plurality of objects arranged in the number v of vertical steps and the number h of horizontal steps in a matrix to form the printed pattern 3 on the printed matter so as to clarify the composition of the invisible image indicated by bold solid lines. Note that in the 10th embodiment, the number of steps indicates the number of units repeated on the printed pattern 3. The number of steps is not particularly limited. The number of steps is proportional to the resolution of a visible image or invisible image. The bold solid lines indicating the invisible image just explain the positions and are not visually recognized, as shown in Fig. 65(b), in fact. In the printed pattern 3, the total area of the objects A equals that of the objects A'. When the objects A and A' are arranged in the horizontal direction, parallel lines made of the group of objects A and a dot group made of the group of objects A' are formed. That is, Fig. 65(b) shows a state in which an invisible image is formed by dot phase modulation. In this state, however, upon observation by the naked eye, since both the objects A and A' are on (colored) near units in which a plurality of objects A and a plurality of objects A' are arranged in a matrix, the density appears to be high (dark). Additionally, since both the objects A and A' are off (not colorled) near units in which a plurality of objects A and a plurality of objects A' are arranged in a matrix, the density appears to be low (light). That is, density imbalance may occur upon naked eye observation.

To relax the density imbalance, object deletion and addition are executed, for each unit [h,v] that is the minimum unit, using the algorithm shown in Fig. 60. Note that [v] is the number of steps corresponding to the number of units counted vertically from the upper side, and [h] is the number of steps corresponding to the number of units counted horizontally from the left side. In a process f1, concerning the units [h,v] of each column of the matrix, the objects A[h,v] and A'[h,v] are sequentially detected. Note that as for the method of detecting the objects A[h,v] and A'[h,v], for example, if the printed pattern 3 is a binary image having the bitmap format, the object A[h,v] or A'[h,v] may be identified and deleted in a process target unit by processing called labeling in general.

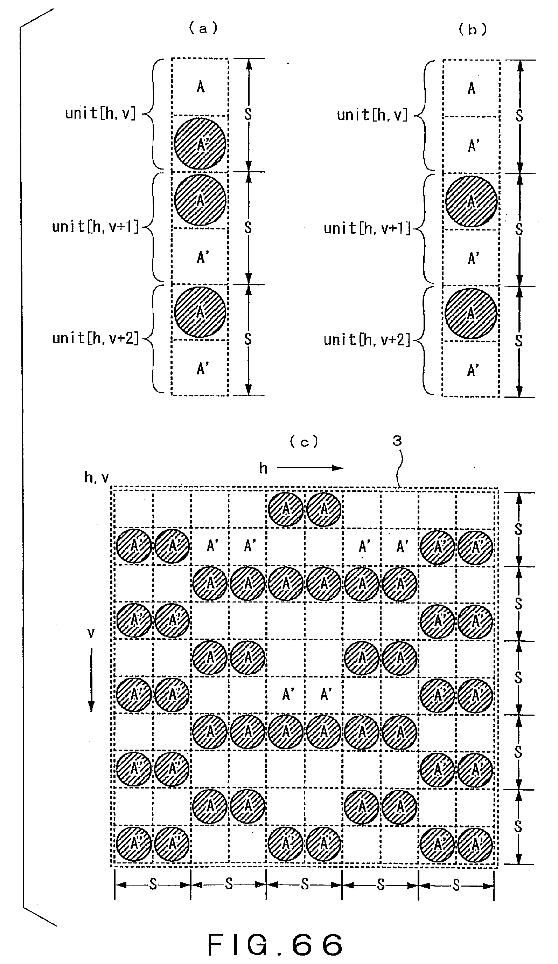

Next, if a condition that the unit [h,v] includes the object A'[h,v], and the unit [h,v+1] includes the object A[h,v+1] is satisfied in a process f2, the object A'[h,v] which should be arranged originally in the unit [h,v] is deleted in a process f3. More specifically, when the unit [h,v], unit [h,v+1], and unit [h,v+2] are arranged, and the object A'[h,v] of the unit [h,v] is adjacent to the object A[h,v+1] of the unit [h,v+1], as shown in Fig. 66(a), the object A'[h,v] of the unit [h,v] is deleted, as shown in Fig. 66(b). If the condition of the process f2 is not satisfied, the process advances to a process f4. Note that when the processes f2 and f3 are applied to the printed pattern 3 shown in Fig. 65(b), the printed pattern 3 shown in Fig. 66(c) is obtained. When the objects A' are partially deleted, the total area of the objects A' becomes smaller than that of the objects A.

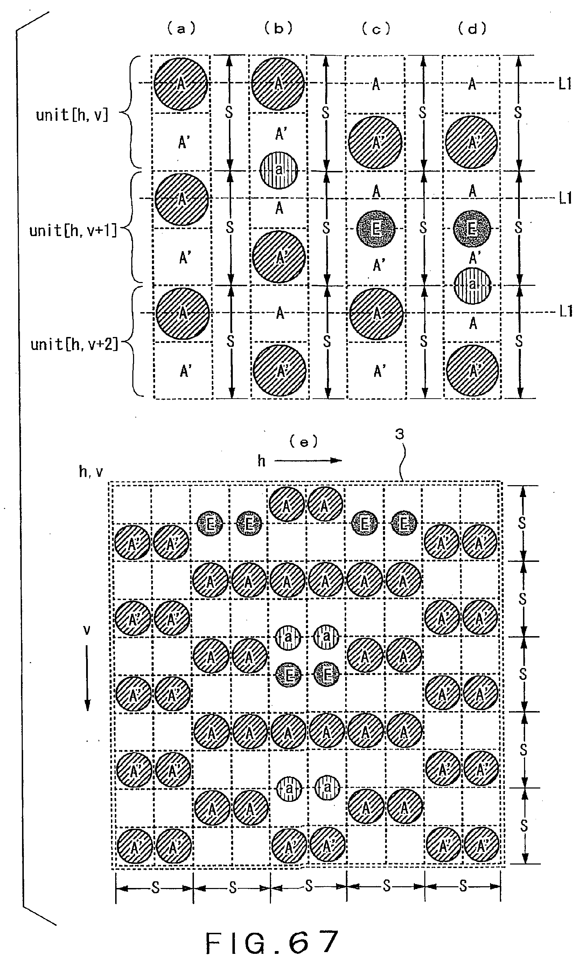

If a condition that the unit [h,v] includes the object A[h,v], and the unit [h,v+1] includes the object A'[h,v+1] is satisfied in the process f4, an object a is added between the unit [h,v] and the unit [h,v+1] in a process f5. More specifically, the object a having an object area 1/2 or almost 1/2 that of the object A or A' is added between the unit [h,v] and the unit [h,v+1], as shown in Fig. 67(b). This relaxes the density imbalance upon naked eye observation between the unit [h,v] and the unit [h,v+1].

If a condition that the unit [h,v] includes the object A'[h,v], the unit [h,v+1] includes no object, and the unit [h,v+2] includes the object A[h,v+2] is satisfied in a process f6, an object E is added at the center of the unit [h,v+1] in a process f7. More specifically, the object E having an object area 1/2 or almost 1/2 that of the object A or A' is added at the center of the unit [h,v+1], as shown in Fig. 67(c). This relaxes the density imbalance upon naked eye observation between the unit [h,v] and the unit [h,v+2].

If a condition that the unit [h,v] includes the object A'[h,v], the unit [h,v+1] includes no object, and the unit [h,v+2] includes the object A'[h,v+2] is satisfied in a process f8, the object E is added at the center of the unit [h,v+1], and the object a is added between the unit [h,v+1] and the unit [h,v+2] in a process f9. More specifically, the object E having an object area 1/2 or almost 1/2 that of the object A or A' is added at the center of the unit [h,v+1], and the object a having an object area 1/2 or almost 1/2 that of the object A or A' is added between the unit [h,v+1] and the unit [h,v+2], as shown in Fig. 67(d). This relaxes the density imbalance upon naked eye observation between the unit [h,v] and the unit [h,v+2]. Hence, when the processes f4 to f8 are applied to the printed pattern 3 shown in Fig. 65(b), the density imbalance upon naked eye observation is relaxed all over the printed pattern 3 shown in Fig. 67(e).

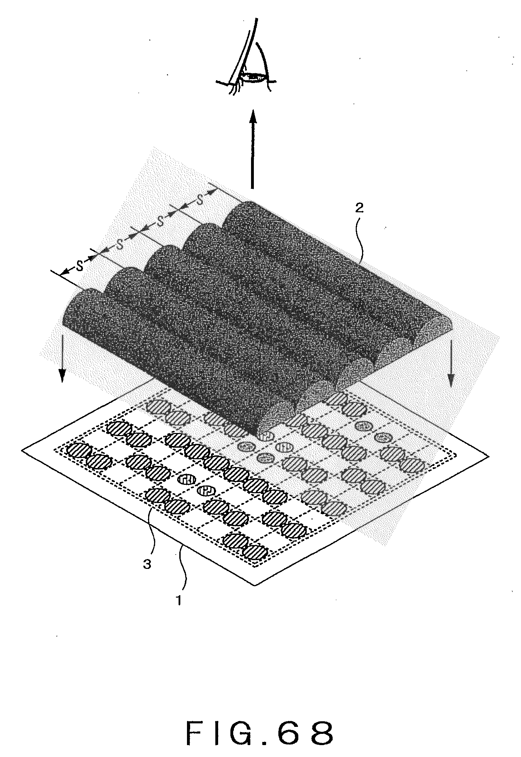

For example, as shown in Fig. 68, overlaying a discrimination tool 2 formed from a lenticular lens on the printed pattern 3 of a printed matter 1 in this state and visually observing the printed pattern from the front allow to visualize the invisible image formed on the printed pattern 3 as a visible image. Note that in the 10th embodiment, the length S is 340 µm, and the printed pattern 3 is printed on a coated paper sheet by offset printing. However, the length S, printed matter base material, printing method, printing material, and printing apparatus are not particularly limited.

The lenticular lens serving as a discrimination tool is placed at a predetermined position on the printed matter so as to make the center line of each lens element coincide with the center of the object A, i.e., a line L1 in Fig. 67. In this case, the objects A are magnified so that the image (pattern) constructed by the objects A can be identified. When the discrimination tool is moved in the vertical axis direction to magnify the objects A', the first invisible image visually recognized based on the objects A is visually recognized in a reversed negative/positive state.

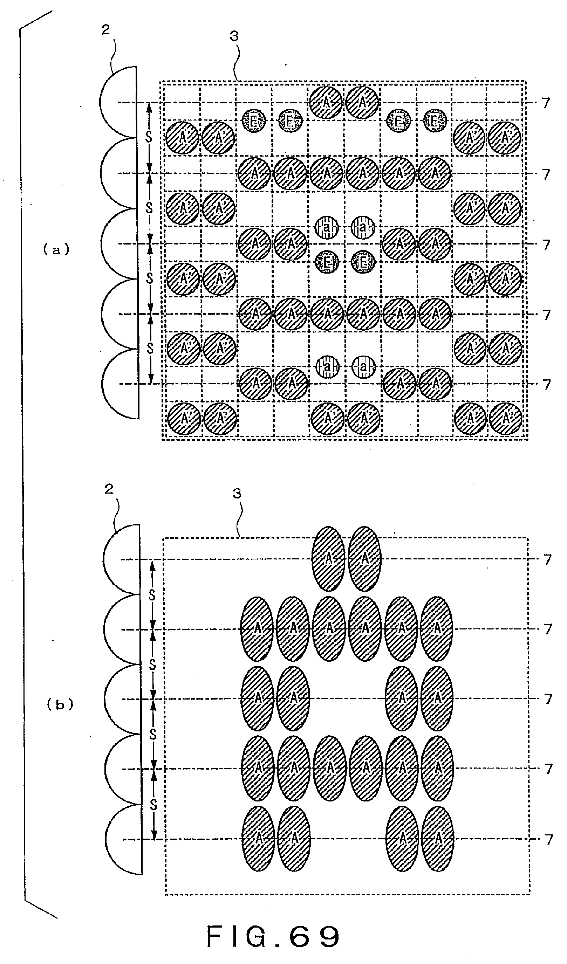

Fig. 69 shows a state in which the discrimination tool 2 formed from a lenticular lens is overlaid on the printed pattern 3 of the printed matter 1 at a predetermined angle and, more specifically, so as to make the center line of each lens element coincide with the line L1 in Fig. 62, and the printed pattern 3 is visually observed from the front. When each center line 7 of the lenticular lens exists at the position shown in Fig. 69(a) so as to coincide with the line L1 in Fig. 67, the objects A are located on the center lines 7. Since the objects A located on the center lines 7 look enlarged due to the characteristics of the lenticular lens, a visible image having the graphic pattern shown in Fig. 69(b) is visualized upon visual observation. The objects A and A' have the negative/positive relationship. Hence, the first invisible image is visualized as a negative or positive visible image.

The discrimination tool 2 need not always be the lenticular lens. The same effect can be obtained using, e.g., a parallel line filter. In the parallel line filter, portions corresponding to the parallel lines on the filter hide objects constructing the visible image so that only the objects constructing the invisible image can be identified. The filter may fail in completely hiding the visible image and allow to visually recognize it to some extent. However, this does not impair the effect of the present invention, and the parallel line filter suffices for simple discrimination. Note that this also applies to the 11th and 12th embodiments to be described later.

Each of the objects A, A', a and E of one object unit on the printed matter 1 according to the 10th embodiment has a circular shape. However, the shape is not limited to this, and various shapes such as a circle, square, hexagon, ellipse, rectangle, and rhombus are usable. In this case, the objects A, A', a, and E may have different shapes. The object shape is not particularly limited as far as the objects A and A' pair off in the on/off relationship, and each of the objects a and E has an object area 1/2 or almost 1/2 that of the objects A and A'.

According to the 10th embodiment, overlaying a single discrimination tool on the printed matter enables to easily and clearly visualize the invisible images formed from the objects A and A'. In addition, the cost can be reduced because only single color printing for printing the objects of the printed matter according to the 10th embodiment in the same color can provide a sufficient anti-counterfeit effect, and the reproduction and printing methods and the like are not particularly limited. Furthermore, the minimum width of the objects a and E is set to be equal to or more than the minimum object width that allows to maintain printed matter quality. This inevitably eliminates the instability factor of the printed matter quality.

### (11) 11th Embodiment

In the above-described ninth embodiment, upon visually observing the printed pattern 3 on the printed matter 1 under a normal condition, an invisible image formed from a graphic pattern and characters by line phase modulation or dot phase modulation is visually recognized. In the 11th embodiment, an anti-counterfeit printed matter will be described, which forms a more complex graphic pattern group to obtain a plurality of invisible images and a visible image in normal observation. The visible image is an image that is visually recognizable under normal visible light. The invisible image is an image that is not visually recognizable or is very hard to visually recognize under normal visible light.

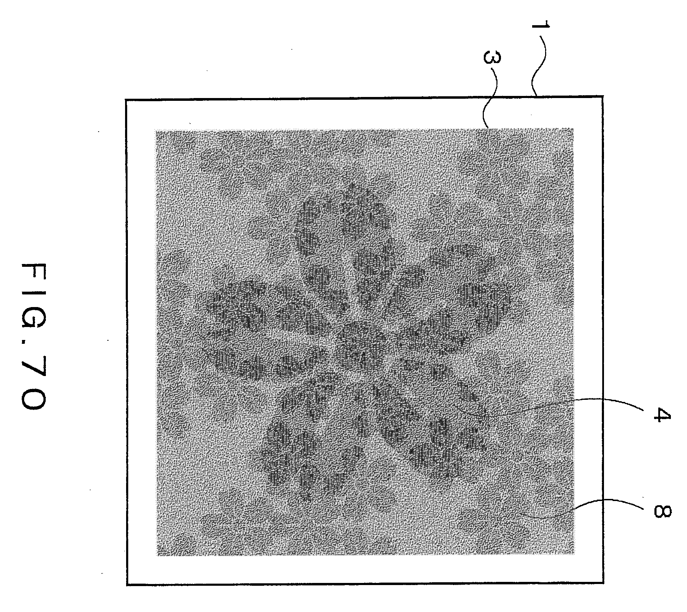

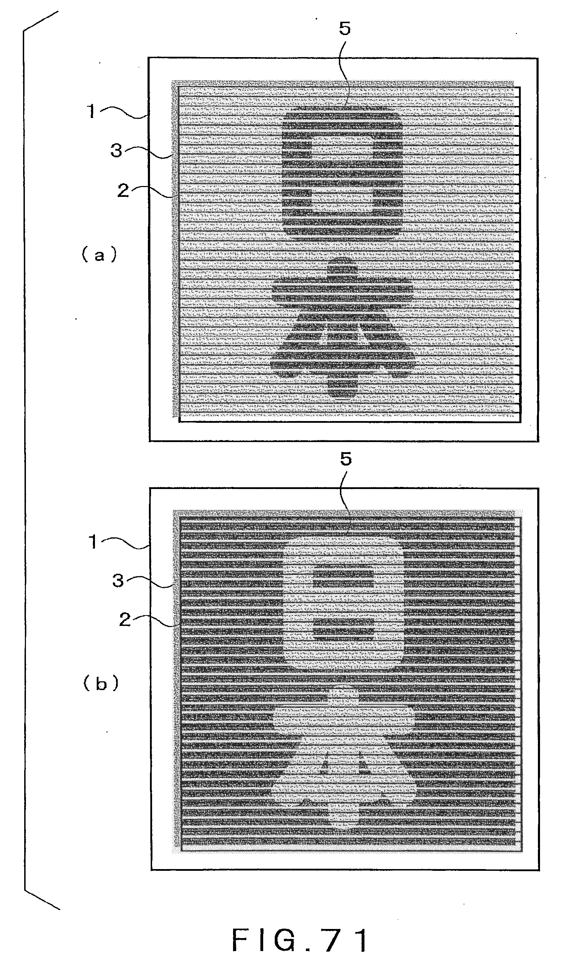

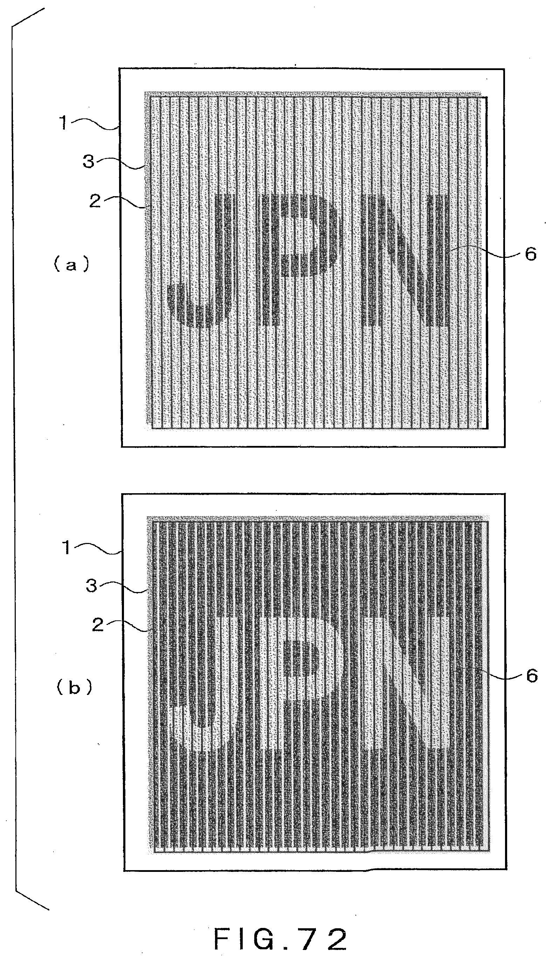

Upon visually observing a printed pattern 3 on a printed matter 1 under a normal visual condition, a pattern 4 formed from an arbitrary graphic pattern, characters, and the like and a pattern 8 formed from an arbitrary graphic pattern, characters, and the like are visually recognized, as shown in Fig. 70. The patterns 4 and 8 shown in Fig. 70 are superimposed. The arrangement is not limited to this, and various design expressions are employable. When a discrimination tool 2 is overlaid on the printed matter 1 at a predetermined angle (0°), a first invisible image 5 as shown in Fig. 71(a) or 71(b) is visualized as a visible image. When the discrimination tool 2 is overlaid on the printed matter 1 at 90° with respect to the predetermined angle, a second invisible image 6 as shown in Fig. 72(a) or 72(b) is visualized as a visible image. Each image is observed as a negative or positive image, as shown in Fig. 71(a) or 71(b) and Fig. 72(a) or 72(b), depending on the relative positional relationship between the discrimination tool 2 and the printed matter 1. This is incorporated within the range of the effects of the present invention.

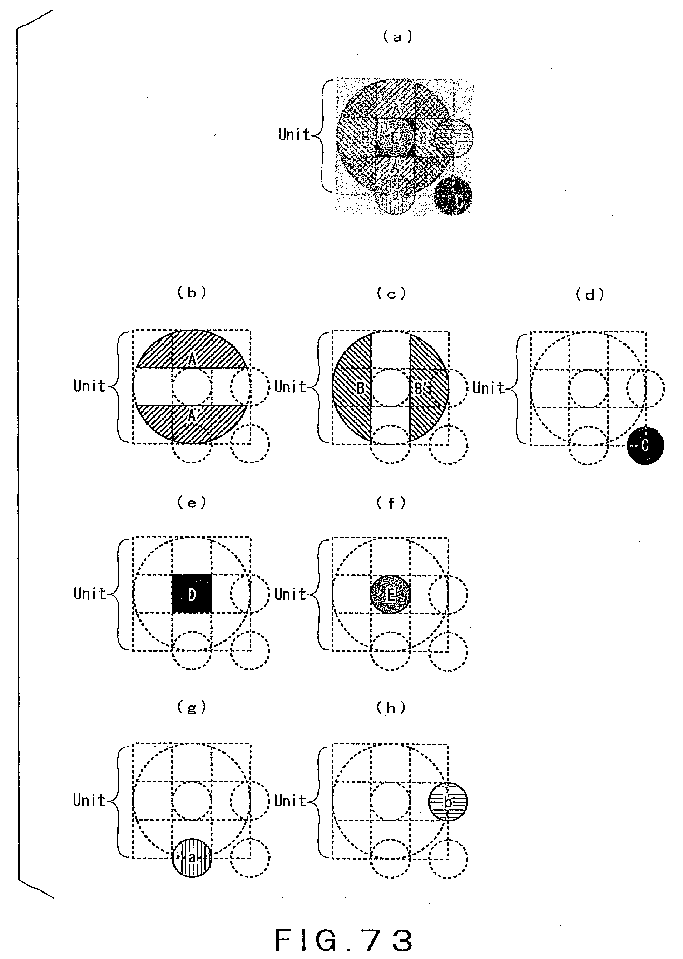

Fig. 73 shows enlarged views of the constituent elements of one object unit of a printed pattern on a printed matter according to the 11th embodiment. As shown in Fig. 73(a), the printed pattern 3 includes at least seven object elements. As shown in Fig. 73(b), objects A and A' pair off to form a first invisible image. The objects A and A' are arranged in a square to be vertically symmetrical with respect to the center. As shown in Fig. 73(c), objects B and B' pair off to form a second invisible image. The objects B and B' are arranged in a square to be vertically symmetrical with respect to the center. As shown in Fig. 73(d), objects C form a first visible image (design: pattern). The objects C construct the pattern 4 formed from an arbitrary graphic pattern and characters as shown in Fig. 70. The objects C are arranged while aligning their centers with the four corners of the square. As shown in Fig. 73(e), an object D forms a second visible image (design: pattern). The objects D construct the pattern 8 formed from an arbitrary graphic pattern and characters as shown in Fig. 70. The object D is arranged while aligning its center with the center of the square. An object E shown in Fig. 73(f), an object a shown in Fig. 73(g), and an object b shown in Fig. 73(h) are formed to relax the density imbalance upon naked eye observation. Addition of these objects will be described later in detail.

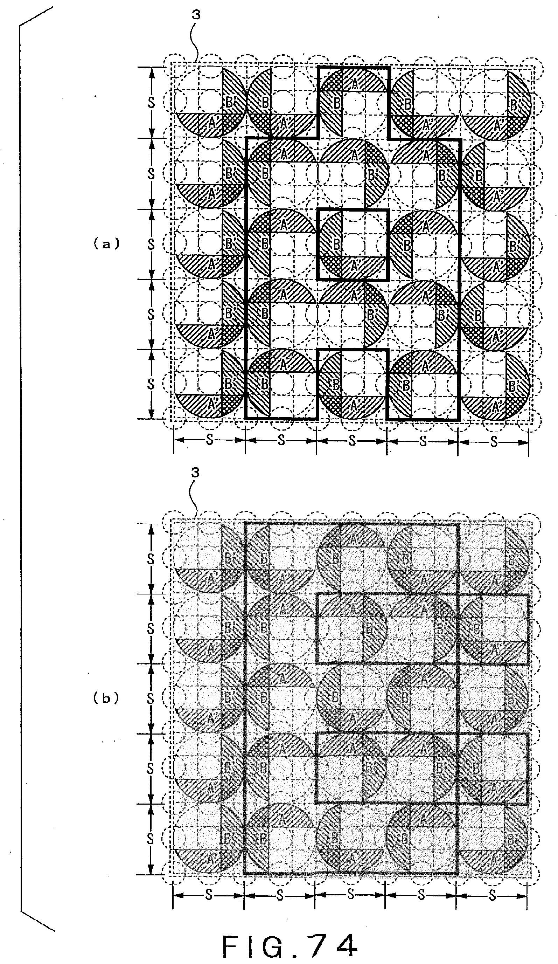

The objects having the above-described structure are continuously tightly arranged periodically in a matrix on the printed matter in the vertical and horizontal directions, as shown in Fig. 74. Fig. 74 is a view schematically illustrating the plurality of objects arranged in the number v of vertical steps and the number h of horizontal steps in a matrix to form the printed pattern 3 on the printed matter so as to clarify the composition of the invisible image indicated by bold solid lines. Figs. 74(a) and 74(b) explain the difference between the invisible images on the same printed pattern 3. Note that in the 11th embodiment, the number of steps indicates the number of units repeated on the printed pattern 3, as in the above-described ninth embodiment. The number of steps is not particularly limited. The number of steps is proportional to the resolution of a visible image or invisible image. The bold solid lines indicating the invisible image just explain the positions and are not visually recognized, as shown in Fig. 74, in fact. In the printed pattern 3, the total area of the objects A equals that of the objects A', and the total area of the objects B equals that of the objects B'. That is, Fig. 74 shows a state in which two types of invisible images shown in Figs. 74(a) and 74(b) are formed by dot phase modulation. In this state, however, upon observation by the naked eye, near a portion where a plurality of objects A, a plurality of objects A', a plurality of objects B, and a plurality of objects B' are arranged in a matrix, the density appears to be high. Additionally, at a blank portion where the objects are arranged in a matrix, the density appears to be low. That is, density imbalance may occur upon naked eye observation.

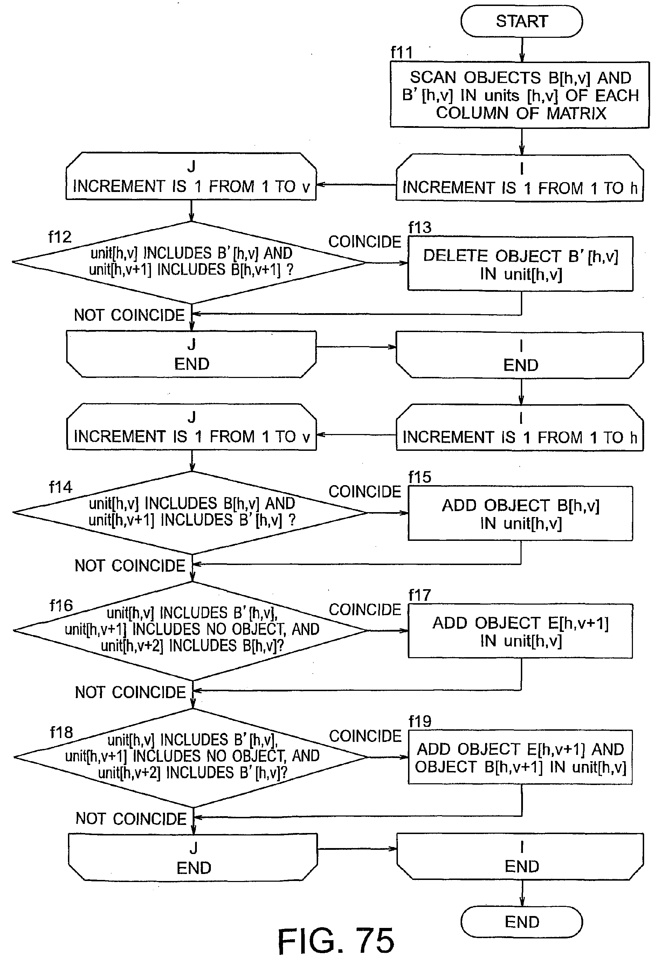

To relax the density imbalance, object deletion and addition are executed, for each unit [h,v] that is the minimum unit, using the algorithm for processing in the vertical direction shown in Fig. 60 and the algorithm for processing in the horizontal direction shown in Fig. 75. Note that [v] is the number of steps corresponding to the number of units counted vertically from the upper side, and [h] is the number of steps corresponding to the number of units counted horizontally from the left side. In a process f1, concerning the units [h,v] of each column of the matrix, the objects A[h,v], A'[h,v], B[h,v], and B'[h,v] are sequentially detected. Note that as for the method of detecting the objects A[h,v], A'[h,v], B[h,v], and B'[h,v], for example, if the printed pattern 3 is a binary image having the bitmap format, the object A[h,v] or A'[h,v] and the object B[h,v] or B'[h,v] may be identified and deleted in a process target unit by processing called labeling in general.

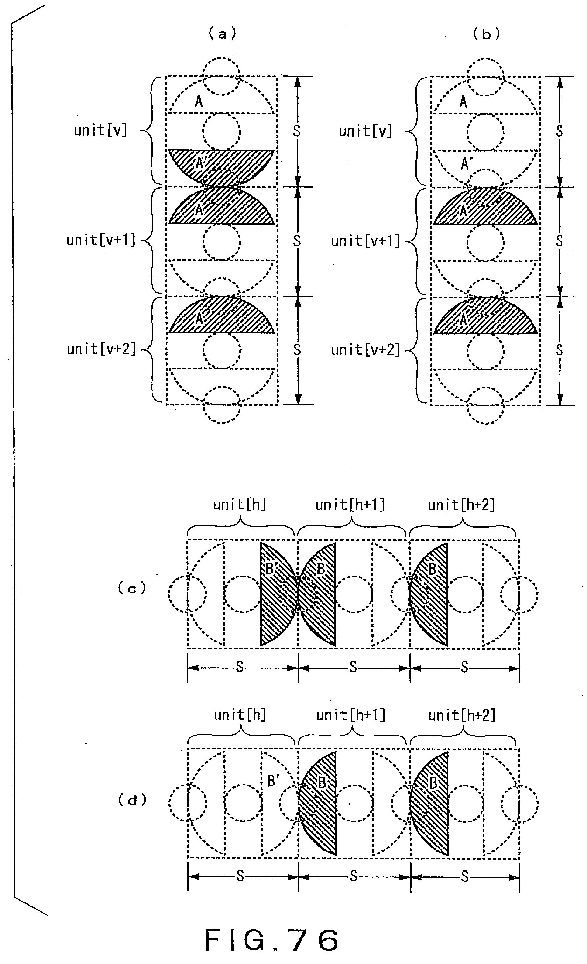

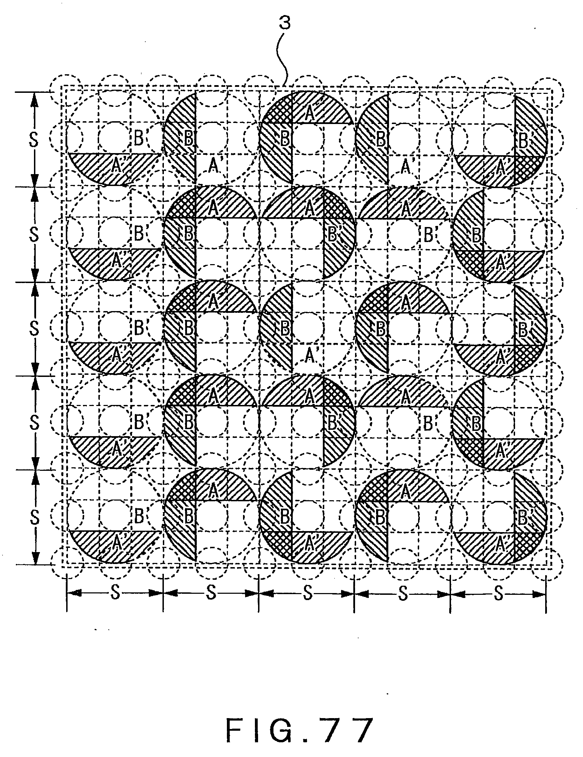

Next, if a condition that the unit [h,v] includes the object A'[h,v], and the unit [h,v+1] includes the object A[h,v+1] is satisfied in a process f2 shown in Fig. 60, the object A'[h,v] which should be arranged originally in the unit [h,v] is deleted in a process f3. More specifically, when the unit [h,v], unit [h,v+1], and unit [h,v+2] are arranged, and the object A'[h,v] of the unit [h,v] is adjacent to the object A[h,v+1] of the unit [h,v+1], as shown in Fig. 76(a), the object A'[h,v] of the unit [h,v] is deleted, as shown in Fig. 76(b). If the condition of the process f2 is not satisfied, the process advances to a process f4. On the other hand, if a condition that the unit [h,v] includes the object B'[h,v], and the unit [h+1,v] includes the object B[h+1,v] is satisfied in a process f12 shown in Fig. 75, the object B'[h,v] which should be arranged originally in the unit [h,v] is deleted in a process f13. More specifically, when the unit [h,v], unit [h+1,v], and unit [h+2,v] are arranged, and the object B'[h,v] of the unit [h,v] is adjacent to the object B[h+1,v] of the unit [h+1,v], as shown in Fig. 76(c), the object B'[h,v] of the unit [h,v] is deleted, as shown in Fig. 76(d). If the condition of the process f12 is not satisfied, the process advances to a process f14. Note that when the processes f12 and f13 are applied to the printed pattern 3 shown in Fig. 74, the printed pattern 3 shown in Fig. 77 is obtained. When the objects A' and B' are partially deleted, the total area of the objects A' becomes smaller than that of the objects A, and the total area of the objects B' becomes smaller than that of the objects B.

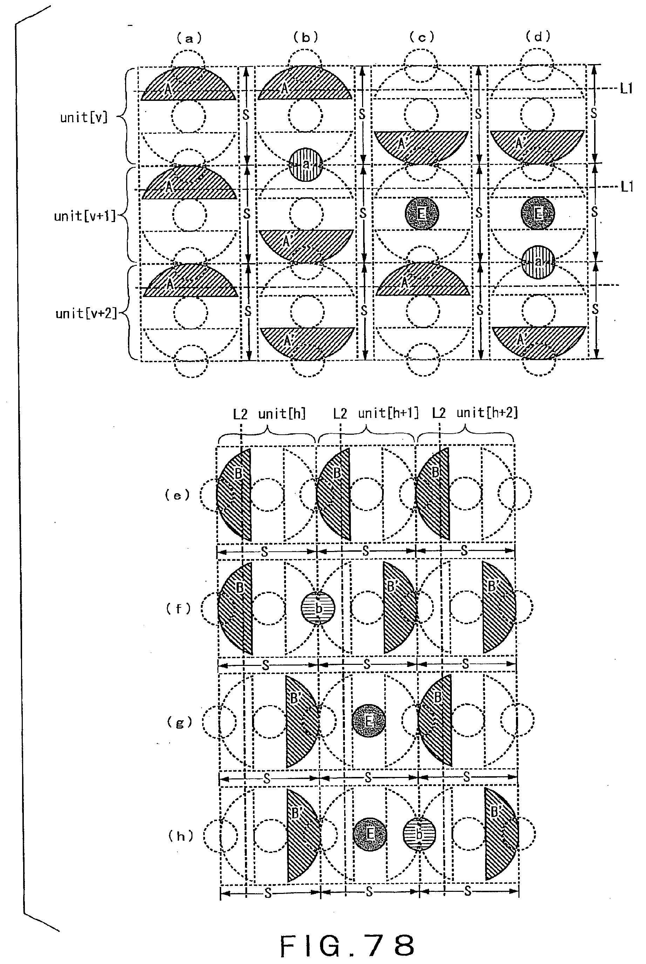

If a condition that the unit [h,v] includes the object A[h,v], and the unit [h,v+1] includes the object A'[h,v+1] is satisfied in the process f4 shown in Fig. 60, the object a is added between the unit [h,v] and the unit [h,v+1] in a process f5. More specifically, the object a having an object area 1/2 or almost 1/2 that of the object A or A' is added between the unit [h,v] and the unit [h,v+1], as shown in Fig. 78(b). This relaxes the density imbalance upon naked eye observation between the unit [h,v] and the unit [h,v+1]. On the other hand, if a condition that the unit [h,v] includes the object B[h,v], and the unit [h+1,v] includes the object B'[h+1,v] is satisfied in the process f14 shown in Fig. 75, the object b is added between the unit [h,v] and the unit [h+1,v] in a process f15. More specifically, the object b having an object area 1/2 or almost 1/2 that of the object B or B' is added between the unit [h,v] and the unit [h+1,v], as shown in Fig. 78(f). This relaxes the density imbalance upon naked eye observation between the unit [h,v] and the unit [h+1,v].

If a condition that the unit [h,v] includes the object A'[h,v], the unit [h,v+1] includes no object, and the unit [h,v+2] includes the object A[h,v+2] is satisfied in a process f6 shown in Fig. 60, the object E is added at the center of the unit [h,v+1] in a process f7. More specifically, the object E having an object area 1/2 or almost 1/2 that of the object A or A' is added at the center of the unit [h,v+1], as shown in Fig. 78(c). This relaxes the density imbalance upon naked eye observation between the unit [h,v] and the unit [h,v+2]. On the other hand, if a condition that the unit [h,v] includes the object B'[h,v], the unit [h+1,v] includes no object, and the unit [h,v+2] includes the object B[h,v] is satisfied in a process f16 shown in Fig. 75, the object E is added to the unit [h+1,v] in a process f17. More specifically, the object E having an object area 1/2 or almost 1/2 that of the object B or B' is added at the center of the unit [h+1,v], as shown in Fig. 78(g). This relaxes the density imbalance upon naked eye observation between the unit [h,v] and the unit [h+1,v].

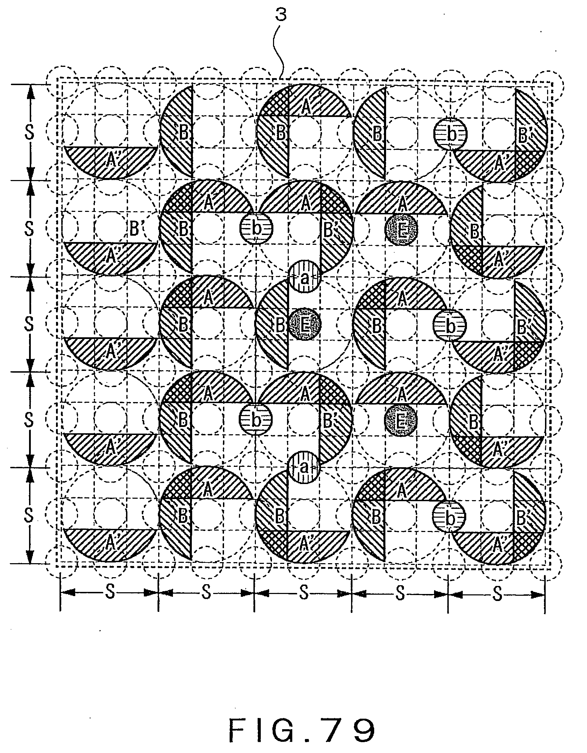

If a condition that the unit [h,v] includes the object A'[h,v], the unit [h,v+1] includes no object, and the unit [h,v+2] includes the object A'[h,v+2] is satisfied in a process f8 shown in Fig. 60, the object E is added to the unit [h,v+1], and the object a is added between the unit [h,v+1] and the unit [h,v+2] in a process f9. More specifically, the object E having an object area 1/2 or almost 1/2 that of the object A or A' is added at the center of the unit [h,v+1], as shown in Fig. 78(d). This relaxes the density imbalance upon naked eye observation between the unit [h,v] and the unit [h,v+2]. On the other hand, if a condition that the unit [h,v] includes the object B'[h+2,v], the unit [h,v+1] includes no object, and the unit [h+2,v] includes the object B'[h+2,v] is satisfied in a process f18 shown in Fig. 75, the object E is added to the unit [h+1,v], and the object b is added between the unit [h+1,v] and the unit [h+2,v] in a process f19. More specifically, the object E having an object area 1/2 or almost 1/2 that of the object B or B' is added at the center of the unit [h+1,v], and the object b having an object area 1/2 or almost 1/2 that of the object B or B' is added between the unit [h+1,v] and the unit [h+2,v], as shown in Fig. 78(h). This relaxes the density imbalance upon naked eye observation between the unit [h,v] and the unit [h+2,v]. Hence, when the processes f4 to f9 in Fig. 60 and the processes f14 to F19 in Fig. 75 are applied to the printed pattern 3 shown in Fig. 65(b), the density imbalance upon naked eye observation is relaxed all over the printed pattern 3 shown in Fig. 79.

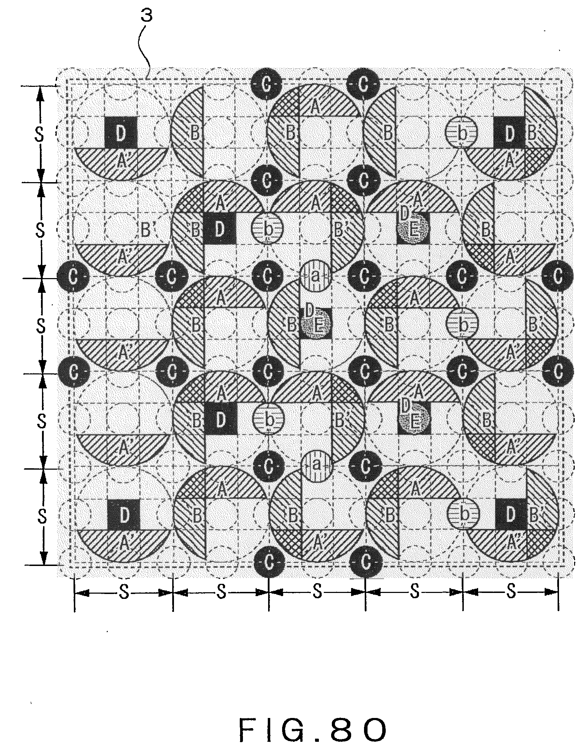

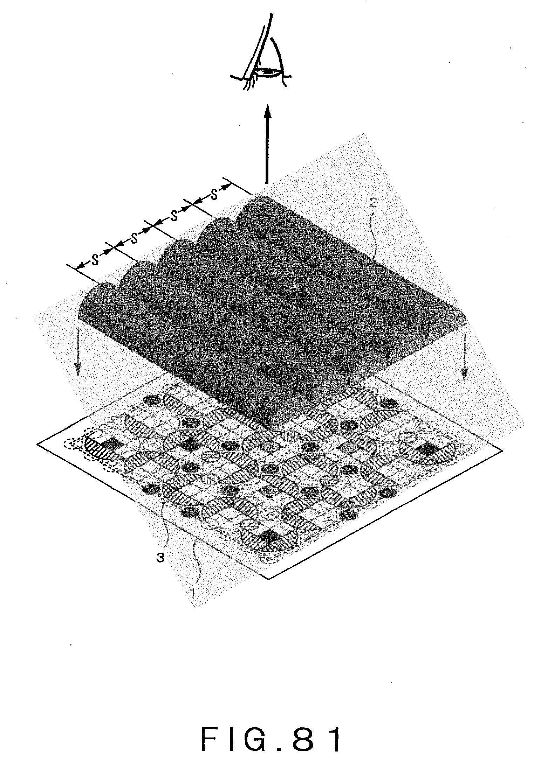

As shown in Fig. 80, objects C and D are arranged. The objects C form a first visible image (design: pattern) so as to serve as objects that construct the pattern 4 formed from an arbitrary graphic pattern and characters as shown in Fig. 70. The objects D form a second visible image (design: pattern) so as to serve as objects that construct the pattern 8 formed from an arbitrary graphic pattern and characters as shown in Fig. 70. For example, as shown in Fig. 81, overlaying the discrimination tool 2 formed from a lenticular lens on the printed pattern 3 of the printed matter 1 in this state and visually observing the printed pattern from the front allow to visualize the invisible image formed on the printed pattern 3 as a visible image. Note that in the 11th embodiment, a length S is 340 µm, and the printed pattern 3 is printed on a coated paper sheet by offset printing. However, the length S, printed matter base material, printing method, printing material, and printing apparatus are not particularly limited.

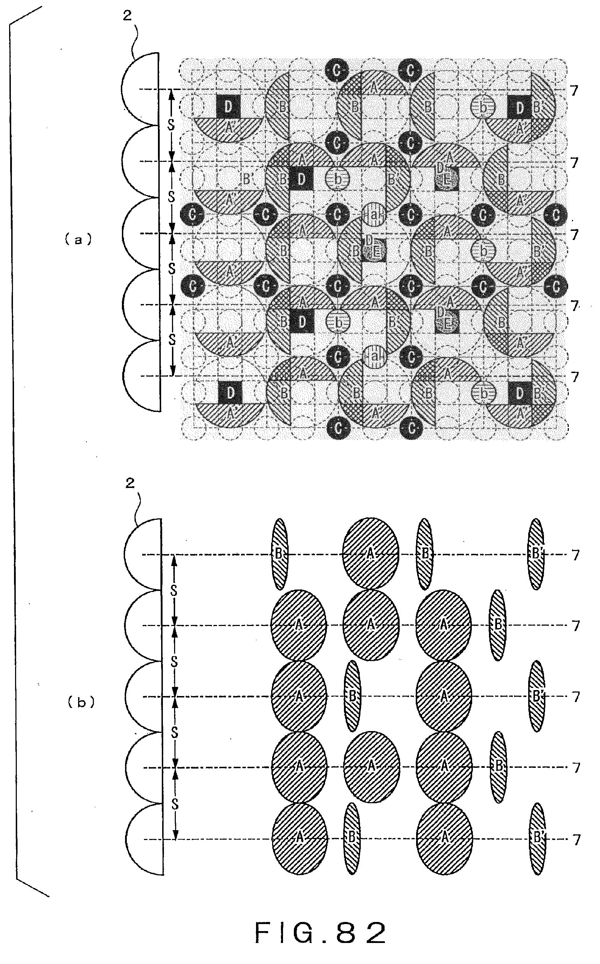

Fig. 82 shows a state in which the discrimination tool 2 formed from a lenticular lens is overlaid on the printed pattern 3 of the printed matter 1 so as to make a center line 7 of each lens element of the lenticular lens coincide with a line L1 in Fig. 78, and the printed pattern 3 is visually observed from the front. In this case, each center line 7 of the lenticular lens exists at the position shown in Fig. 82(a), and the objects A, B, and B' are located on the center lines 7. Since the objects A, B, and B' located on the center lines 7 look enlarged due to the characteristics of the lenticular lens, a visible image having the graphic pattern shown in Fig. 82(b) is visualized upon visual observation. Since the tangents of the objects B and B' to the center lines 7 are less than those of the objects A, the image formed from these objects is hard to visually recognize. For this reason, only the first invisible image formed from the objects A is visually recognized.

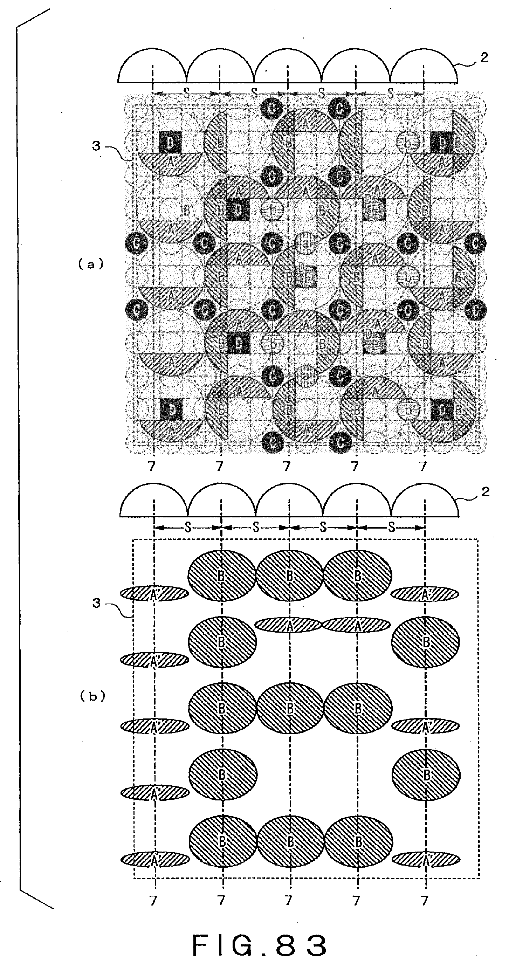

Fig. 83 shows a state in which the discrimination tool 2 formed from a lenticular lens is overlaid on the printed pattern 3 of the printed matter 1 so as to make the center line 7 of each lens element of the lenticular lens coincide with a line L2 in Fig. 78, and the pattern 3 of the printed matter 1 is visually observed from the front. In this case, each center line 7 of the lenticular lens exists at the position shown in Fig. 83(a), and the objects B, A, and A' are located on the center lines 7. Since the objects B, A, and A' located on the center lines 7 look enlarged due to the characteristics of the lenticular lens, a visible image having the graphic pattern shown in Fig. 83(b) is visualized upon visual observation. Since the tangents of the objects A and A' to the center lines 7 are less than those of the objects B, the image formed from these objects is hard to visually recognize. For this reason, only the second invisible image formed from the objects B is visually recognized.

In the 11th embodiment, a lenticular lens is used as the discrimination tool. However, as in the above-described ninth embodiment, the same effect can be obtained using, e.g., a parallel line filter. In observation using the lenticular lens, the objects a, b, C, D, and E are rarely visually recognized. Hence, the visible image does not impede the visibility of the first and second invisible images visualized as visible images.

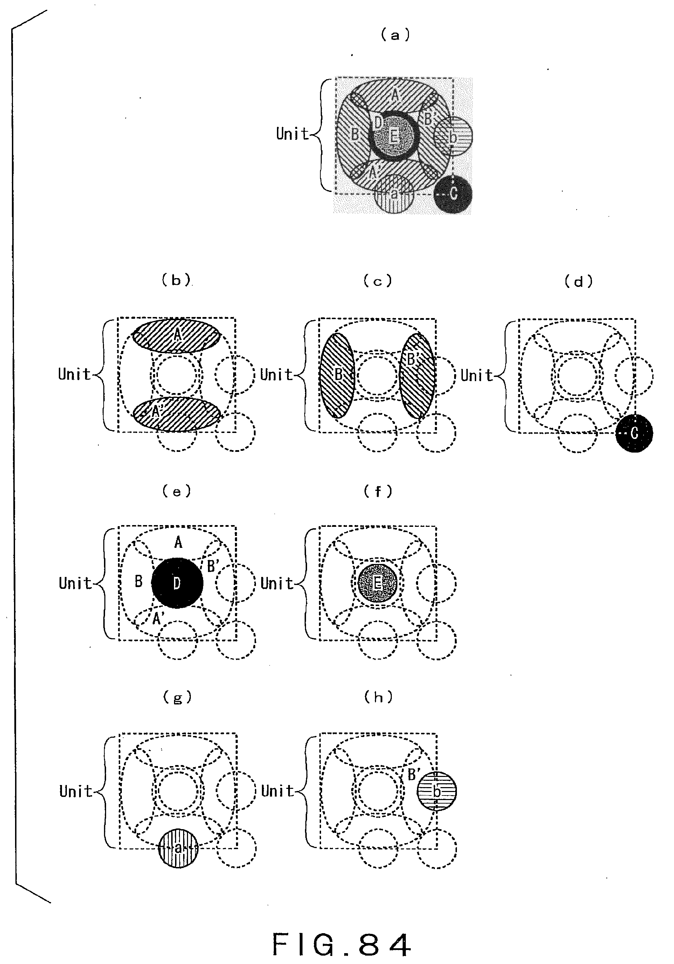

Each object of the printed pattern 3 on the printed matter 1 according to the 11th embodiment need not always have the circular shape shown in Fig. 73 but may have an elliptical shape as shown in Fig. 84. The printed pattern 3 includes at least seven object elements, as shown in Fig. 84(a). As shown in Fig. 84(b), the objects A and A' pair off to form the first invisible image, and are arranged in the square to be vertically symmetrical with respect to the center. As shown in Fig. 84(c), the objects B and B' pair off to form the second invisible image, and are arranged in the square to be bilaterally symmetrical with respect to the center. As shown in Fig. 84(d), the objects C form the first visible image (design: pattern) so as to serve as objects that construct the pattern 4 formed from an arbitrary graphic pattern and characters as shown in Fig. 70. Each object C is arranged in a corresponding one of the four corners of the square while aligning the centers of the objects with the corners. As shown in Fig. 84(e), the objects D form the second visible image (design: pattern) so as to serve as objects that construct the pattern 8 formed from an arbitrary graphic pattern and characters as shown in Fig. 70. Each object D is arranged while aligning its center with the center of the square. The object E shown in Fig. 84(f), the object a shown in Fig. 84(g), and the object b shown in Fig. 84(h) are formed to relax the density imbalance upon naked eye observation. The shape of each object is not limited as far as they have the above-described structure.

The 11th embodiment is useful for printed matters such as securities because it is possible to form clear visible images each having a design and high degree of freedom using the objects C and D without impeding the visibility of a visualized invisible image. In addition, overlaying a single discrimination tool on the printed matter enables to easily and clearly visualize the invisible image formed from the objects A and A'. Furthermore, the cost can be reduced because only single color printing for printing the objects of the printed matter according to the 11th embodiment in the same color can provide a sufficient anti-counterfeit effect, and the reproduction and printing methods and the like are not particularly limited. Furthermore, the minimum width of the objects a, b, and E is set to be equal to or more than the minimum object width that allows to maintain printed matter quality. This inevitably eliminates the instability factor of the printed matter quality.

### (12) 12th Embodiment

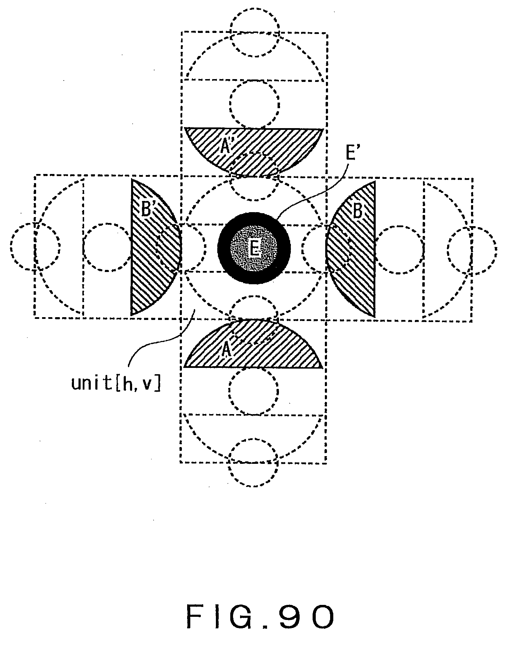

In the above-described 11th embodiment, the printed pattern 3 of the printed matter 1 includes two types of invisible images, i.e., first and second invisible images. When forming the first and second invisible images, an object A or A' and an object B or B' may completely be lost in a printed pattern 3, as in a unit [h,v] shown in Fig. 90. In such a case, an object E having almost the same object area as that of the objects A and A' or the objects B and B' is preferably added at the center of the unit [h,v], as in the 12th embodiment. This further relaxes the density imbalance upon naked eye observation.

### (13) 13th Embodiment

In each of the ninth to 12th embodiments, an anti-counterfeit printed matter having at least one type of invisible image visually recognizable using a discrimination tool such as a lenticular lens has been described. As an anti-counterfeit printed matter according to the 13th embodiment, an example will be described in which an invisible image visually recognizable without using any discrimination tool is formed in addition to at least one type of invisible image visually recognizable using a discrimination tool such as a lenticular lens.

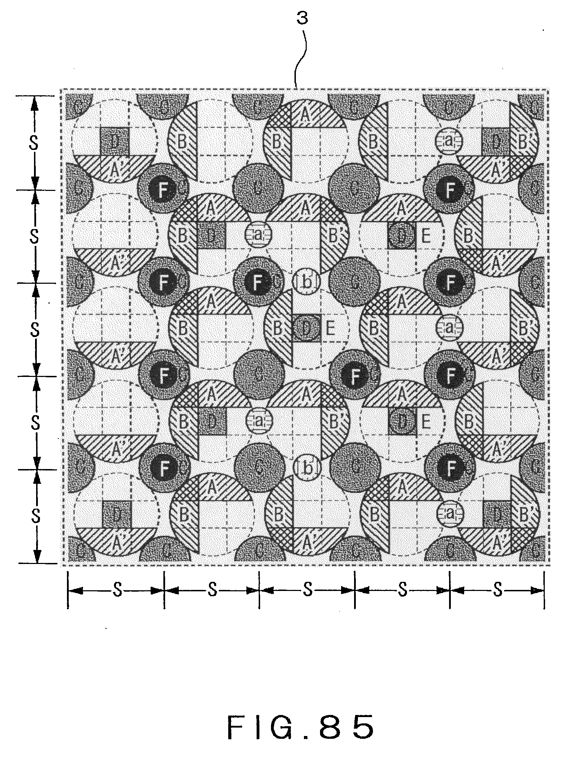

Fig. 85 shows an object arrangement according to the 13th embodiment. The basic object arrangement is the same as in Fig. 80. Objects A, A', a, B, B', b, C, D, and E shown in Fig. 85 construct a printed pattern 3 by ink containing a luminescent material such as silver ink with metallic luster. Objects F are printed on the objects C of the printed pattern 3 using an arbitrary color ink such as light purple ink. The objects F construct an image that appears depending on the printed matter observation condition, apart from the first visible image constructed by the objects C and the second visible image constructed by the objects D. In the 13th embodiment, the objects F are arranged to construct a character "N". The object area of the object C in the 13th embodiment is equal to or larger than that of the object F. Note that the luminescent material and the color ink of the 13th embodiment are not particularly limited.

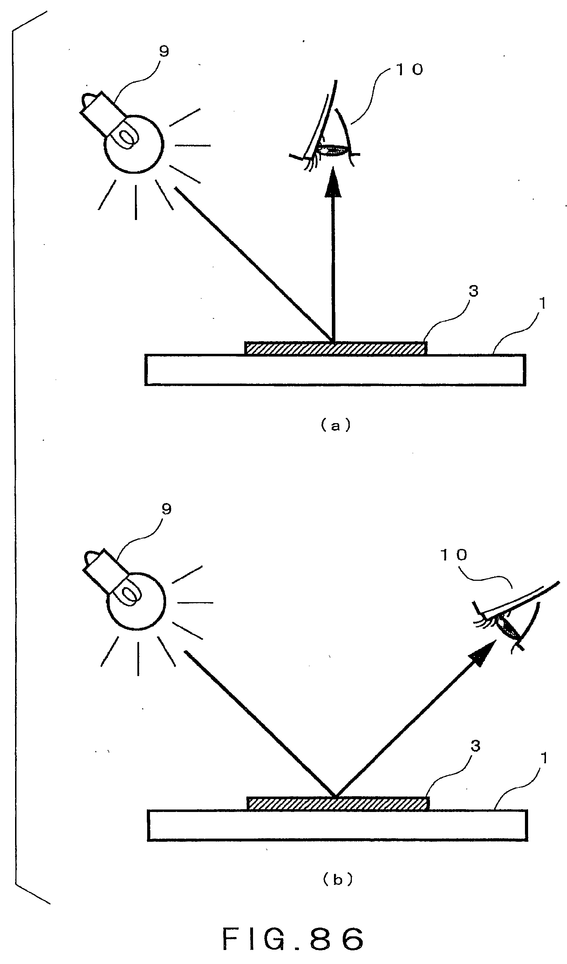

Fig. 86 shows the positional relationship between an illumination light source 9, an eyepoint 10, and a printed matter 1 upon observing the printed matter 1 having the printed pattern 3 according to the 13th embodiment in the diffused light region and the specular reflected light region. Observation in the diffused light region is done when the illumination light source 9, eyepoint 10, and printed matter 1 have the positional relationship shown in Fig. 86(a). Observation in the specular reflected light region is done when the illumination light source 9, eyepoint 10, and printed matter 1 have the positional relationship shown in Fig. 86(b).

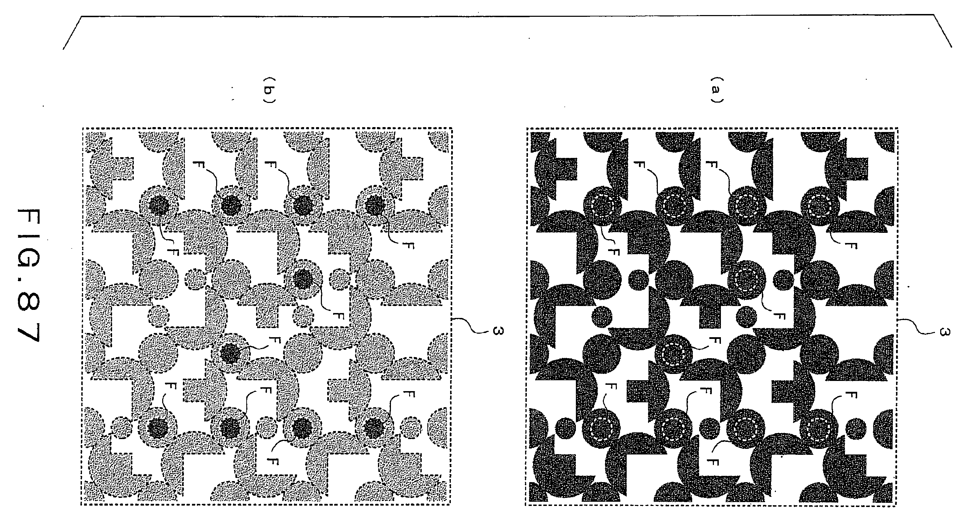

When the printed matter 1 is visually observed in the diffused light region, as shown in Fig. 86(a), the light purple objects F formed on the printed pattern 3 are hard to visually recognize, and two types of visible images constructed by the objects C and D made of silver ink can mainly be recognized visually, as shown in Fig. 87(a). On the other hand, when the printed matter 1 is visually observed in the specular reflected light region, as shown in Fig. 86(b), the brightness of the objects A, A', a, B, B', b, C, D, and E made of silver ink rises due to the luminescent action caused by the specular reflected light, and only the objects F made of light purple ink without the luminescent action are enhanced and visually recognized, as shown in Fig. 87(b). Hence, the character "N" constructed by arranging the objects F is observed.

### (14) 14th Embodiment

In the 14th embodiment, an example will be described in which an invisible image visually recognizable without using any discrimination tool is formed in addition to at least one type of invisible image visually recognizable using a discrimination tool such as a lenticular lens, as in the 13th embodiment.

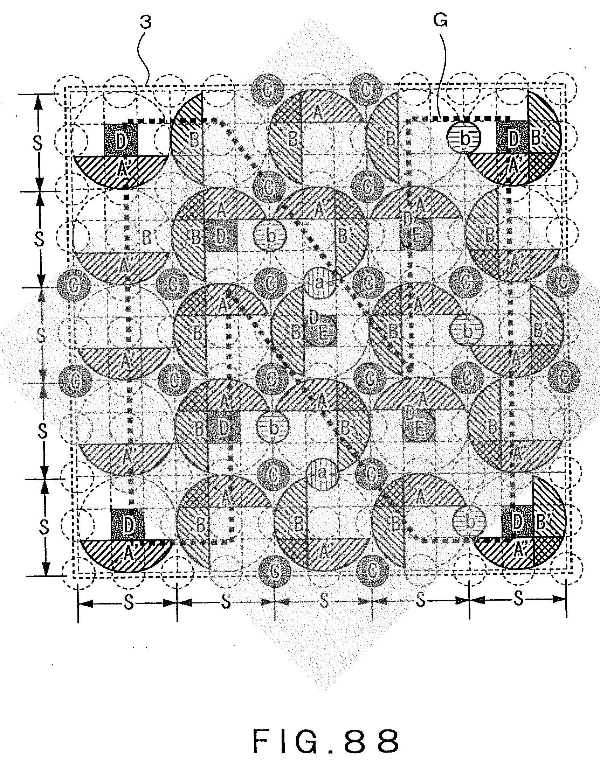

Fig. 88 shows an object arrangement according to the 14th embodiment. The basic object arrangement is the same as in Fig. 80. Objects A, A', a, B, B', b, C, D, and E shown in Fig. 88 construct a printed pattern 3 by ink containing a luminescent material such as silver ink with metallic luster. A pattern G made of a colorless transparent material such as a transparent varnish is printed on the printed pattern 3. The pattern G has no special positional relationship to the arrangement of the objects A, A', a, B, B', b, C, D, and E. In the 14th embodiment, the pattern G is arranged to construct a character "N". Note that the luminescent material and the colorless transparent material of the 14th embodiment are not particularly limited.

Fig. 86 shows the positional relationship between an illumination light source 9, an eyepoint 10, and a printed matter 1 upon observing the printed matter 1 having the printed pattern 3 according to the 14th embodiment in the diffused light region and the specular reflected light region. Observation in the diffused light region is done when the illumination light source 9, eyepoint 10, and printed matter 1 have the positional relationship shown in Fig. 86(a). Observation in the specular reflected light region is done when the illumination light source 9, eyepoint 10, and printed matter 1 have the positional relationship shown in Fig. 86(b).

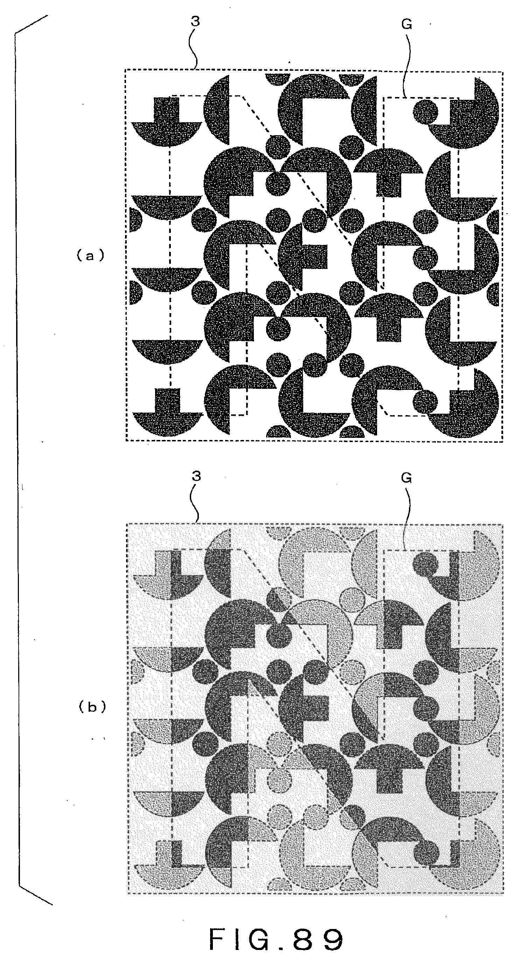

When the printed matter 1 is visually observed in the diffused light region, as shown in Fig. 86(a), the pattern G formed on the printed pattern 3 using the colorless transparent material is completely transparent, and two types of visible images constructed by the objects C and D made of silver ink can mainly be recognized visually, as shown in Fig. 89(a). On the other hand, when the printed matter 1 is visually observed in the specular reflected light region, as shown in Fig. 86(b), the brightness of the objects A, A', a, B, B', b, C, D, and E made of silver ink rises due to the luminescent action caused by the specular reflected light, but the luminescent action of the objects A, A', a, B, B', b, C, D, and E is suppressed in the portion of the pattern G made of the colorless transparent material, as shown in Fig. 89(b). Only the pattern G is thus enhanced and visually recognized due to the difference in luminescence. Hence, the character "N" constructed by arranging the pattern G is observed.

### (15) 15th Embodiment

In the 15th embodiment, one type of invisible image and a visible image are formed.

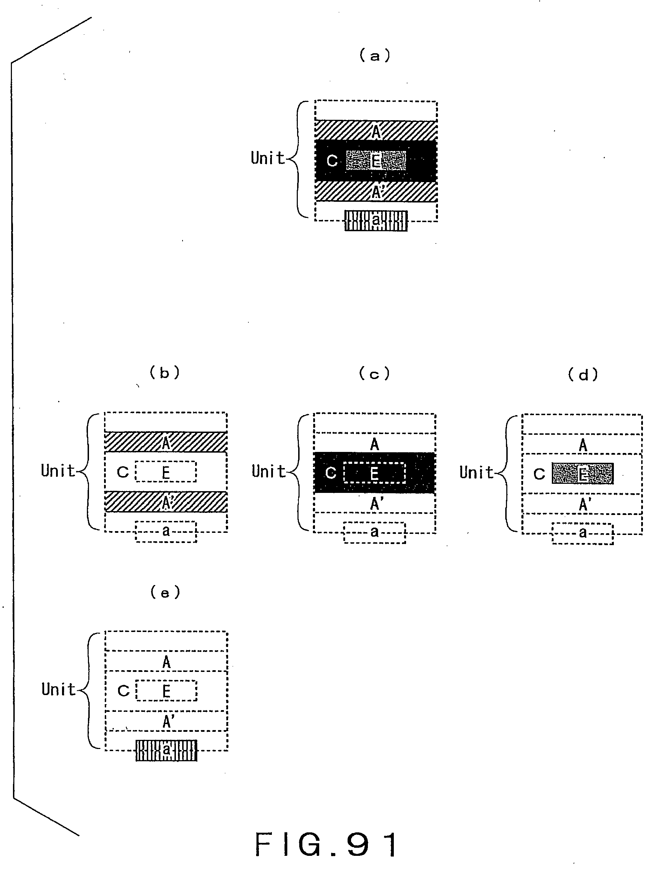

As shown in Fig. 91(a), a printed pattern 3 includes at least four object elements. As shown in Fig. 91(b), objects A and A' pair off to form a first invisible image. The objects A and A' are arranged in a square to be vertically symmetrical with respect to the center. As shown in Fig. 91(c), an object C has an area equal to or larger than that of the objects A and A' and forms a visible image (design: pattern) so as to serve as objects that construct a pattern 4 formed from an arbitrary graphic pattern and characters as shown in Fig. 70. The object C is arranged while aligning its center almost with the center of the square. An object E shown in Fig. 91(d) and an object a shown in Fig. 91(e) are formed to relax the density imbalance upon naked eye observation. The shape of each object is not limited as far as they have the above-described structure. Note that the objects C and E share the position but do not influence the effect of the present invention.

According to the above-described ninth to 15th embodiments, it is possible to form a visible image by the fifth objects, and realize an upscale-looking beautiful design formed from the visible image and having a high degree of freedom unique to securities.

The beautiful visible image having the design and formed on the printed pattern never impedes visibility of a visualized invisible image. When a discrimination tool is overlaid on the printed matter, the invisible image is easily and clearly visualized.

Since the object structure can provide the anti-counterfeit effect only by single color printing, cost performance is high. Since the reproduction and printing methods are not particularly limited, the printing scheme also has the degree of freedom.

### (16) 16th Embodiment

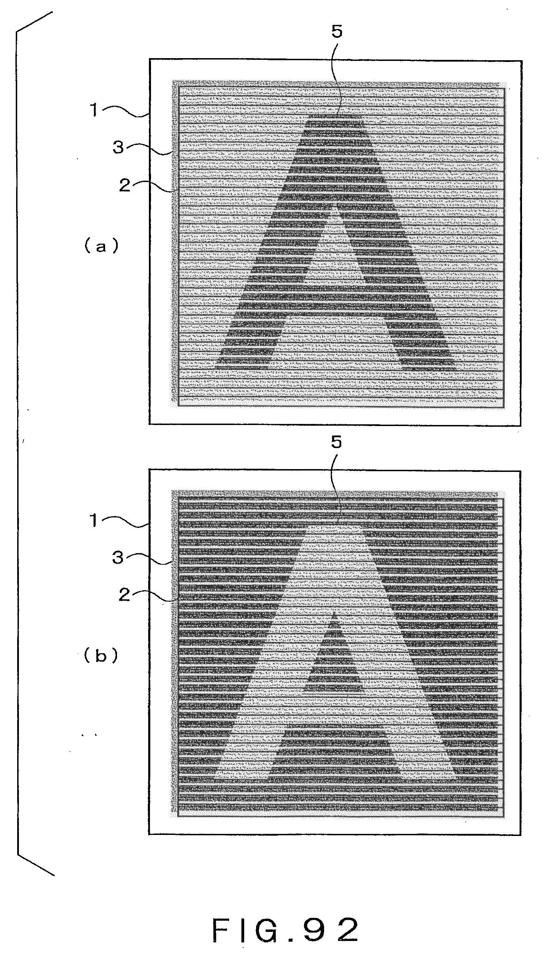

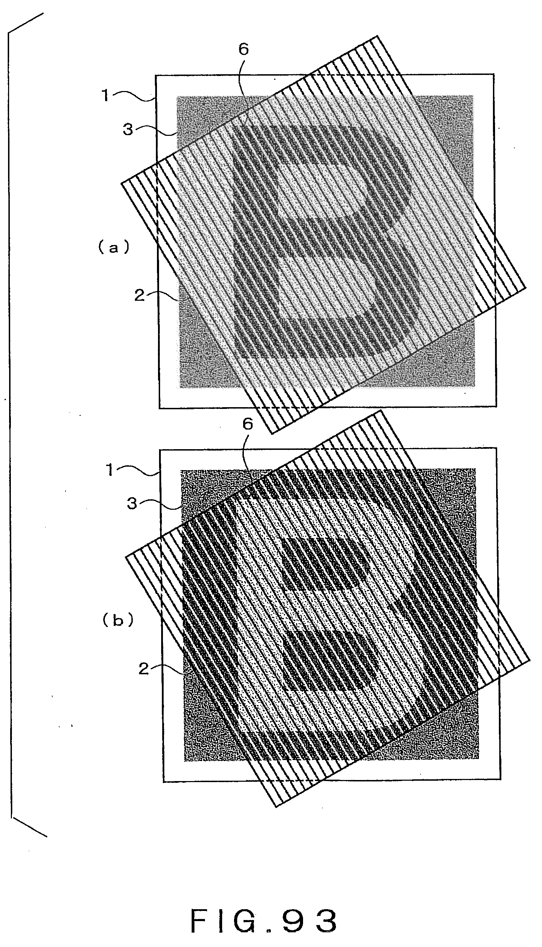

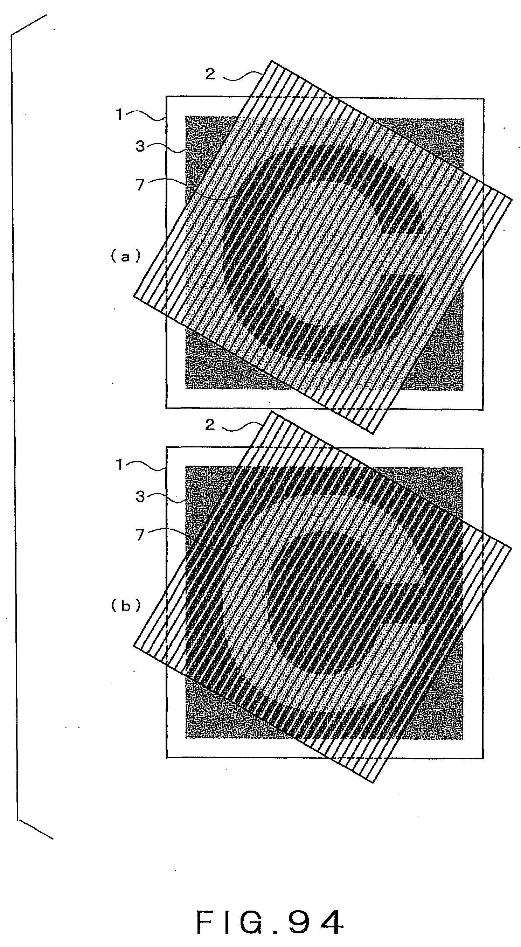

In the 16th to 22nd embodiments to be explained below, when a discrimination tool 2 is overlaid on a printed matter 1 at a predetermined angle (0°), a first invisible image 5 as shown in Fig. 92(a) or 92(b) appears as a visible image. When the discrimination tool 2 is overlaid on the printed matter 1 at 120° with respect to the predetermined angle, a second invisible image 6 as shown in Fig. 93(a) or 93(b) appears as a visible image. When the discrimination tool 2 is overlaid on the printed matter 1 at 60° with respect to the predetermined angle, a third invisible image 7 as shown in Fig. 94(a) or 94(b) appears as a visible image. Each image is observed as a negative or positive image, as shown in Fig. 92(a) or 92(b), 93(a) or 93(b), or 94(a) or 94(b), depending on the relative positional relationship between the discrimination tool 2 and the printed matter 1. This is incorporated within the range of the effects of the present invention.

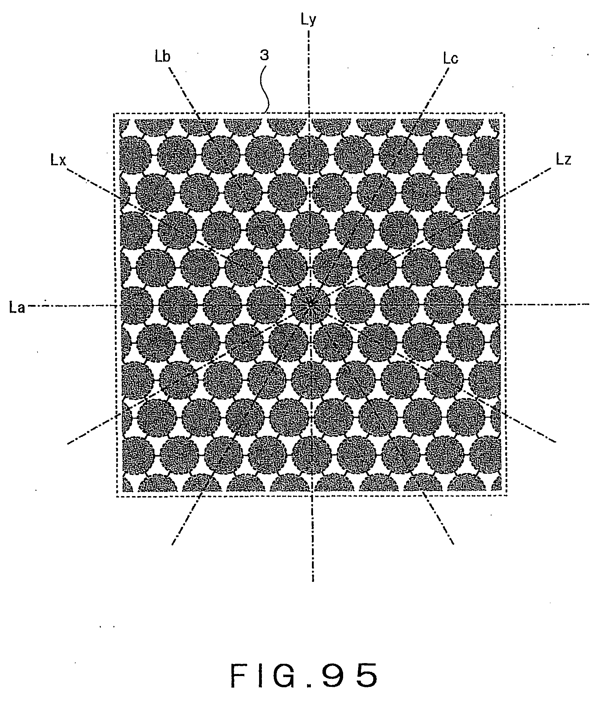

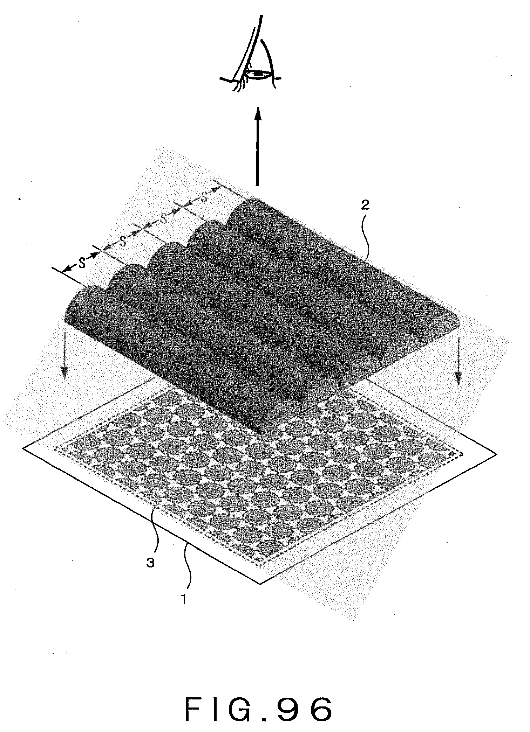

A basic object arrangement according to the 16th to 22nd embodiments includes fine object groups in a hexagonal array on the printed pattern 3, as shown in Fig. 95. For example, as shown in Fig. 96, overlaying the discrimination tool 2 formed from a lenticular lens on the printed pattern 3 of the printed matter 1 and visually observing the printed pattern from the front allow to visualize an invisible image formed on the printed pattern 3 as a visible image. The discrimination tool 2 is a transparent filter on which a plurality of straight lines are formed in a parallel line pattern along one direction. When overlaying the discrimination tool 2 such as a parallel line filter or a lenticular lens on the hexagonal array, a total of six angles are usable as effective angles, i.e., an angle La of 0°, an angle Lz of 30°, an angle Lc of 60°, an angle Ly of 90°, an angle Lb of 120°, and an angle Lx of 150°.

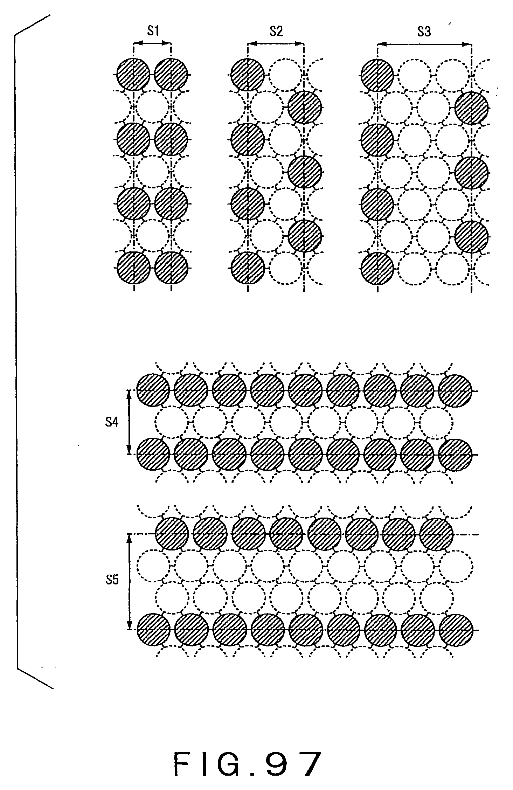

According to the example shown in Fig. 95, intervals S of the parallel lines of the lenticular lens shown in Fig. 96 are classified into two systems, i.e., one system including the angles La, Lb, and Lc and the other system including the angles Lx, Ly, and Lz. There are five types of intervals S shown in Fig. 97, which allow to resolve the invisible image, in correspondence with the angles. As shown in Fig. 97, there are intervals S1, S2, and S3 at the angles Lx, Ly, and Lz. There are intervals S4 and S5 at the angles La, Lb, and Lc. The difference concerns the effective angle upon overlaying the discrimination tool 2 such as a lenticular lens and the effective area of the invisible image to be described in the 16th to 22nd embodiments.

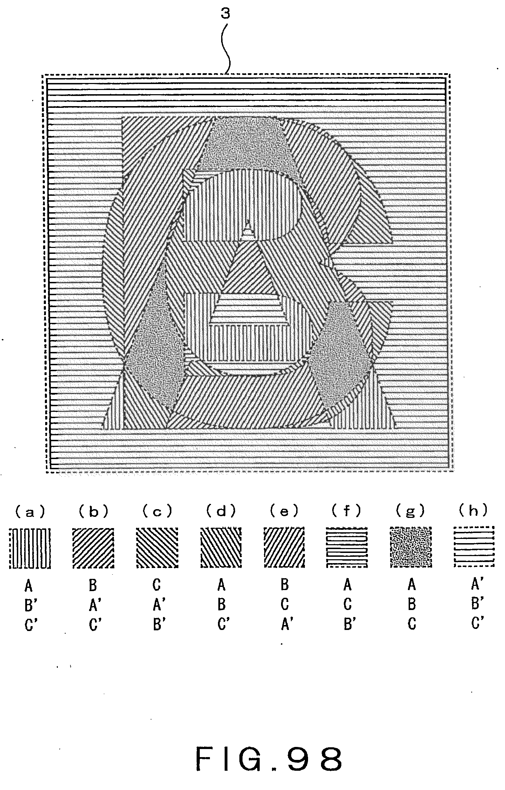

The 16th to 22nd embodiments use an aggregate of eight types of objects called a unit. For example, eight types of units (a) to (h) formed from object groups constructing visible and invisible images are periodically arranged in a matrix on a graphic region as shown in Fig. 98, thereby applying the first invisible image 5 shown in Fig. 92, the second invisible image 6 shown in Fig. 93, or the third invisible image 7 shown in Fig. 94 to the printed pattern 3. The object elements included in the units (a) to (h) include one or a plurality of objects A and A', one or a plurality of objects B and B', and one or a plurality of objects C and C'.

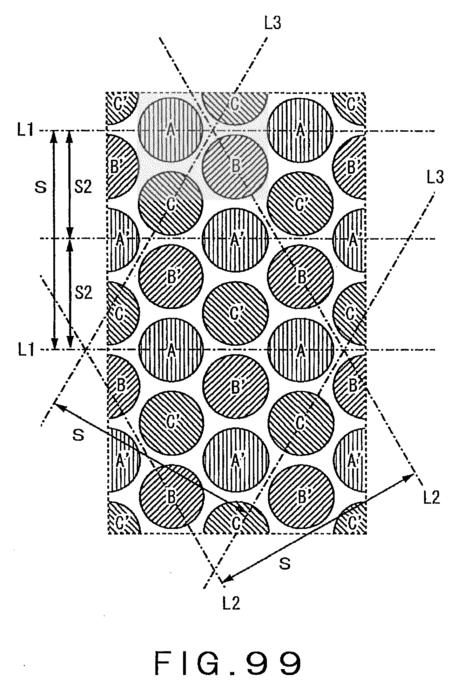

The objects A and A' oppose along an axis corresponding to 0° that is the angle of a line L1 in Fig. 99 and have an on/off relationship. The on/off relationship indicates that for example, when one is black (on), the other is white (off), and when one is colored, the other is colorless. That is, the two objects are never black or white simultaneously on principle. The objects A and A' have the same area. The objects A and A' are not visually recognized under a normal visual condition. A first invisible image (negative or positive) is formed from only the objects A, or a first invisible image (positive or negative) is formed from only the objects A'.

Similarly, the objects B and B' oppose along the axis of a line L2, and have the on/off relationship and the same area. A second invisible image (negative or positive) is formed from only the objects B, or a second invisible image (positive or negative) is formed from only the objects B'. The objects C and C' oppose along an axis corresponding to the angle of a line L3, and have the on/off relationship and the same area. A third invisible image (negative or positive) is formed from only the objects C, or a third invisible image (positive or negative) is formed from only the objects C'.

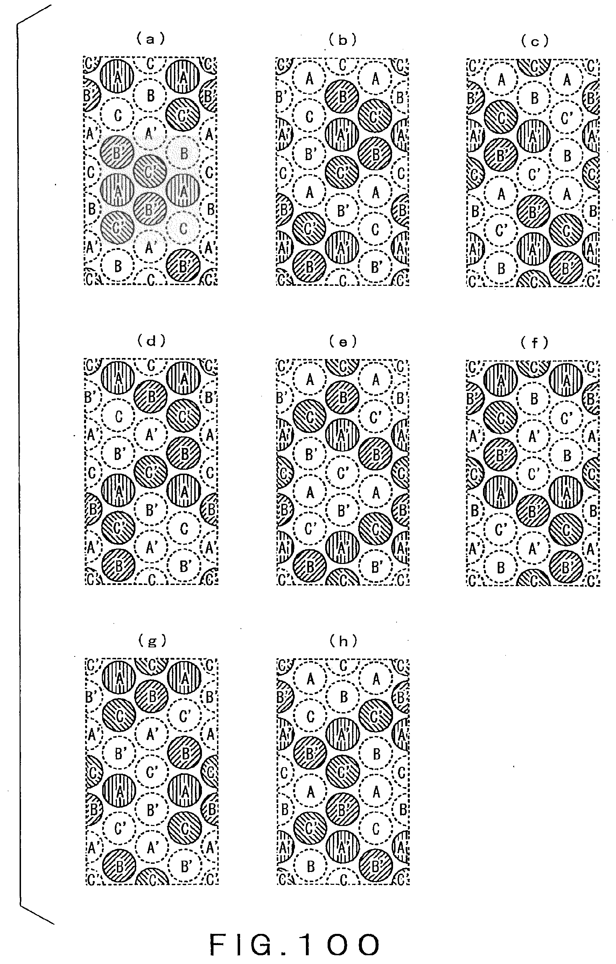

The individual object structures of the units (a) to (h) will be explained next with reference to Fig. 100. In the object structure of the unit (a), the objects A are on, and the remaining objects are off. More specifically, the objects A, B', and C' are main objects of the unit (a). In the object structure of the unit (b), the objects B are on, and the remaining objects are off. More specifically, the objects B, A', and C' are main objects of the unit (b). In the object structure of the unit (c), the objects C are on, and the remaining objects are off. More specifically, the objects C, A', and B' are main objects of the unit (c). In the object structure of the unit (d), the objects A and B are on, and the remaining objects are off. More specifically, the objects A, B, and C' are main objects of the unit (d). In the object structure of the unit (e), the objects B and C are on, and the remaining objects are off. More specifically, the objects B, C, and A' are main objects of the unit (e). In the object structure of the unit (f), the objects A and C are on, and the remaining objects are off. More specifically, the objects A, C, and B' are main objects of the unit (f). In the object structure of the unit (g), the objects A, B, and C are on, and no objects are off. More specifically, the objects A, B, and C are main objects of the unit (g). In the object structure of the unit (h), the objects A', B', and C' are on, and the remaining objects are off. More specifically, the objects A', B', and C' are main objects of the unit (h).

### (17) 17th Embodiment

An anti-counterfeit printed matter according to the 17th embodiment of the present invention will be described.

Fig. 99 is a schematic view showing units arranged in a matrix to form a printed pattern 3 on a printed matter according to the 17th embodiment. Lines L1, L2, and L3 coincide with the angles of the center lines of a lenticular lens serving as a discrimination tool. The line L1 corresponds to 0°, the line L2 corresponds to 120°, and the line L3 corresponds to 60°. The interval of each of the lines L1, L2, and L3 corresponds to twice the interval S2 shown in Fig. 97 to resolve an invisible image. In the 17th embodiment, the interval is 1 mm or less, and for example, 340 µm.

Fig. 100 shows the object structures of eight types of units (a) to (h) according to the 17th embodiment based on the object arrangement shown in the schematic view of Fig. 99. The eight types of units are applied to the object regions (a) to (h) shown in Fig. 98. Fig. 100(a) shows the structure of the unit (a) according to the 17th embodiment, which is formed from objects A, B', and C'. Fig. 100(b) shows the structure of the unit (b) according to the 17th embodiment, which is formed from objects B, A', and C'. Fig. 100(c) shows the structure of the unit (c) according to the 17th embodiment, which is formed from objects C, A', and B'. Fig. 100(d) shows the structure of the unit (d) according to the 17th embodiment, which is formed from the objects A, B, and C'. Fig. 100(e) shows the structure of the unit (e) according to the 17th embodiment, which is formed from the objects B, C, and A'. Fig. 100(f) shows the structure of the unit (f) according to the 17th embodiment, which is formed from the objects A, C, and B'. Fig. 100(g) shows the structure of the unit (g) according to the 17th embodiment, which is formed from the objects A, B, and C. Fig. 100(h) shows the structure of the unit (h) according to the 17th embodiment, which is formed from the objects A', B', and C'.

In the 17th embodiment, the object arrangement and structures shown in Fig. 100 are applied to the regions shown in Fig. 98. For example, as shown in Fig. 96, overlaying a discrimination tool 2 formed from a lenticular lens on the printed pattern 3 of a printed matter 1 and visually observing the printed pattern from the front allow to visualize a first invisible image 5 shown in Fig. 92, a second invisible image 6 shown in Fig. 93, or a third invisible image 7 shown in Fig. 94 as a visible image.

According to the 17th embodiment, overlaying a single discrimination tool on the printed matter enables to easily and clearly visualize the invisible images formed from the objects A, A', B, B', C, and C'. In addition, the cost can be reduced because only single color printing for printing the objects of the printed matter according to the 17th embodiment in the same color can provide a sufficient anti-counterfeit effect, and the reproduction and printing methods and the like are not particularly limited.

### (18) 18th Embodiment

An anti-counterfeit printed matter according to the 18th embodiment of the present invention will be described.

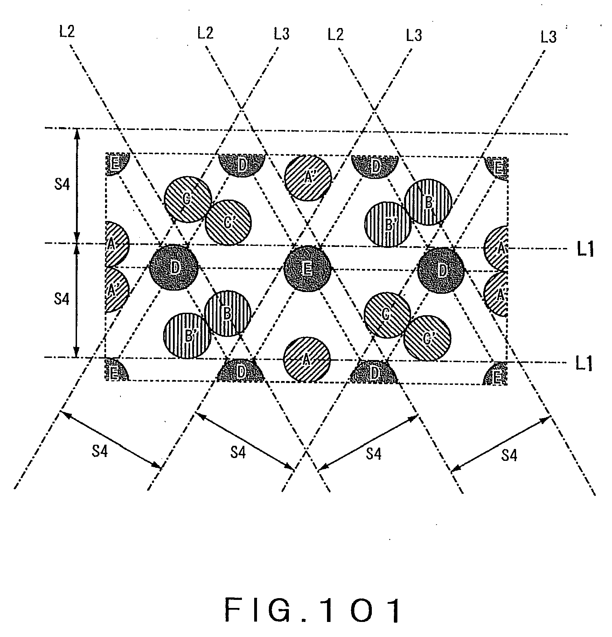

Fig. 101 is a schematic view showing units arranged in a matrix to form a printed pattern 3 on a printed matter according to the 18th embodiment. Lines L1, L2, and L3 coincide with the angles of the center lines of a lenticular lens serving as a discrimination tool. The line L1 corresponds to 0°, the line L2 corresponds to 120°, and the line L3 corresponds to 60°. The interval of each of the lines L1, L2, and L3 corresponds to the interval S4 shown in Fig. 97 to resolve an invisible image. In the 18th embodiment, the interval is 1 mm or less, and for example, 340 µm.

As shown in Fig. 101, the 18th embodiment is characterized in that the distance between objects that pair off is shorter than the distances to other objects, and the distance between objects that pair off is shorter than the distance between object elements of the same type. For example, the distance between objects A and A' that pair off is shorter than the distances to objects B, C, B', and C'. In addition, the distance between the objects A and A' that pair off is shorter than the distance between the objects A or between the objects A', i.e., object elements of the same type.

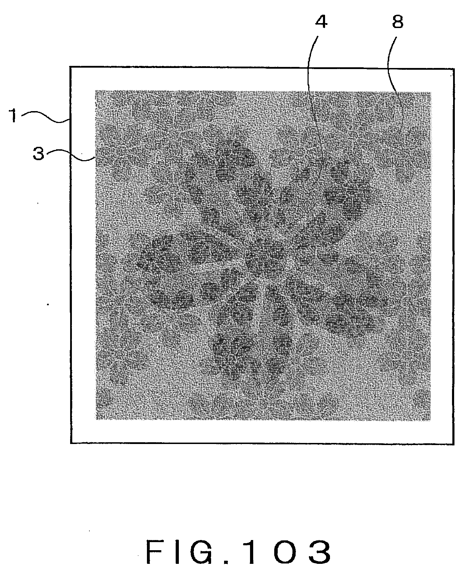

In the 18th embodiment, many other objects except for the pairs of objects are spaced part farther than the distance between the objects that pair off. Hence, objects D and E may be formed as needed between the objects spaced part from each other. Note that when the lines L1, L2, and L3 that coincide with the center lines of the lenticular lens are located at the centers of the objects A, B, C, A', B', or C', the objects D and E do not overlap the lines L1, L2, and L3 that coincide with the center lines of the lenticular lens. The objects D and E construct the first and second visible images. More specifically, upon visually observing the printed pattern 3 on a printed matter 1 under a normal condition without using a discrimination tool 2, a pattern 4 formed from an arbitrary graphic pattern and characters is visually recognized based on the objects D, and a pattern 8 formed from an arbitrary graphic pattern and characters is visually recognized based on the objects E, as shown in Fig. 103. This enables various design expressions.

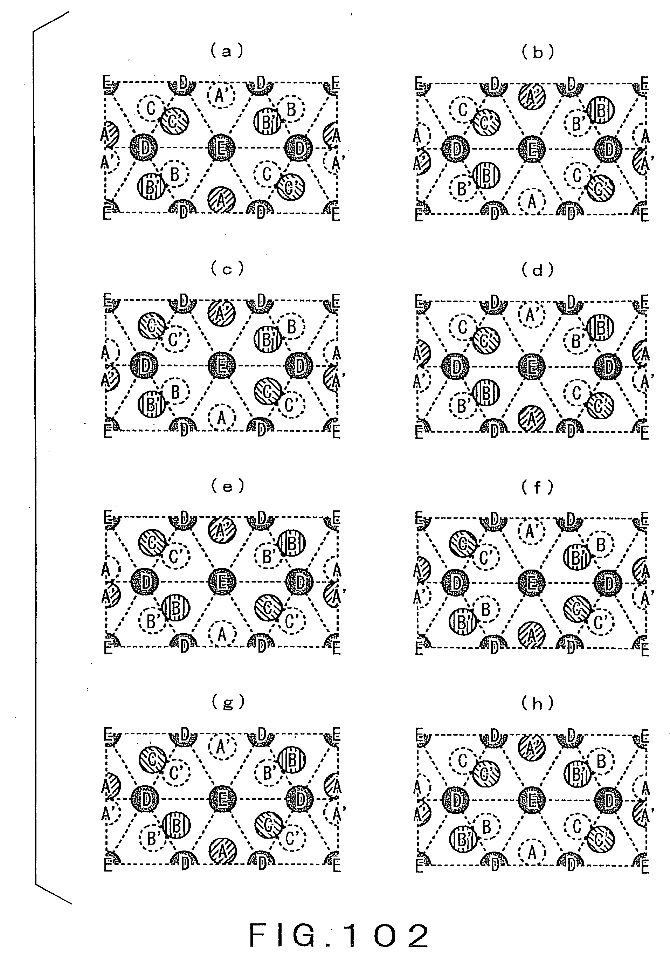

Fig. 102 shows the object structures of eight types of units (a) to (h) according to the 18th embodiment based on the object arrangement shown in the schematic view of Fig. 101. Note that the roles of the objects A, B, C, A', B', and C' included in the units (a) to (h) are fundamentally the same as in the above-described 17th embodiment. In the 18th embodiment, the object arrangement and structures shown in the schematic view of Fig. 101 are applied to the regions shown in Fig. 98.

The 18th embodiment is useful for printed matters such as securities because it is possible to form a clear visible image having a design and high degree of freedom using the objects D and E without impeding the visibility of a visualized invisible image. In addition, overlaying a single discrimination tool on the printed matter enables to easily and clearly visualize the invisible images formed from the objects A, A', B, B', C, and C'. Furthermore, the cost can be reduced because only single color printing for printing the objects of the printed matter according to the 18th embodiment in the same color can provide a sufficient anti-counterfeit effect, and the reproduction and printing methods and the like are not particularly limited.

### (19) 19th Embodiment

An anti-counterfeit printed matter according to the 19th embodiment of the present invention will be described.

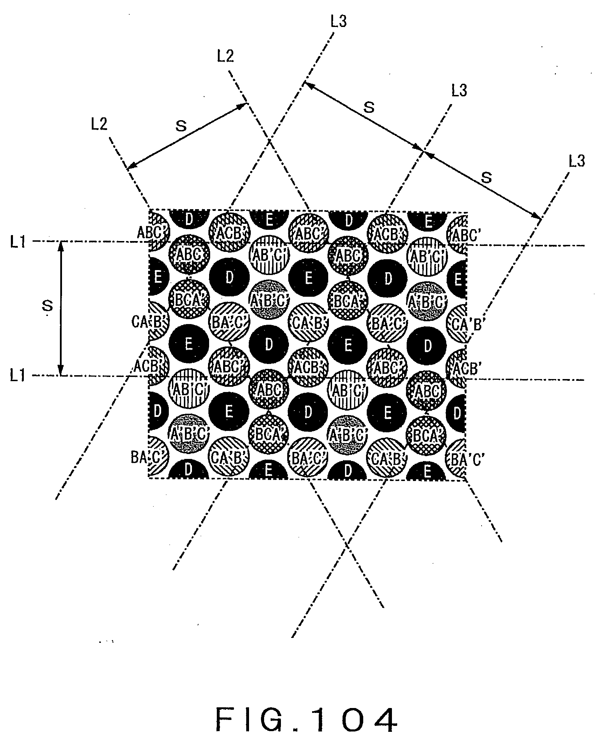

Fig. 104 is a schematic view showing units arranged in a matrix to form a printed pattern 3 on a printed matter according to the 19th embodiment. Lines L1, L2, and L3 coincide with the angles of the center lines of a lenticular lens serving as a discrimination tool. The line L1 corresponds to 0°, the line L2 corresponds to 120°, and the line L3 corresponds to 60°. An interval S of each of the lines L1, L2, and L3 corresponds to four times the interval S1 shown in Fig. 97 to resolve an invisible image. In the 19th embodiment, the interval is 1 mm or less, and for example, 340 µm.

As shown in Fig. 104, in the 19th embodiment, objects A or A', B or B', and C or C' are shared. For example, an object shared by the objects A, B', and C' pairs off with an object shared with the objects A', B, and C. Even when the object elements are shared, a first invisible image 5 shown in Fig. 92, a second invisible image 6 shown in Fig. 93, or a third invisible image 7 shown in Fig. 94 is visualized as a visible image.

In the 19th embodiment, since the objects A or A', B or B', and C or C' are shared, objects which are not shared by any one of the objects A, A', B, B', C, and C' can be formed in the hexagonal array. That is, objects D and E may be formed as needed as the objects that are not shared. Note that when the lines L1, L2, and L3 that coincide with the center lines of the lenticular lens are located at the centers of the shared objects A, B, C, A', B', or C', the objects D and E do not overlap the lines L1, L2, and L3 that coincide with the center lines of the lenticular lens. The objects D and E construct the first visible image. More specifically, upon visually observing the printed pattern 3 on a printed matter 1 under a normal condition without using a discrimination tool 2, a pattern 4 formed from an arbitrary graphic pattern and characters is visually recognized based on the objects D, and a pattern 8 formed from an arbitrary graphic pattern and characters is visually recognized based on the objects E, as shown in Fig. 103. This enables various design expressions.

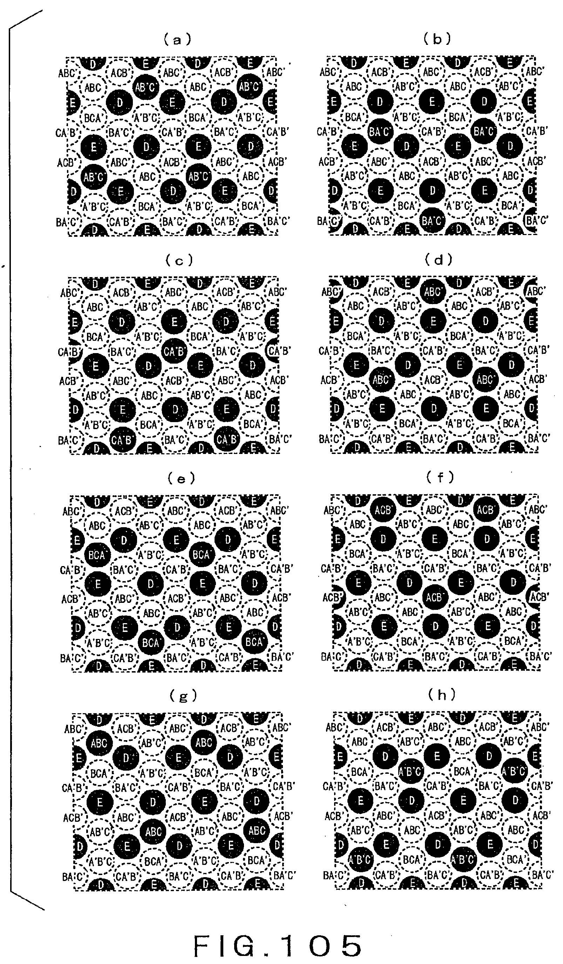

Fig. 105 shows the object structures of eight types of units (a) to (h) according to the 19th embodiment based on the object arrangement shown in the schematic view of Fig. 104. Note that the roles of the objects A, B, C, A', B', and C' included in the units (a) to (h) are fundamentally the same as in the above-described 17th embodiment. However, the 19th embodiment is characterized in that the objects A or A', B or B', and C or C' are shared. In the 19th embodiment, the object arrangement and structures shown in the schematic view of Fig. 104 are applied to the regions shown in Fig. 98.

The 19th embodiment is useful for printed matters such as securities because it is possible to form a clear visible image having a design and high degree of freedom using the objects D and E without impeding the visibility of a visualized invisible image. In addition, overlaying a single discrimination tool on the printed matter enables to easily and clearly visualize the invisible images formed from the objects A, A', B, B', C, and C'. Furthermore, the cost can be reduced because only single color printing for printing the objects of the printed matter according to the 19th embodiment in the same color can provide a sufficient anti-counterfeit effect, and the reproduction and printing methods and the like are not particularly limited.

### (20) 20th Embodiment

An anti-counterfeit printed matter according to the 20th embodiment of the present invention will be described.

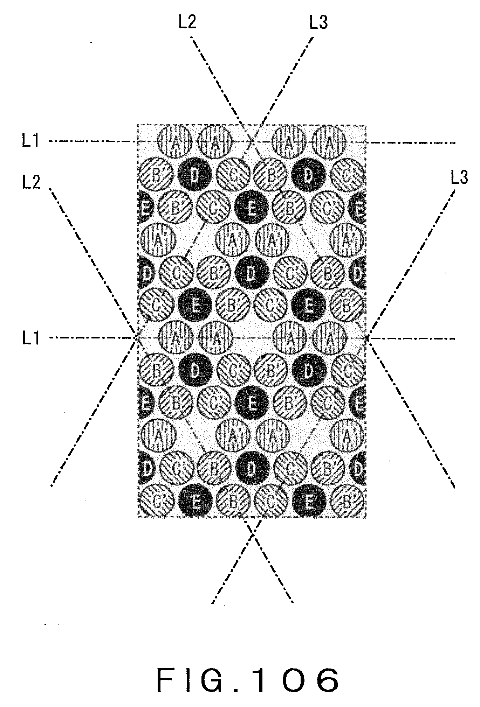

Fig. 106 is a schematic view showing units arranged in a matrix to form a printed pattern 3 on a printed matter according to the 20th embodiment. Lines L1, L2, and L3 coincide with the angles of the center lines of a lenticular lens serving as a discrimination tool. The line L1 corresponds to 0°, the line L2 corresponds to 120°, and the line L3 corresponds to 60°. An interval S of each of the lines L1, L2, and L3 corresponds to three times the interval S4 shown in Fig. 97 to resolve an invisible image. In the 20th embodiment, the interval is 1 mm or less, and for example, 340 µm.

As shown in Fig. 106, in the 20th embodiment, objects A or A', B or B', and C or C' maintain the positional relationship between them in the hexagonal array, and the individual objects A, B, C, A', B', and C' are arranged while continuously arraying at least two object elements of the same type in the angular directions of the lines L1, L2, and L3 corresponding to the center lines of the lenticular lens. In the 20th embodiment, a larger number of object regions are in contact with the center lines of the lenticular lens, as compared to the 18th and 19th embodiments. For this reason, a first invisible image 5 shown in Fig. 92, a second invisible image 6 shown in Fig. 93, or a third invisible image 7 shown in Fig. 94 is visualized as a visible image that is clearer than in the 18th and 19th embodiments.

In the 20th embodiment, objects D and E may be formed at positions other than the objects A, B, C, A', B', and C' in the hexagonal array. Note that when the lines L1, L2, and L3 that coincide with the center lines of the lenticular lens are located at the centers of the objects A, B, C, A', B', or C', the objects D and E do not overlap the lines L1, L2, and L3 that coincide with the center lines of the lenticular lens. The objects D and E construct the first and second visible images. More specifically, upon visually observing the printed pattern 3 on a printed matter 1 under a normal condition without using a discrimination tool 2, a pattern 4 formed from an arbitrary graphic pattern and characters is visually recognized based on the objects D, and a pattern 8 formed from an arbitrary graphic pattern and characters is visually recognized based on the objects E, as shown in Fig. 103. This enables various design expressions.

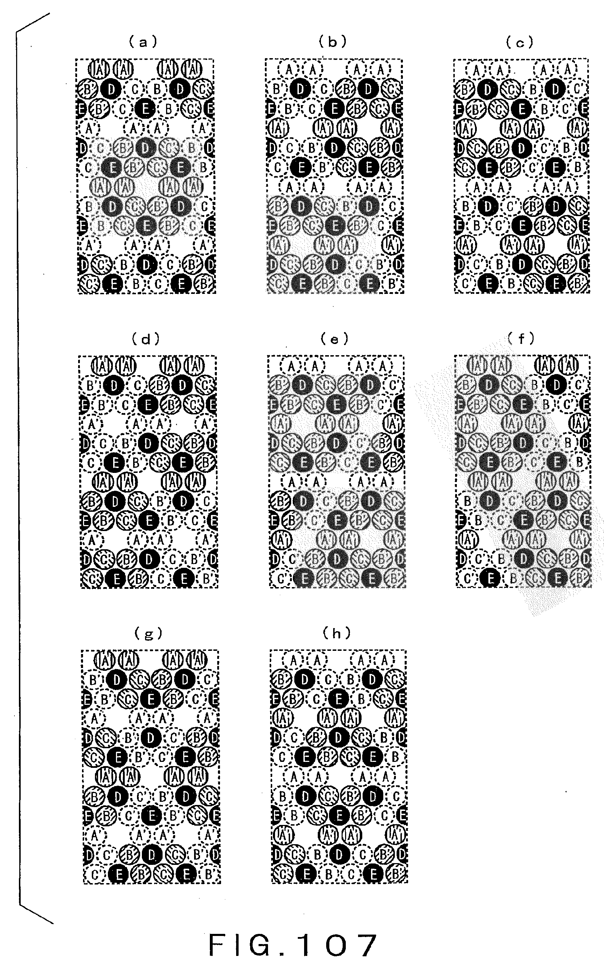

Fig. 107 shows the object structures of eight types of units (a) to (h) according to the 20th embodiment based on the object arrangement shown in the schematic view of Fig. 106. Note that the roles of the objects A, B, C, A', B', and C' included in the units (a) to (h) are fundamentally the same as in the above-described 17th embodiment. In the 20th embodiment, the object arrangement and structures shown in the schematic view of Fig. 106 are applied to the regions shown in Fig. 98.

The 20th embodiment is useful for printed matters such as securities because it is possible to form a clear visible image having a design and high degree of freedom using the objects D and E without impeding the visibility of a visualized invisible image. In addition, overlaying a single discrimination tool on the printed matter enables to easily and clearly visualize the invisible images formed from the objects A, A', B, B', C, and C'. Furthermore, the cost can be reduced because only single color printing for printing the objects of the printed matter according to the 20th embodiment in the same color can provide a sufficient anti-counterfeit effect, and the reproduction and printing methods and the like are not particularly limited.

### (21) 21st Embodiment

An anti-counterfeit printed matter according to the 21st embodiment of the present invention will be described.

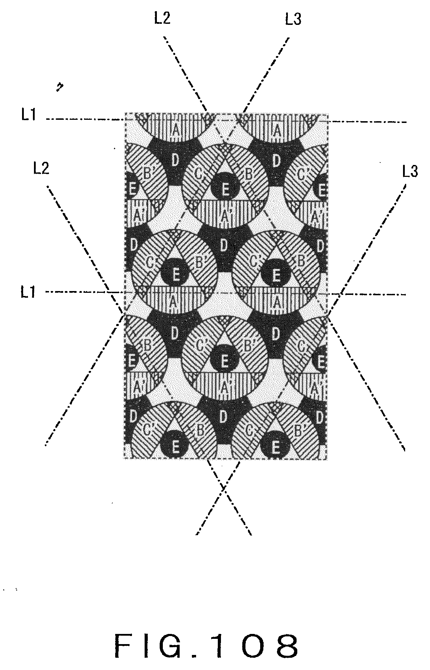

Fig. 108 is a schematic view showing units arranged in a matrix to form a printed pattern 3 on a printed matter according to the 21st embodiment. Lines L1, L2, and L3 coincide with the angles of the center lines of a lenticular lens serving as a discrimination tool. The line L1 corresponds to 0°, the line L2 corresponds to 120°, and the line L3 corresponds to 60°. An interval S of each of the lines L1, L2, and L3 corresponds to three times the interval S4 shown in Fig. 97 to resolve an invisible image. In the 21st embodiment, the interval is 1 mm or less, and for example, 340 µm. Note that the positional relationship of the object elements in the hexagonal array basically ensures the same object arrangement as in the above-described 20th embodiment, although the impression is different.

As shown in Fig. 108, in the 21st embodiment, objects A or A', B or B', and C or C' maintain the positional relationship between them in the hexagonal array, and the individual objects A, B, C, A', B', and C' run in the angular directions of the lines L1, L2, and L3 corresponding to the center lines of the lenticular lens. In the 21st embodiment, a larger number of object regions are in contact with the center lines of the lenticular lens, as compared to the 18th to 20th embodiments. For this reason, a first invisible image 5 shown in Fig. 92, a second invisible image 6 shown in Fig. 93, or a third invisible image 7 shown in Fig. 94 is visualized as a visible image that is clearer than in the 18th to 20th embodiments.

In the 21st embodiment, objects D and E may be formed at positions other than the objects A, B, C, A', B', and C' in the hexagonal array. Note that when the lines L1, L2, and L3 that coincide with the center lines of the lenticular lens are located at the centers of the objects A, B, C, A', B', or C', the objects D and E do not overlap the lines L1, L2, and L3 that coincide with the center lines of the lenticular lens. The objects D and E construct the first and second visible images. More specifically, upon visually observing the printed pattern 3 on a printed matter 1 under a normal condition without using a discrimination tool 2, a pattern 4 formed from an arbitrary graphic pattern and characters is visually recognized based on the objects D, and a pattern 8 formed from an arbitrary graphic pattern and characters is visually recognized based on the objects E, as shown in Fig. 103. This enables various design expressions.

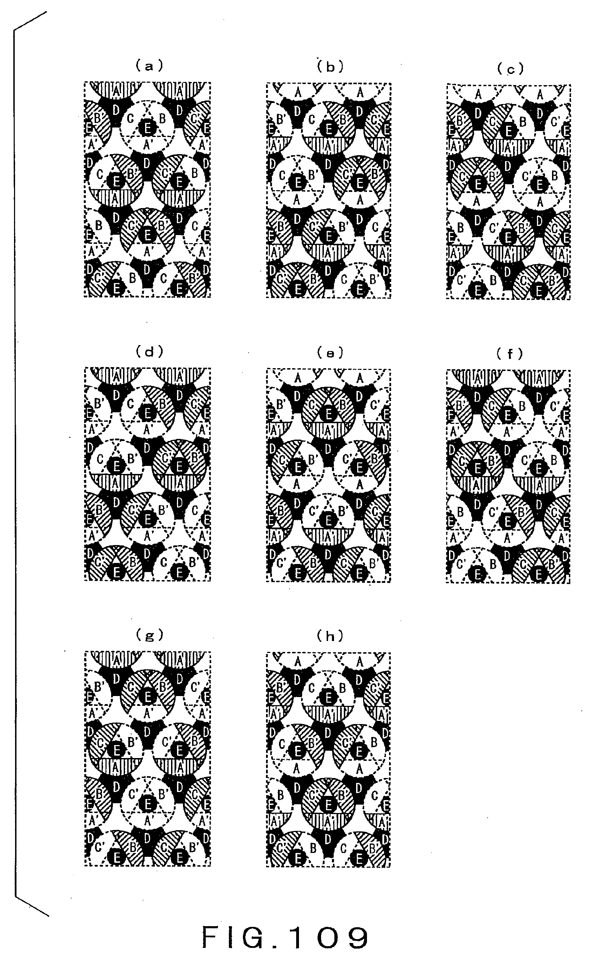

Fig. 109 shows the object structures of eight types of units (a) to (h) according to the 21st embodiment based on the object arrangement shown in the schematic view of Fig. 108. Note that the roles of the objects A, B, C, A', B', and C' included in the units (a) to (h) are fundamentally the same as in the above-described 17th embodiment. In the 21st embodiment, the object arrangement and structures shown in the schematic view of Fig. 108 are applied to the regions shown in Fig. 98.

The 21st embodiment is useful for printed matters such as securities because it is possible to form a clear visible image having a design and high degree of freedom using the objects D and E without impeding the visibility of a visualized invisible image. In addition, overlaying a single discrimination tool on the printed matter enables to easily and clearly visualize the invisible images formed from the objects A, A', B, B', C, and C'. Furthermore, the cost can be reduced because only single color printing for printing the objects of the printed matter according to the 21st embodiment in the same color can provide a sufficient anti-counterfeit effect, and the reproduction and printing methods and the like are not particularly limited.

### (22) 22nd Embodiment

In each of the 17th to 21st embodiments, an anti-counterfeit printed matter having at least one type of invisible image visually recognizable using a discrimination tool such as a lenticular lens has been described. As an anti-counterfeit printed matter according to the 22nd embodiment, an example will be described in which an invisible image visually recognizable without using any discrimination tool is formed in addition to at least one type of invisible image visually recognizable using a discrimination tool such as a lenticular lens.

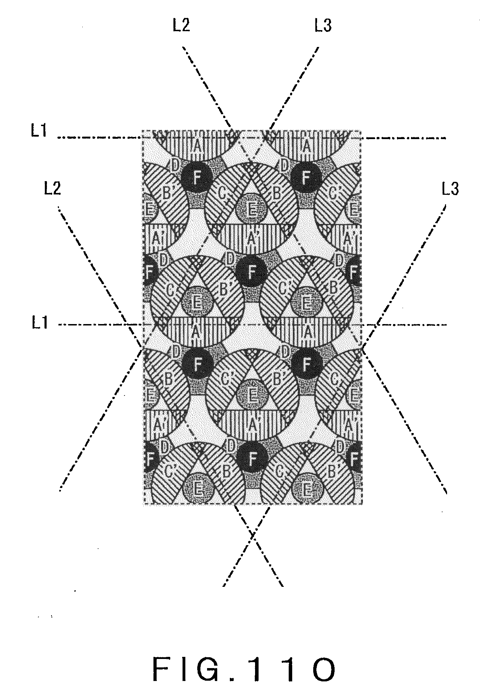

Fig. 110 shows an object arrangement according to the 22nd embodiment. The basic object arrangement is the same as in Fig. 108. Objects A, B, C, A', B', C', D, and E shown in Fig. 110 construct a printed pattern 3 by ink containing a luminescent material such as silver ink with metallic luster. Objects F are printed on the objects D of the printed pattern 3 using an arbitrary color ink such as light purple ink. The objects F construct an image that appears depending on the printed matter observation condition, apart from the first visible image constructed by the objects D and the second visible image constructed by the objects E. In the 22nd embodiment, the objects F are arranged to construct a character "N". The object area of the object C is equal to or larger than that of the object F. Note that the luminescent material and the color ink of the 22nd embodiment are not particularly limited.

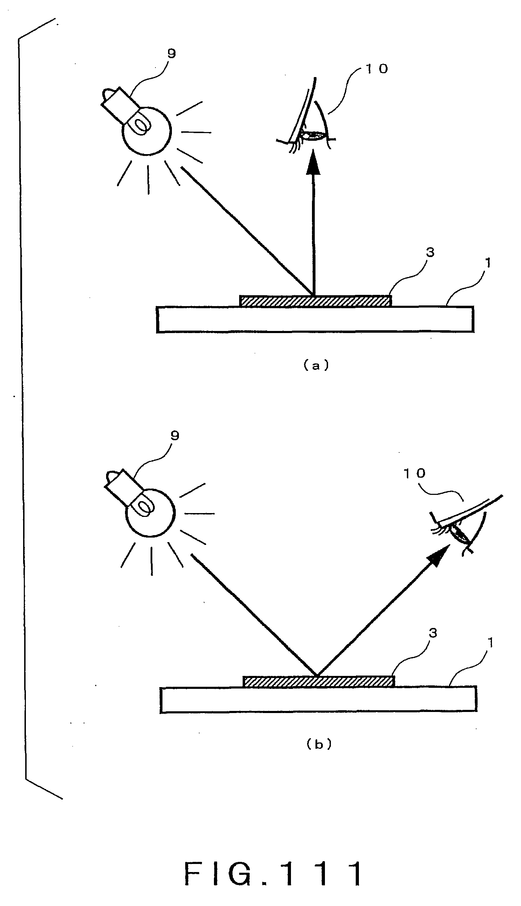

Fig. 111 shows the positional relationship between an illumination light source 9, an eyepoint 10, and a printed matter 1 upon observing the printed matter 1 having the printed pattern 3 according to the 22nd embodiment in the diffused light region and the specular reflected light region. Observation in the diffused light region is done when the illumination light source 9, eyepoint 10, and printed matter 1 have the positional relationship shown in Fig. 111(a). Observation in the specular reflected light region is done when the illumination light source 9, eyepoint 10, and printed matter 1 have the positional relationship shown in Fig. 111(b).

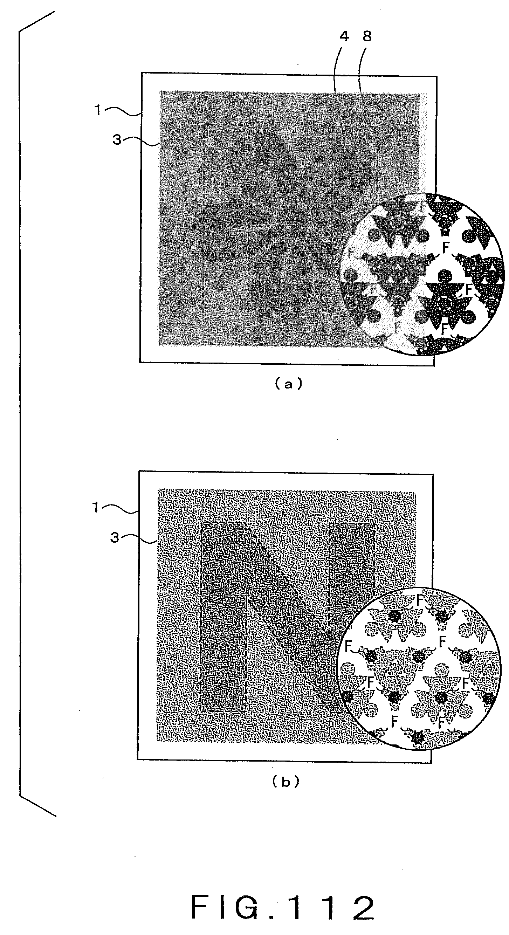

When the printed matter 1 is visually observed in the diffused light region, as shown in Fig. 111(a), the light purple objects F formed on the printed pattern 3 are hard to visually recognize, and visible images 1 and 2 constructed by the objects D and E made of silver ink can mainly be recognized visually, as shown in Fig. 112(a). On the other hand, when the printed matter 1 is visually observed in the specular reflected light region, as shown in Fig. 111(b), the brightness of the objects A, B, C, A', B', C', D, and E made of silver ink rises due to the luminescent action caused by the specular reflected light, and only the objects F made of light purple ink without the luminescent action are enhanced and visually recognized, as shown in Fig. 112(b). Hence, the character "N" constructed by arranging the objects F is observed.

### (23) 23rd Embodiment

In the 23rd embodiment, an example will be described in which an invisible image visually recognizable without using any discrimination tool is formed in addition to at least one type of invisible image visually recognizable using a discrimination tool such as a lenticular lens, as in the 22nd embodiment.

The basic object arrangement according to the 23rd embodiment is the same as in Fig. 108. Objects A, B, C, A', B', C', D, and E construct a printed pattern 3 by ink containing a luminescent material such as silver ink with metallic luster. A pattern G made of a colorless transparent material such as a transparent varnish is printed on the printed pattern 3. The pattern G has no special positional relationship to the arrangement of the objects A, B, C, A', B', C', D, and E. In the 23rd embodiment, the pattern G is arranged to construct a character "N". The pattern G is not particularly limited, and a character, number, pattern, design, logotype, or the like is usable. Note that the luminescent material and the colorless transparent material of the 23rd embodiment are not particularly limited.

Fig. 111 shows the positional relationship between an illumination light source 9, an eyepoint 10, and a printed matter 1 upon observing the printed matter 1 having the printed pattern 3 according to the 23rd embodiment in the diffused light region and the specular reflected light region. Observation in the diffused light region is done when the illumination light source 9, eyepoint 10, and printed matter 1 have the positional relationship shown in Fig. 111(a). Observation in the specular reflected light region is done when the illumination light source 9, eyepoint 10, and printed matter 1 have the positional relationship shown in Fig. 111(b).

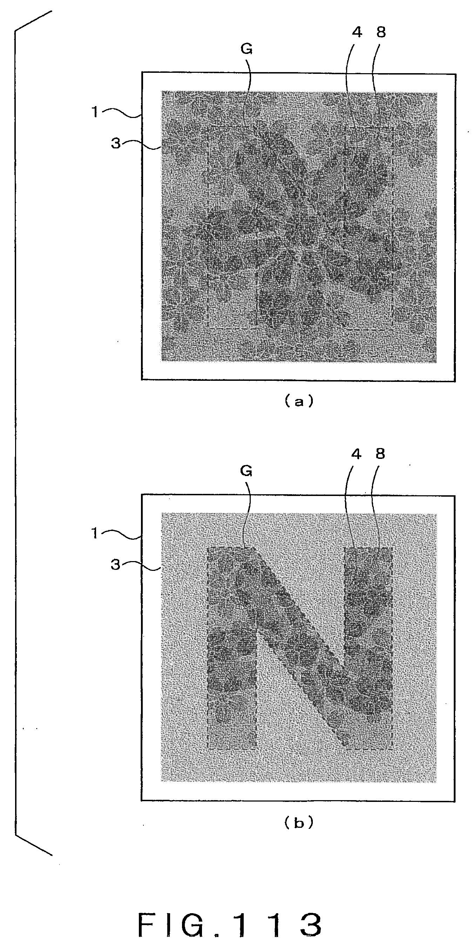

When the printed matter 1 is visually observed in the diffused light region, as shown in Fig. 111(a), the pattern G formed on the printed pattern 3 using the colorless transparent material is completely transparent, and two types of visible images constructed by the objects D and E made of silver ink can mainly be recognized visually, as shown in Fig. 113(a). On the other hand, when the printed matter 1 is visually observed in the specular reflected light region, as shown in Fig. 111(b), the brightness of the objects A, B, C, A', B', C', D, and E made of silver ink rises due to the luminescent action caused by the specular reflected light, but the luminescent action of the objects A, B, C, A', B', C', D, and E is suppressed in the portion of the pattern G made of the colorless transparent material, as shown in Fig. 112(b). Only the pattern G is thus enhanced and visually recognized due to the difference in luminescence. Hence, the character "N" constructed by arranging the pattern G is observed. The pattern G is not particularly limited, and a character, number, pattern, design, logotype, or the like is usable.

In any one of the above-described 17th to 23rd embodiments, for example, the objects A arranged in the direction of 0° and the objects A' arranged in the same direction as that of the objects A pair off to form first object elements, and a plurality of first object elements are arranged at a predetermined pitch. The objects B arranged in the direction of 60° and the objects B' arranged in the same direction as that of the objects B pair off to form second object elements, and a plurality of second object elements are arranged at a predetermined pitch. The objects C arranged in the direction of 120° and the objects C' arranged in the same direction as that of the objects C pair off to form third object elements, and a plurality of third object elements are arranged at a predetermined pitch. The objects A and A' that pair off need to have the same area. The objects B and B' that pair off need to have the same area. The objects C and C' that pair off need to have the same area. Note that it is only necessary that the objects that pair off have the same area, and the objects A, B, and C or the objects A', B', and C' can have different object areas. A pair of objects A and A' and another pair of objects A and A' can have different areas. A pair of objects B and B' and another pair of objects B and B' can have different areas. A pair of objects C and C' and another pair of objects C and C' can have different areas.

In any one of the above-described 17th to 23rd embodiments, the first object elements formed from the objects A and A' form a first invisible image by the on/off relationship. The objects A form one of the positive image and the negative image of the first invisible image. The objects A' form the other of the positive image and the negative image of the first invisible image. The second object elements formed from the objects B and B' form a second invisible image by the on/off relationship. The objects B form one of the positive image and the negative image of the second invisible image. The objects B' form the other of the positive image and the negative image of the second invisible image. The third object elements formed from the objects C and C' form a third invisible image by the on/off relationship. The objects C form one of the positive image and the negative image of the third invisible image. The objects C' form the other of the positive image and the negative image of the third invisible image. The first invisible image, second invisible image, and third invisible image are not particularly limited, and a character, number, pattern, design, logotype, or the like is usable.

In any one of the above-described 17th to 23rd embodiments, the shapes and colors of the objects A, B, C, A', B', and C' are set to be identical. In this case, the three invisible images are visually recognized in the same color by overlaying a lenticular lens on the anti-counterfeit printed matter. As another form, the first object elements formed from the objects A and A', the second object elements formed from the objects B and B', and the third object elements formed from the objects C and C' are designed to have different colors. In this case, the three invisible images are visually recognized in the different colors by overlaying a lenticular lens on the anti-counterfeit printed matter. In this arrangement, since the color of the visible image is different from those of the invisible images observed upon overlaying a lenticular lens, the invisible images can easily be identified.

In any one of the above-described 17th to 23rd embodiments, each of the objects A, B, C, A', B', and C' preferably has a circular shape, semicircular or smaller shape, or polygonal shape. With these shapes, when a lenticular lens is not overlaid, the three invisible images have excellent invisibility. When a lenticular lens is overlaid, the visibility of the three invisible images improves.

The objects D and E are arranged in regions where the objects A, B, C, A', B', and C' are not present. In the 17th to 23rd embodiments, the objects D and E are preferably arranged at the center of the hexagonal or triangular array of the objects A, B, C, A', B', and C'. With this shape, when a lenticular lens is overlaid, the visibility of the three invisible images improves.

According to the 17th to 23rd embodiments, there is provided an anti-counterfeit printed matter which forms three invisible images clearly visualizable by a single discrimination tool, and arrays the three invisible images in specific directions, thereby preventing a visible image from impeding visibility of a visualized invisible image.

"Having the same area" described in the 17th to 23rd embodiments indicates including the range of variations of the object area in which ink is transferred by a printing press, printer, or the like.

## Claims

1. An anti-counterfeit printed matter (1)
wherein
a plurality of object elements are arranged at a predetermined pitch (5) in a matrix on a base material,
each object element including a first object (A) and a second object (A') which are arranged along a first direction on both sides of a boundary at a center so as to oppose each other, and
a third object (B) and a fourth object (B') which are arranged along a second direction perpendicular to the first direction on both sides of a boundary at the center so as to oppose each other, the first object and the second object of each object element have the same area, the third object and the fourth object of each object element have the same area, **characterised in that**
the first object and the second object of each object element have a negative/positive relationship,
the first object forms one of a positive image and a negative image of a first invisible image, and the second object forms one of the negative image and the positive image of the first invisible image, and **in that**
the third object and the fourth object of each object element have the negative/positive relationship,
the third object forms one of a positive image and a negative image of a second invisible image, and the fourth object forms one of the negative image and the positive image of the second invisible image.

2. An anti-counterfeit printed matter according to claim 1, **characterized in that** the object element has a square shape and sides each having a length of not more than 1 mm.

3. An anti-counterfeit printed matter according to claim 1 or 2, **characterized in that**
the object element further comprises a fifth object arranged in a region where the first object, the second object, the third object, and the fourth object do not exist, and
the fifth object forms a visible image.

4. An anti-counterfeit printed matter according to any one of claims 1 to 3, **characterized in that** each of the first object, the second object, the third object, and the fourth object has one of a circular shape and a polygonal shape.

5. An anti-counterfeit printed matter according to any one of claims 1 to 3, **characterized in that**
each of the first object, the second object, the third object, and the fourth object has a semicircular shape,
the first object and the second object are arranged so as to oppose each other, thereby forming one circle,
the third object and the fourth object are arranged so as to oppose each other, thereby forming one circle, and
a half of the first object overlaps a half of the third object, a half of the first object overlaps a half of the fourth object, a half of the second object overlaps a half of the third object, and a half of the second object overlaps a half of the fourth object so that the first object, the second object, the third object, and the fourth object form one circle.

6. An anti-counterfeit printed matter according to any one of claims 1 to 3, **characterized in that**
each of the first object, the second object, the third object, and the fourth object has an isosceles triangular shape,
the first object and the second object are arranged so as to oppose each other, thereby forming one rectangle,
the third object and the fourth object are arranged so as to oppose each other, thereby forming one rectangle, and
a half of the first object overlaps a half of the third object, a half of the first object overlaps a half of the fourth object, a half of the second object overlaps a half of the third object, and a half of the second object overlaps a half of the fourth object so that the first object, the second object, the third object, and the fourth object form one rectangle.

7. An anti-counterfeit printed matter according to any one of claims 2 to 6, **characterized in that**
each of the fifth objects is arranged at the center of the object element so as to form a first visible image,
the first object and the second object are arranged on both sides of the fifth object so as to oppose each other,
the third object and the fourth object are arranged on both sides of the fifth object so as to oppose each other, and
sixth objects are arranged in four corners of the object element, respectively, so as to form a second visible image.

8. An anti-counterfeit printed matter according to claim 7, **characterized in that**
the first objects, the second objects, the third objects, the fourth objects, the fifth objects, and the sixth objects are printed using ink containing a luminescent material,
the anti-counterfeit printed matter further comprises seventh objects each having an object area not more than an object area of the fifth object and/or the sixth object, the seventh objects being printed, using an arbitrary color ink, on at least some of the fifth objects and/or the sixth objects printed using the ink containing the luminescent material, and
the seventh object forms a third visible image.

9. An anti-counterfeit printed matter according to any one of claims 1 to 6, **characterized in that**
the first objects, the second objects, the third objects, and the fourth objects are printed using ink containing a luminescent material, and
a desired pattern is formed, by solid printing using a colorless transparent material, on at least some of the first objects, the second objects, the third objects, and the fourth objects.

10. An anti-counterfeit printed matter according to claim 7, **characterized in that**
the first objects, the second objects, the third objects, the fourth objects, the fifth objects, and the sixth objects are printed using ink containing a luminescent material, and
a desired pattern is formed, by solid printing using a colorless transparent material, on at least some of the first objects, the second objects, the third objects, the fourth objects, the fifth objects, and the sixth objects.

11. An anti-counterfeit printed matter **characterized in that**
a plurality of first invisible image elements (10) and a plurality of second invisible image elements (11) are alternately arrayed on a base material,
each first invisible image element (20) including a plurality of first object elements (8) periodically arranged at a predetermined pitch along a predetermined direction, and each first object element including a first object (A) and a second object (A') which are arranged on both sides of a boundary at a center so as to oppose each other,
each second invisible image element (11) including a plurality of second object elements (9) periodically arranged at the same pitch as the predetermined pitch along the same direction as the predetermined direction, and each second object element including a third object (B) and a fourth object (B') which are arranged on both sides of a boundary at the center so as to oppose each other,
the first object and the second object of each first object element have a negative/positive relationship, the same area, and the same color,
the first object forms one of a positive image and a negative image of a first invisible image, and the second object forms one of the negative image and the positive image of the first invisible image,
the third object and the fourth object of each second object element have the negative/positive relationship, the same area, and the same color, and
the third object forms one of a positive image and a negative image of a second invisible image, and the fourth object forms one of the negative image and the positive image of the second invisible image.

12. An anti-counterfeit printed matter according to claim 11, **characterized in that** the pitch of the first object elements and the second object elements is not more than 1 mm.

13. An anti-counterfeit printed matter according to claim 11 or 12, **characterized in that** the first object and the second object which construct the first object element and the third object and the fourth object which construct the second object element have the same shape.

14. An anti-counterfeit printed matter according to any one of claims 11 to 13, **characterized in that** the first object, the second object, the third object, and the fourth object have the same shape and the same color.

15. An anti-counterfeit printed matter according to any one of claims 11 to 13, **characterized in that** the first object element formed from the first object and the second object and the second object element formed from the third object and the fourth object have different colors.

16. An anti-counterfeit printed matter according to any one of claims 11 to 15, **characterized in that**
in the first invisible image element and the second invisible image element,
fifth objects are arranged at positions overlapping some objects of the first object, the second object, the third object, and the fourth object,
each of the fifth object has an area not less than an area of the first object, the second object, the third object, and the fourth object, and
the fifth object forms a visible image.

17. An anti-counterfeit printed matter according to any one of claims 11 to 16, **characterized in that** a color density of the fifth object is not more than a color density of the first object, the second object, the third object, and the fourth object.

18. An anti-counterfeit printed matter according to any one of claims 11 to 17, **characterized in that** the fifth object has the same shape as that of the first object, the second object, the third object, and the fourth object.

19. An anti-counterfeit printed matter according to any one of claims 11 to 18, **characterized in that** arranging the fifth objects at the positions overlapping some objects of the first object, the second object, the third object, and the fourth object indicates, when periodically arraying the plurality of first invisible image elements and the plurality of the second invisible image elements, arranging, at the positions of the some objects which should be arranged originally, not the some objects but only the fifth objects, or arranging the some objects first and then arranging the fifth objects by overprinting.

20. An anti-counterfeit printed matter according to any one of claims 11 to 19, **characterized in that**
the first objects to the fourth objects or the first objects to the fifth objects are printed using ink containing a luminescent material,
the anti-counterfeit printed matter further comprises sixth objects each having an object area not more than an object area of the first object to the fourth object or the first object to the fifth object, the sixth objects being printed, using an arbitrary color ink, on at least some objects selected from the first objects to the fourth objects or the first objects to the fifth objects printed using the ink containing the luminescent material, and
the sixth object forms a third visible image.

21. An anti-counterfeit printed matter according to any one of claims 11 to 19, **characterized in that**
the first objects to the fourth objects or the first objects to the fifth objects are printed using ink containing a luminescent material, and
a desired pattern is formed, by solid printing using a colorless transparent material, on at least some objects of the first objects to the fourth objects or the first objects to the fifth objects.

22. An anti-counterfeit printed matter **characterized in that**
a plurality of units are periodically arranged at a predetermined pitch in a predetermined region on a base material, each unit including a first object and a second object which are arranged along a first direction on both sides of a boundary at a center so as to oppose each other,
in each of the plurality of units arranged, the first object and the second object have a negative/positive relationship, the same area, and the same color,
the first object and the second object form an invisible image by combining one object turned on with the other object turned off, and
a third object having an object area ratio substantially 1/2 that of the first object and the second object and substantially the same color as that of the first object and the second object is arranged on a boundary line between the first object and the second object to relax density imbalance, in the predetermined region of the plurality of units arranged adjacent, at a position where, out of the first objects and the second objects arranged to form the invisible image, off objects are arranged adjacent to each other.

23. An anti-counterfeit printed matter according to claim 22, **characterized in that** the predetermined pitch of the units is not more than 1 mm.

24. An anti-counterfeit printed matter according to claim 22 or 23, **characterized in that**
fourth objects are arranged by overprinting, or only the fourth objects are arranged at positions of some objects where the first object and/or the second object should form the invisible image originally,
each of the fourth objects has an area not less than an area of the first object and the second object, and
the fourth object forms a visible image.

25. An anti-counterfeit printed matter according to any one of claims 22 to 24, **characterized in that** a color density of the fourth object is not more than a color density of the first object and the second object.

26. An anti-counterfeit printed matter according to any one of claims 22 to 25, **characterized in that**
the first objects, the second objects, the third objects, and the fourth objects are printed using ink containing a luminescent material, and
a desired pattern is formed, by solid printing using a colorless transparent material, on some objects of the first objects, the second objects, the third objects, and the fourth objects.

27. An anti-counterfeit printed matter **characterized in that**
a plurality of units are periodically arranged at a predetermined pitch in a predetermined region on a base material, each unit including a first object and a second object which are arranged along a first direction on both sides of a boundary at a center so as to oppose each other and a third object and a fourth object which are arranged along a second direction perpendicular to the first direction on both sides of a boundary at the center so as to oppose each other,
in each of the plurality of units arranged, the first object and the second object have a negative/positive relationship, and the third object and the fourth object have the negative/positive relationship,
the first object, the second object, the third object, and the fourth object have the same area and the same color,
the first object and the second object form a first invisible image by combining one object turned on with the other object turned off,
a fifth object having an object area ratio substantially 1/2 that of the first object and the second object is arranged on a boundary line between the units to relax density imbalance, in the predetermined region of the plurality of units arranged adjacent, at a position where, out of the first objects and the second objects arranged to form the first invisible image, off objects are arranged adjacent to each other,
the third object and the fourth object form a second invisible image by combining one object turned on with the other object turned off, and
a sixth object having an object area ratio substantially 1/2 that of the third object and the fourth object is arranged on a boundary line between the units to relax density imbalance, in the predetermined region of the plurality of units arranged adjacent, at a position where, out of the third objects and the fourth objects arranged to form the second invisible image, off objects are arranged adjacent to each other.

28. An anti-counterfeit printed matter according to claim 27, **characterized in that** the unit has a square shape and sides each having a length of not more than 1 mm.

29. An anti-counterfeit printed matter according to claim 27 to 28, **characterized in that**
the unit further comprises a seventh object arranged in a region where the first object, the second object, the third object, and the fourth object do not exist, and
the seventh object forms a visible image.

30. An anti-counterfeit printed matter according to any one of claims 27 to 29, **characterized in that** each of the first object, the second object, the third object, and the fourth object has one of a circular shape and a polygonal shape.

31. An anti-counterfeit printed matter according to any one of claims 27 to 29, **characterized in that**
each of the first object, the second object, the third object, and the fourth object has one of a semicircular shape and an isosceles triangular shape,
when each of the first object and the second object has the semicircular shape, the first object and the second object form one circle, and when each of the first object and the second object has the isosceles triangular shape, the first object and the second object form one rectangle,
when each of the third object and the fourth object has the semicircular shape, the third object and the fourth object form one circle, and when each of the third object and the fourth object has the isosceles triangular shape, the third object and the fourth object form one rectangle, and
a half of the first object overlaps a half of the third object, a half of the first object overlaps a half of the fourth object, a half of the second object overlaps a half of the third object, and a half of the second object overlaps a half of the fourth object so that the first object, the second object, the third object, and the fourth object form one of one circle and one rectangle.

32. An anti-counterfeit printed matter according to any one of claims 27 to 31, **characterized in that**
the seventh object is arranged at a center of the unit so as to form a first visible image,
the first object and the second object are arranged on both sides of the seventh object so as to oppose each other, and the third object and the fourth object are arranged on both sides of the seventh object so as to oppose each other, and
eighth objects are arranged in four corners of the unit, respectively, so as to form a second visible image.

33. An anti-counterfeit printed matter according to claim 32, **characterized in that** a ninth object having an object area ratio substantially 1/2 that of the first object, the second object, the third object, and the fourth object is arranged at the center of the unit to relax density imbalance, in the predetermined region, at a position where the first object and the second object should originally be arranged adjacent to each other in the first direction so as to form the first invisible image and the third object and the fourth object should originally be arranged adjacent to each other in the second direction so as to form the second invisible image.

34. An anti-counterfeit printed matter according to any one of claims 27 to 30, **characterized in that**
a unit in which the first object, the second object, the third object, and the fourth object do not exist further comprises a ninth object arranged at the center of the unit, and
the ninth object has substantially the same object area as an object area of one of the first object, the second object, the third object, and the fourth object.

35. An anti-counterfeit printed matter according to any one of claims 27 to 34, **characterized in that**
the first objects, the second objects, the third objects, the fourth objects, the fifth objects, the sixth objects, the seventh objects, the eighth objects, and the ninth objects are printed using ink containing a luminescent material,
the anti-counterfeit printed matter further comprises 10th objects each having an object area not more than an object area of the seventh object and/or the eighth object, the 10th objects being printed, using an arbitrary color ink, on some objects of the seventh objects and/or the eighth objects printed using the ink containing the luminescent material, and
the 10th object forms a third visible image.

36. An anti-counterfeit printed matter according to any one of claims 27 to 34, **characterized in that**
the first objects, the second objects, the third objects, the fourth objects, the fifth objects, the sixth objects, the seventh objects, the eighth objects, and the ninth objects are printed using ink containing a luminescent material, and
a desired pattern is formed, by solid printing using a colorless transparent material, on some objects of the first objects, the second objects, the third objects, the fourth objects, the fifth objects, the sixth objects, the seventh objects, the eighth objects, and the ninth objects.

37. An anti-counterfeit printed matter **characterized in that**
a plurality of first object elements are arranged at a predetermined pitch on a base material, each first object element being formed by making pairs of first objects arranged along a first direction and second objects arranged in the same direction as that of the first objects,
a plurality of second object elements are arranged at a predetermined pitch, each second object element being formed by making pairs of third objects arranged along a second direction different from the first direction and fourth objects arranged in the same direction as that of the third objects,
a plurality of third object elements are arranged at a predetermined pitch, each third object element being formed by making pairs of fifth objects arranged along a third direction different from the first direction and the second direction and sixth objects arranged in the same direction as that of the fifth objects,
the first object and the second object which pair off have the same area,
the third object and the fourth object which pair off have the same area,
the fifth object and the sixth object which pair off have the same area,
each first object element including the first object and the second object forms a first invisible image by an on/off relationship, the first object forms one of a positive image and a negative image of the first invisible image, and the second object forms one of the negative image and the positive image of the first invisible image,
each second object element including the third object and the fourth object forms a second invisible image by the on/off relationship, the third object forms one of a positive image and a negative image of the second invisible image, and the fourth object forms one of the negative image and the positive image of the second invisible image, and
each third object element including the fifth object and the sixth object forms a third invisible image by the on/off relationship, the fifth object forms one of a positive image and a negative image of the third invisible image, and the sixth object forms one of the negative image and the positive image of the third invisible image.

38. An anti-counterfeit printed matter according to claim 37, **characterized in that** as the different directions, when the first direction in which the first objects and the second objects are arrayed is 0°, the second direction in which the third objects and the fourth objects are arrayed is 60°, and the third direction in which the fifth objects and the sixth objects are arrayed is 120°.

39. An anti-counterfeit printed matter according to claim 37 or 38, **characterized in that** the first object, the second object, the third object, the fourth object, the fifth object, and the sixth object have the same shape and the same color.

40. An anti-counterfeit printed matter according to claim 37 or 38, **characterized in that** the first object element including the first object and the second object, the second object element including the third object and the fourth object, and the third object element including the fifth object and the sixth object have different colors.

41. An anti-counterfeit printed matter according to any one of claims 37 to 39, **characterized in that**
the first objects, the second objects, the third objects, the fourth objects, the fifth objects, and the sixth objects are printed using ink containing a luminescent material, and
a desired pattern is formed, by solid printing using a colorless transparent material, on at least some objects of the first objects, the second objects, the third objects, the fourth objects, the fifth objects, and the sixth objects.

42. An anti-counterfeit printed matter according to any one of claims 37 to 41, **characterized by** further comprising both or one of a seventh object and an eighth object arranged in a region where the first object, the second object, the third object, the fourth object, the fifth object, and the sixth object do not exist,
wherein the seventh object forms a first visible image, and
the eighth object forms a second visible image.

43. An anti-counterfeit printed matter according to claim 42, **characterized in that** the seventh object and/or the eighth object is arranged and formed at a center of one of a hexagonal array and a triangular array formed by any of the first objects, the second objects, the third objects, the fourth objects, the fifth objects, and the sixth objects.

44. An anti-counterfeit printed matter according to any one of claims 37 to 43, **characterized in that** each of the first object, the second object, the third object, the fourth object, the fifth object, and the sixth object has one of a circular shape, a semicircular or smaller shape, and a polygonal shape.

45. An anti-counterfeit printed matter according to any one of claims 42 to 44, **characterized in that** the seventh object and/or the eighth object has one of a circular shape and a polygonal shape.

46. An anti-counterfeit printed matter according to any one of claims 41 to 45, **characterized in that**
the seventh objects and the eighth objects are printed using ink containing a luminescent material, and
a desired pattern is formed, by solid printing using a colorless transparent material, on at least some objects of the seventh objects and the eighth objects.

47. An anti-counterfeit printed matter according to any one of claims 42 to 45, **characterized in that**
the first objects, the second objects, the third objects, the fourth objects, the fifth objects, the sixth objects, the seventh objects, and the eighth objects are printed using ink containing a luminescent material,
the anti-counterfeit printed matter further comprises ninth objects each having an object area not more than an object area of the seventh object and/or the eighth object, the ninth objects being printed, using an arbitrary color ink, on some objects of the seventh objects and/or the eighth objects, and
the ninth object forms a third visible image.

## Patentansprüche

1. Fälschungssichere Drucksache (1), wobei
eine Vielzahl von Objekt-Elementen in einem vorbestimmten Abstand (S) in einer Matrix auf einem Grundmaterial angeordnet sind,
wobei jedes Objekt-Element ein erstes Objekt (A) und ein zweites Objekt (A') umfasst, die entlang einer ersten Richtung beiderseits einer Begrenzung in einer Mitte angeordnet sind, sodass sie einander gegenüber stehen, und
ein drittes Objekt (B) und ein viertes Objekt (B'), die entlang einer zweiten Richtung senkrecht zur ersten Richtung beiderseits einer Begrenzung in einer Mitte angeordnet sind, sodass sie einander gegenüber stehen, wobei das erste Objekt und das zweite Objekt eines jeden Objekt-Elements dieselbe Fläche haben, das dritte Objekt und das vierte Objekt eines jeden Objekt-Elements dieselbe Fläche haben, **dadurch gekennzeichnet, dass**
das erste Objekt und das zweite Objekt eines jeden Objekt-Elements ein negatives/positives Verhältnis aufweisen, das erste Objekt entweder ein positives Abbild oder ein negatives Abbild eines ersten unsichtbaren Bildes bildet, und das zweite Objekt entweder ein negatives Abbild oder ein positives Abbild des ersten unsichtbaren Bildes bildet, und dadurch, dass
das dritte Objekt und das vierte Objekt eines jeden Objekt-Elements ein negatives/positives Verhältnis aufweisen, das dritte Objekt entweder ein positives Abbild oder ein negatives Abbild eines zweiten unsichtbaren Bildes bildet, und das vierte Objekt entweder ein negatives Abbild oder ein positives Abbild des zweiten unsichtbaren Bildes bildet.

2. Fälschungssichere Drucksache nach Anspruch 1, **dadurch gekennzeichnet, dass** das Objekt-Element eine quadratische Form und Seiten aufweist, die jeweils eine Länge von nicht mehr als 1 mm aufweisen.

3. Fälschungssichere Drucksache nach Anspruch 1 oder 2, **dadurch gekennzeichnet, dass**
das Objekt-Element darüber hinaus ein fünftes Objekt umfasst, das in einem Bereich angeordnet ist, wo das erste Objekt, das zweite Objekt, das dritte Objekt und das vierte Objekt nicht vorhanden sind, und
das fünfte Objekt ein sichtbares Bild bildet.

4. Fälschungssichere Drucksache nach irgendeinem der Ansprüche 1 bis 3, **dadurch gekennzeichnet, dass** sowohl das erste Objekt, als auch das zweite Objekt, das dritte Objekt, und das vierte Objekt entweder eine kreisrunde Form oder eine polygonale Form aufweisen.

5. Fälschungssichere Drucksache nach irgendeinem der Ansprüche 1 bis 3, **dadurch gekennzeichnet, dass**
sowohl das erste Objekt, als auch das zweite Objekt, das dritte Objekt und das vierte Objekt eine Halbkreisform aufweisen,
das erste Objekt und das zweite Objekt derart angeordnet sind, dass sie einander gegenüber liegen, und somit einen Kreis bilden,
das dritte Objekt und das vierte Objekt derart angeordnet sind, dass sie einander gegenüber liegen, und somit einen Kreis bilden, und
eine Hälfte des ersten Objekts eine Hälfte des dritten Objekts überlappt, eine Hälfte des ersten Objekts eine Hälfte des vierten Objekts überlappt, und eine Hälfte des zweiten Objekts eine Hälfte des dritten Objekts überlappt, und eine Hälfte des zweiten Objekts eine Hälfte des vierten Objekts überlappt, sodass das erste Objekt, das zweite Objekt, das dritte Objekt und das vierte Objekt einen Kreis bilden.

6. Fälschungssichere Drucksache nach irgendeinem der Ansprüche 1 bis 3, **dadurch gekennzeichnet, dass**
sowohl das erste Objekt, als auch das zweite Objekt, das dritte Objekt, und das vierte Objekt die Form eines gleichschenkeligen Dreiecks aufweisen,
das erste Objekt und das zweite Objekt derart angeordnet sind, dass sie einander gegenüber liegen, und somit ein Rechteck bilden,
das dritte Objekt und das vierte Objekt derart angeordnet sind, dass sie einander gegenüber liegen, und somit ein Rechteck bilden, und
eine Hälfte des ersten Objekts eine Hälfte des dritten Objekts überlappt, eine Hälfte des ersten Objekts eine Hälfte des vierten Objekts überlappt, und eine Hälfte des zweiten Objekts eine Hälfte des dritten Objekts überlappt, und eine Hälfte des zweiten Objekts eine Hälfte des vierten Objekts überlappt, sodass das erste Objekt, das zweite Objekt, das dritte Objekt und das vierte Objekt ein Rechteck bilden.

7. Fälschungssichere Drucksache nach irgendeinem der Ansprüche 2 bis 6, **dadurch gekennzeichnet, dass**
jedes der fünften Objekte in der Mitte des Objekt-Elements angeordnet ist, sodass es ein erstes sichtbares Bild bildet,
das erste Objekt und das zweite Objekt beiderseits des fünften Objekts angeordnet sind, sodass sie einander gegenüber liegen,
das dritte Objekt und das vierte Objekt beiderseits des fünften Objekts angeordnet sind, sodass sie einander gegenüber liegen, und
sechste Objekte jeweils in vier Ecken des Objekt-Elements angeordnet sind, sodass sie ein zweites sichtbares Bild bilden.

8. Fälschungssichere Drucksache nach Anspruch 7, **dadurch gekennzeichnet, dass**
die ersten Objekte, die zweiten Objekte, die dritten Objekte, die vierten Objekte, die fünften Objekte, und die sechsten Objekte mithilfe einer Tinte gedruckt werden, die ein lumineszierendes Material enthält,
wobei die fälschungssichere Drucksache darüber hinaus siebte Objekte umfasst, die jeweils eine Objektfläche aufweisen, die nicht größer als eine Objektfläche des fünften Objekts und/ oder des sechsten Objekts ist, wobei die siebten Objekte mithilfe einer beliebigen Farbtinte auf zumindest einige der fünften Objekte und/ oder sechsten Objekte gedruckt werden, die mithilfe einer Tinte gedruckt werden, die ein lumineszierendes Material enthält, und
das siebte Objekt ein drittes sichtbares Bild bildet.

9. Fälschungssichere Drucksache nach irgendeinem der Ansprüche 1 bis 6, **dadurch gekennzeichnet, dass**
die ersten Objekte, die zweiten Objekte, die dritten Objekte, und die vierten Objekte mithilfe einer Tinte gedruckt werden, die ein lumineszierendes Material enthält, und
ein gewünschtes Muster durch einen Vollflächendruck mithilfe eines farblosen durchsichtigen Materials auf zumindest einigen der ersten Objekte, zweiten Objekte, dritten Objekte und vierten Objekte gebildet wird.

10. Fälschungssichere Drucksache nach Anspruch 7, **dadurch gekennzeichnet, dass**
die ersten Objekte, die zweiten Objekte, die dritten Objekte, die vierten Objekte, die fünften Objekte, und die sechsten Objekte mithilfe einer Tinte gedruckt werden, die ein lumineszierendes Material enthält, und
ein gewünschtes Muster durch einen Vollflächendruck mithilfe eines farblosen durchsichtigen Materials auf zumindest einigen der ersten Objekte, zweiten Objekte, dritten Objekte, vierten Objekte, fünften Objekte, und sechsten Objekte gebildet wird.

11. Fälschungssichere Drucksache, **dadurch gekennzeichnet, dass**
eine Vielzahl von ersten unsichtbaren Bildelementen (10) und eine Vielzahl von zweiten unsichtbaren Bildelementen (11) abwechselnd auf einem Grundmaterial aneinandergereiht sind,
wobei jedes erste unsichtbare Bildelement (20) eine Vielzahl von ersten Objektelementen (8) umfasst, die periodisch in einem vorbestimmten Abstand entlang einer vorbestimmten Richtung angeordnet sind, und jedes erste Objektelement ein erstes Objekt (A) und ein zweites Objekt (A') umfasst, die beiderseits einer Begrenzung in einer Mitte angeordnet sind, sodass sie einander gegenüber stehen,
wobei jedes zweite unsichtbare Bildelement (11) eine Vielzahl von zweiten Objekt-Elementen (9) umfasst, das periodisch im selben Abstand, wie der vorbestimmte Abstand entlang derselben Richtung wie die vorbestimmte Richtung angeordnet sind, und jedes zweite Objekt-Element ein drittes Objekt (B) und ein viertes Objekt (B') umfasst, die beiderseits einer Begrenzung in der Mitte angeordnet sind, sodass sie einander gegenüber stehen,
wobei das erste Objekt und das zweite Objekt eines jeden ersten Objekt-Elements ein negatives/positives Verhältnis, dieselbe Fläche und dieselbe Farbe aufweisen,
wobei das erste Objekt entweder ein positives Abbild oder ein negatives Abbild eines ersten unsichtbaren Bildes bildet und das zweite Objekt entweder ein negatives Abbild oder ein positives Abbild des ersten unsichtbaren Bildes bildet,
wobei das dritte Objekt und das vierte Objekt eines jeden zweiten Objekt-Elements ein negatives/positives Verhältnis, dieselbe Fläche und dieselbe Farbe aufweisen, und
das dritte Objekt entweder ein positives Abbild oder ein negatives Abbild des zweiten unsichtbaren Bildes bildet und das vierte Objekt entweder ein negatives Abbild oder ein positives Abbild des zweiten unsichtbaren Bildes bildet.

12. Fälschungssichere Drucksache nach Anspruch 11, **dadurch gekennzeichnet, dass** der Abstand des ersten Objekt-Elements und des zweiten Objekt-Elements nicht größer als 1 mm beträgt.

13. Fälschungssichere Drucksache nach Anspruch 11 oder 12, **dadurch gekennzeichnet, dass** das erste Objekt und das zweite Objekt, die das erste Objekt-Element bilden, und das dritte Objekt und das vierte Objekt, die das zweite Objekt-Element bilden dieselbe Form aufweisen.

14. Fälschungssichere Drucksache nach irgendeinem der Ansprüche 11 bis 13, **dadurch gekennzeichnet, dass** das erste Objekt, das zweite Objekt, das dritte Objekt, und das vierte Objekt dieselbe Form und dieselbe Farbe aufweisen.

15. Fälschungssichere Drucksache nach irgendeinem der Ansprüche 11 bis 13, **dadurch gekennzeichnet, dass** das erste Objekt-Element, das aus dem ersten Objekt und dem zweiten Objekt gebildet wird, und das zweite Objekt-Element, das aus dem dritten Objekt und dem vierten Objekt gebildet wird, unterschiedliche Farben aufweisen.

16. Fälschungssichere Drucksache nach irgendeinem der Ansprüche 11 bis 15, **dadurch gekennzeichnet, dass**
im ersten unsichtbaren Bild-Element und dem zweiten unsichtbaren Bild-Element,
fünfte Objekte an Positionen angeordnet sind, die einige Objekte des ersten Objekts, des zweiten Objekts, des dritten Objekts, und des vierten Objekts überlappen,
wobei jedes der fünften Objekte eine Fläche nicht kleiner als eine Fläche des ersten Objekts, des zweiten Objekts, des dritten Objekts, und des vierten Objekts aufweist, und
das fünften Objekt ein sichtbares Bild bildet.

17. Fälschungssichere Drucksache nach irgendeinem der Ansprüche 11 bis 16, **dadurch gekennzeichnet, dass** eine Farbdichte des fünften Objekts nicht größer ist, als die Farbdichte des ersten Objekts, des zweiten Objekts, des dritten Objekts, und des vierten Objekts.

18. Fälschungssichere Drucksache nach irgendeinem der Ansprüche 11 bis 17, **dadurch gekennzeichnet, dass** das fünfte Objekt dieselbe Form aufweist, wie jene des ersten Objekts, des zweiten Objekts, des dritten Objekts und des vierten Objekts.

19. Fälschungssichere Drucksache nach irgendeinem der Ansprüche 11 bis 18, **dadurch gekennzeichnet, dass** das Anordnen der fünften Objekte in den Positionen, die einige Objekte des ersten Objekts, des zweiten Objekts, des dritten Objekts, und des vierten Objekts überlappen, beim periodischen Aneinanderreihen der Vielzahl von ersten unsichtbaren Bild-Elementen und der Vielzahl von zweiten unsichtbaren Bild-Elementen auf die Anordnung in den Positionen von einigen Objekten, die ursprünglich angeordnet werden sollten, jedoch nicht der einigen Objekte, sondern nur der fünften Objekte hinweist, oder auf die Anordnung der einigen Objekte zuerst, und danach auf die Anordnung der fünften Objekte durch Überdrucken.

20. Fälschungssichere Drucksache nach irgendeinem der Ansprüche 11 bis 19, **dadurch gekennzeichnet, dass**
die ersten Objekte bis vierten Objekte oder die ersten Objekte bis fünften Objekte mithilfe einer Tinte gedruckt werden, die ein lumineszierendes Material enthält,
wobei die fälschungssichere Drucksache darüber hinaus sechste Objekte umfasst, die jeweils eine Objektfläche nicht größer als eine Objektfläche des ersten Objekts bis vierten Objekts oder des ersten Objekts bis fünften Objekts haben, wobei die sechsten Objekte mithilfe einer beliebigen Farbtinte auf zumindest einigen der Objekte gedruckt werden, die aus den ersten Objekten bis vierten Objekten oder den ersten Objekten bis fünften Objekten ausgewählt werden, die mithilfe einer Tinte gedruckt werden, die ein lumineszierendes Material enthält, und
das sechste Objekt ein drittes sichtbares Bild bildet.

21. Fälschungssichere Drucksache nach irgendeinem der Ansprüche 11 bis 19, **dadurch gekennzeichnet, dass**
die ersten Objekte bis vierten Objekte oder die ersten Objekte bis fünften Objekte mithilfe einer Tinte gedruckt werden, die ein lumineszierendes Material enthält, und
ein gewünschtes Muster durch einen Vollflächendruck mithilfe eines farblosen durchsichtigen Materials auf zumindest einigen Objekten der ersten Objekte bis vierten Objekte oder der ersten Objekte bis fünften Objekte gebildet wird.

22. Fälschungssichere Drucksache, **dadurch gekennzeichnet, dass**
eine Vielzahl von Einheiten periodisch in einem vorbestimmten Abstand in einem vorbestimmten Bereich auf einem Grundmaterial angeordnet sind, wobei jede Einheit ein erstes Objekt und ein zweites Objekt umfasst, die entlang einer ersten Richtung beiderseits einer Begrenzung in einer Mitte angeordnet sind, sodass sie einander gegenüber stehen,
wobei in jeder der Vielzahl von angeordneten Einheiten das erste Objekt und das zweite Objekt ein negatives/ positives Verhältnis, dieselbe Fläche und dieselbe Farbe aufweisen,
wobei das erste Objekt und das zweite Objekt durch das Kombinieren eines aufgedrehten Objekts mit dem anderen abgedrehten Objekt ein unsichtbares Bild bilden, und
ein drittes Objekt ein Objektflächenverhältnis aufweist, das im Wesentlichen der Hälfte von dem des ersten Objekts und des zweiten Objekts entspricht und im Wesentlichen dieselbe Farbe wie jene des ersten Objekts aufweist und das zweite Objekt an einer Begrenzungslinie zwischen dem ersten Objekt und dem zweiten Objekt angeordnet ist, um ein Dichteungleichgewicht in dem vorbestimmten Bereich der Vielzahl von nebeneinander angeordneten Einheiten in einer Position auszugleichen, wo außerhalb der ersten Objekte und der zweiten Objekte, die angeordnet sind, um das unsichtbare Bild zu bilden, abgedrehte Objekte jeweils nebeneinander angeordnet sind.

23. Fälschungssichere Drucksache nach Anspruch 22, **dadurch gekennzeichnet, dass** der vorbestimmte Abstand der Einheiten nicht mehr als 1 mm beträgt.

24. Fälschungssichere Drucksache nach Anspruch 22 oder 23, **dadurch gekennzeichnet, dass**
vierte Objekte durch Überdrucken angeordnet sind, oder nur die vierten Objekte in Positionen von einigen Objekten angeordnet sind, wo das erste Objekt und/ oder das zweite Objekt ursprünglich das unsichtbare Bild bilden sollten,
wobei jedes der vierten Objekte eine Fläche aufweist, die nicht kleiner ist, als eine Fläche des ersten Objekts und des zweiten Objekts, und
das vierte Objekt ein sichtbares Bild bildet.

25. Fälschungssichere Drucksache nach irgendeinem der Ansprüche 22 bis 24, **dadurch gekennzeichnet, dass** eine Farbdichte des vierten Objekts nicht größer ist, als eine Farbdichte des ersten Objekts und des zweiten Objekts.

26. Fälschungssichere Drucksache nach irgendeinem der Ansprüche 22 bis 25, **dadurch gekennzeichnet, dass**
die ersten Objekte, die zweiten Objekte, die dritten Objekte, und die vierten Objekte mithilfe einer Tinte gedruckt werden, die ein lumineszierendes Material enthält, und
ein gewünschtes Muster durch einen Vollflächendruck mithilfe eines farblosen durchsichtigen Materials auf einigen Objekten der ersten Objekte, zweiten Objekte, dritten Objekte, und vierten Objekte gebildet wird.

27. Fälschungssichere Drucksache, **dadurch gekennzeichnet, dass**
eine Vielzahl von Einheiten periodisch in einem vorbestimmten Abstand in einem vorbestimmten Bereich auf einem Grundmaterial angeordnet sind, wobei jede Einheit ein erstes Objekt und ein zweites Objekt umfasst, die entlang einer ersten Richtung beiderseits einer Begrenzung in einer Mitte angeordnet sind, sodass sie einander gegenüber stehen, und ein drittes Objekt und ein viertes Objekt, die entlang einer zweiten Richtung senkrecht zur ersten Richtung beiderseits einer Begrenzung in einer Mitte angeordnet sind, sodass sie einander gegenüber stehen,
wobei in jeder der Vielzahl von angeordneten Einheiten das erste Objekt und das zweite Objekt ein negatives/positives Verhältnis aufweisen und das dritte Objekt und das vierte Objekt das negative/positive Verhältnis aufweisen,
wobei das erste Objekt, das zweite Objekt, das dritte Objekt, und das vierte Objekt dieselbe Fläche und dieselbe Farbe aufweisen,
wobei das erste Objekt und das zweite Objekt durch das Kombinieren eines aufgedrehten Objekts mit dem anderen abgedrehten Objekt ein unsichtbares Bild bilden,
wobei ein fünftes Objekt ein Objektflächenverhältnis aufweist, das im Wesentlichen der Hälfte von dem des ersten Objekts entspricht und das zweite Objekt an einer Begrenzungslinie zwischen den Einheiten angeordnet ist, um ein Dichteungleichgewicht in dem vorbestimmten Bereich der Vielzahl von nebeneinander angeordneten Einheiten in einer Position auszugleichen, wo außerhalb der ersten Objekte und der zweiten Objekte, die angeordnet sind, um das erste unsichtbare Bild zu bilden, abgedrehte Objekte jeweils nebeneinander angeordnet sind,
wobei das dritte Objekt und das vierte Objekt durch das Kombinieren eines aufgedrehten Objekts mit dem anderen abgedrehten Objekt ein zweites unsichtbares Bild bilden, und
ein sechstes Objekt ein Objektflächenverhältnis aufweist, das im Wesentlichen der Hälfte von dem des dritten Objekts entspricht und das vierte Objekt an einer Begrenzungslinie zwischen den Einheiten angeordnet ist, um ein Dichteungleichgewicht in dem vorbestimmten Bereich der Vielzahl von nebeneinander angeordneten Einheiten in einer Position auszugleichen, wo außerhalb der dritten Objekte und der vierten Objekte, die angeordnet sind, um das zweite unsichtbare Bild zu bilden, abgedrehte Objekte jeweils nebeneinander angeordnet sind.

28. Fälschungssichere Drucksache nach Anspruch 27, **dadurch gekennzeichnet, dass** die Einheit eine quadratische Form und Seiten aufweist, die jeweils eine Länge von nicht mehr als 1 mm aufweisen.

29. Fälschungssichere Drucksache nach Anspruch 27 bis 28, **dadurch gekennzeichnet, dass**
die Einheit darüber hinaus ein siebtes Objekt umfasst, das in einem Bereich angeordnet ist, wo das erste Objekt, das zweite Objekt, das dritte Objekt, und das vierte Objekt nicht vorhanden sind, und
das siebte Objekt ein sichtbares Bild bildet.

30. Fälschungssichere Drucksache nach irgendeinem der Ansprüche 27 bis 29, **dadurch gekennzeichnet, dass** sowohl das erste Objekt, als auch das zweite Objekt, das dritte Objekt, und das vierte Objekt entweder eine kreisrunde Form oder eine polygonale Form aufweisen.

31. Fälschungssichere Drucksache nach irgendeinem der Ansprüche 27 bis 29, **dadurch gekennzeichnet, dass**
sowohl das erste Objekt, als auch das zweite Objekt, das dritte Objekt, und das vierte Objekt entweder eine Halbkreisform oder die Form eines gleichschenkeligen Dreiecks aufweisen,
wenn sowohl das erste Objekt, als auch das zweite Objekt die Halbkreisform aufweisen, das erste Objekt und das zweite Objekt einen Kreis bilden, und wenn sowohl das erste Objekt, als auch das zweite Objekt die Form eines gleichschenkeligen Dreiecks aufweisen, das erste Objekt und das zweite Objekt ein Rechteck bilden,
wenn sowohl das dritte Objekt, als auch das vierte Objekt die Halbkreisform aufweisen, das dritte Objekt und das vierte Objekt einen Kreis bilden, und wenn sowohl das dritte Objekt, als auch das vierte Objekt die Form eines gleichschenkeligen Dreiecks aufweisen, das dritte Objekt und das vierte Objekt ein Rechteck bilden, und
eine Hälfte des ersten Objekts eine Hälfte des dritten Objekts überlappt, eine Hälfte des ersten Objekts eine Hälfte des vierten Objekts überlappt, und eine Hälfte des zweiten Objekts eine Hälfte des dritten Objekts überlappt, und eine Hälfte des zweiten Objekts eine Hälfte des vierten Objekts überlappt, sodass das erste Objekt, das zweite Objekt, das dritte Objekt, und das vierte Objekt entweder einen Kreis oder ein Rechteck bilden.

32. Fälschungssichere Drucksache nach irgendeinem der Ansprüche 27 bis 31, **dadurch gekennzeichnet, dass**
das siebte Objekt in einer Mitte der Einheit angeordnet ist, sodass es ein erstes sichtbares Bild bildet,
das erste Objekt und das zweite Objekt beiderseits des siebten Objekts angeordnet sind, sodass sie einander gegenüber liegen, und das dritte Objekt und das vierte Objekt beiderseits des siebten Objekts angeordnet sind, sodass sie einander gegenüber liegen, und
achte Objekte jeweils in vier Ecken der Einheit angeordnet sind, um ein zweites sichtbares Bild zu bilden.

33. Fälschungssichere Drucksache nach Anspruch 32, **dadurch gekennzeichnet, dass** ein neuntes Objekt ein Objektflächenverhältnis aufweist, das im Wesentlichen der Hälfte von dem des ersten Objekts, des zweiten Objekts, des dritten Objekts entspricht, und das vierte Objekt in der Mitte der Einheit angeordnet ist, um ein Dichteungleichgewicht in dem vorbestimmten Bereich in einer Position auszugleichen, wo das erste Objekt und das zweite Objekt ursprünglich jeweils nebeneinander in der ersten Richtung angeordnet werden sollten, um das erste unsichtbare Bild zu bilden, und das dritte Objekt und das vierte Objekt ursprünglich jeweils nebeneinander in der zweiten Richtung angeordnet werden sollten, um das zweite unsichtbare Bild zu bilden.

34. Fälschungssichere Drucksache nach irgendeinem der Ansprüche 27 bis 30, **dadurch gekennzeichnet, dass**
eine Einheit, in der das erste Objekt, das zweite Objekt, das dritte Objekt, und das vierte Objekt nicht vorhanden sind, darüber hinaus ein neuntes Objekt umfasst, das in der Mitte der Einheit angeordnet ist, und
das neunte Objekt im Wesentlichen dieselbe Objektfläche aufweist, wie eine Objektfläche von entweder dem ersten Objekt, dem zweiten Objekt, dem dritten Objekt, und dem vierten Objekt.

35. Fälschungssichere Drucksache nach irgendeinem der Ansprüche 27 bis 34, **dadurch gekennzeichnet, dass**
die ersten Objekte, die zweiten Objekte, die dritten Objekte, die vierten Objekte, die fünften Objekte, die sechsten Objekte, die siebten Objekte, die achten Objekte, und die neunten Objekte mithilfe einer Tinte gedruckt werden, die ein lumineszierendes Material enthält,
die fälschungssichere Drucksache darüber hinaus zehnte Objekte umfasst, die jeweils eine Objektfläche aufweisen, die nicht größer ist, als eine Objektfläche des siebten Objekts und/ oder des achten Objekts, wobei die zehnten Objekte mithilfe einer beliebigen Farbtinte auf zumindest einigen der siebten Objekte und/ oder achten Objekte gedruckt werden, die mithilfe einer Tinte gedruckt werden, die ein lumineszierendes Material enthält, und
das zehnte Objekt ein drittes sichtbares Bild bildet.

36. Fälschungssichere Drucksache nach irgendeinem der Ansprüche 27 bis 34, **dadurch gekennzeichnet, dass**
die ersten Objekte, die zweiten Objekte, die dritten Objekte, die vierten Objekte, die fünften Objekte, die sechsten Objekte, die siebten Objekte, die achten Objekte, und die neunten Objekte mithilfe einer Tinte gedruckt werden, die ein lumineszierendes Material enthält, und
ein gewünschtes Muster durch einen Vollflächendruck mithilfe eines farblosen durchsichtigen Materials auf zumindest einigen Objekten der ersten Objekte, der zweiten Objekte, der dritten Objekte, der vierten Objekte, der fünften Objekte, der sechsten Objekte, der siebten Objekte, der achten Objekte, und der neunten Objekte gebildet wird.

37. Fälschungssichere Drucksache, **dadurch gekennzeichnet, dass**
eine Vielzahl von ersten Objekt-Elementen in einem vorbestimmten Abstand auf einem Grundmaterial angeordnet sind, wobei jedes erste Objekt-Element durch die Bildung von Paaren von ersten Objekten gebildet wird, die entlang einer ersten Richtung angeordnet sind, und zweiten Objekten, die in dieselbe Richtung angeordnet sind, wie jene der ersten Objekte,
eine Vielzahl von zweiten Objekt-Elementen in einem vorbestimmten Abstand angeordnet sind, und jedes zweite Objekt-Element durch die Bildung von Paaren von dritten Obj ekten gebildet werden, die entlang einer zweiten Richtung angeordnet sind, die sich von der ersten Richtung unterscheidet, und vierten Objekten, die in dieselbe Richtung angeordnet sind, wie jene der dritten Objekte,
eine Vielzahl von dritten Objekt-Elementen in einem vorbestimmten Abstand angeordnet sind, und jedes dritte Objekt-Element durch die Bildung von Paaren von fünften Objekten gebildet werden, die entlang einer dritten Richtung angeordnet sind, die sich von der ersten Richtung und von der zweiten Richtung unterscheidet, und sechsten Objekten, die in dieselbe Richtung angeordnet sind, wie jene der fünften Objekte,
das erste Objekt und das zweite Objekt und das Paar davon dieselbe Fläche aufweisen,
das dritte Objekt und das vierte Objekt und das Paar davon dieselbe Fläche aufweisen,
das fünfte Objekt und das sechste Objekt und das Paar davon dieselbe Fläche aufweisen,
wobei jedes erste Objekt-Element, das erste Objekt und das zweite Objekt umfassend, durch ein Ein/Aus Verhältnis ein erstes unsichtbares Bild bilden, das erste Objekt entweder ein positives Abbild oder ein negatives Abbild des ersten unsichtbaren Bildes bildet, und das zweite Objekt entweder ein positives Abbild oder ein negatives Abbild des ersten unsichtbaren Bildes bildet,
wobei jedes zweite Objekt-Element, das dritte Objekt und das vierte Objekt umfassend, durch ein Ein/Aus Verhältnis ein zweites unsichtbares Bild bilden, das dritte Objekt entweder ein positives Abbild oder ein negatives Abbild des zweiten unsichtbaren Bildes bildet, und das vierte Objekt entweder ein positives Abbild oder ein negatives Abbild des zweiten unsichtbaren Bildes bildet, und
wobei jedes dritte Objekt-Element, das fünfte Objekt und das sechste Objekt umfassend, durch ein Ein/Aus Verhältnis ein drittes unsichtbares Bild bilden, das fünfte Objekt entweder ein positives Abbild oder ein negatives Abbild des dritten unsichtbaren Bildes bildet, und das sechste Objekt entweder ein positives Abbild oder ein negatives Abbild des dritten unsichtbaren Bildes bildet.

38. Fälschungssichere Drucksache nach Anspruch 37, **dadurch gekennzeichnet, dass** die verschiedenen Richtungen dergestalt sind, dass wenn die erste Richtung, in die die ersten Objekte und die zweiten Objekte gereiht sind, 0° beträgt, die zweite Richtung, in die die dritten Objekte und die vierten Objekte gereiht sind, 60° beträgt, und die dritte Richtung, in die die fünften und sechsten Objekte gereiht sind, 120° beträgt.

39. Fälschungssichere Drucksache nach Anspruch 37 oder 38, **dadurch gekennzeichnet, dass** das erste Objekt, das zweite Objekt, das dritte Objekt, das vierte Objekt, das fünfte Objekt, und das sechste Objekt dieselbe Form und dieselbe Farbe aufweisen.

40. Fälschungssichere Drucksache nach Anspruch 37 oder 38, **dadurch gekennzeichnet, dass** das erste Objekt-Element, das erste Objekt und das zweite Objekt umfassend, das zweite Objekt-Element, das dritte Objekt und das vierte Objekt umfassend, und das dritte Objekt-Element, das fünfte Objekt und das sechste Objekt umfassend, unterschiedliche Farben aufweisen.

41. Fälschungssichere Drucksache nach irgendeinem der Ansprüche 37 bis 39, **dadurch gekennzeichnet, dass**
die ersten Objekte, die zweiten Objekte, die dritten Objekte, die vierten Objekte, die fünften Objekte, und die sechsten Objekte mithilfe einer Tinte gedruckt werden, die ein lumineszierendes Material enthält, und
ein gewünschtes Muster durch einen Vollflächendruck mithilfe eines farblosen durchsichtigen Materials auf zumindest einigen Objekten der ersten Objekte, zweiten Objekte, dritten Objekte, vierten Objekte, fünften Objekte und sechsten Objekte gebildet wird.

42. Fälschungssichere Drucksache nach irgendeinem der Anspruche 37 bis 41, **dadurch gekennzeichnet, dass** sie darüber hinaus entweder ein siebtes Objekt oder ein achtes Objekt oder beide umfasst, die in einem Bereich angeordnet sind, wo das erste Objekt, das zweite Objekt, das dritte Objekt, das vierte Objekt, das fünfte Objekt, und das sechste Objekt nicht vorhanden sind,
wobei das siebte Objekt ein erstes sichtbares Bild bildet, und
das achte Objekt ein zweites sichtbares Bild bildet.

43. Fälschungssichere Drucksache nach Anspruch 42, **dadurch gekennzeichnet, dass** das siebte Objekt und/ oder das achte Objekt in einer Mitte von entweder einer hexagonalen Anordnung oder einer dreieckigen Anordnung angeordnet und gebildet wird, die durch irgendeines der ersten Objekte, der zweiten Objekte, der dritten Objekte, der vierten Objekte, der fünften Objekte, und der sechsten Objekte gebildet werden.

44. Fälschungssichere Drucksache nach irgendeinem der Ansprüche 37 bis 43, **dadurch gekennzeichnet, dass** sowohl das erste Objekt, als auch das zweite Objekt, das dritte Objekt, das vierte Objekt, das fünfte Objekt, und das sechste Objekt entweder eine Kreisform, eine Halbkreisform oder kleinere Form und eine polygonale Form aufweist.

45. Fälschungssichere Drucksache nach irgendeinem der Ansprüche 42 bis 44, dadurch gekennzeichet, dass das siebte Objekt und/ oder das achte Objekt entweder eine Kreisform oder eine polygonale Form aufweisen.

46. Fälschungssichere Drucksache nach irgendeinem der Ansprüche 41 bis 45, **dadurch gekennzeichnet, dass**
die siebten Objekte und die achten Objekte mithilfe einer Tinte gedruckt werden, die ein lumineszierendes Material enthält, und
ein gewünschtes Muster durch einen Vollflächendruck mithilfe eines farblosen durchsichtigen Materials auf zumindest einigen Objekten der siebten Objekte und achten Objekte gebildet wird.

47. Fälschungssichere Drucksache nach irgendeinem der Ansprüche 42 bis 45, **dadurch gekennzeichnet, dass**
die ersten Objekte, die zweiten Objekte, die dritten Objekte, die vierten Objekte, die fünften Objekte, die sechsten Objekte, die siebten Objekte, und die achten Objekte mithilfe einer Tinte gedruckt werden, die ein lumineszierendes Material enthält,
die fälschungssichere Drucksache darüber hinaus neunte Objekte umfasst, die jeweils eine Objektfläche nicht größer als eine Objektfläche des siebten Objekts und/ oder des achten Objekts aufweisen, wobei die neunten Objekte mithilfe einer beliebigen Farbtinte auf zumindest einige der siebten Objekte und/ oder achten Objekte gedruckt werden, und
das neunte Objekt ein drittes sichtbares Bild bildet.

## Revendications

1. Imprimé anti-falsification (1), dans lequel
une pluralité d'éléments à objets sont agencés à un pas prédéterminé (5) dans une matrice sur un matériau de base,
chaque élément à objets incluant un premier objet (A) et un deuxième objet (A') qui sont agencés le long d'une première direction sur les deux côtés d'une limite à un centre afin de s'opposer l'un à l'autre, et
un troisième objet (B) et un quatrième objet (B') qui sont agencés le long d'une deuxième direction perpendiculaire à la première direction sur les deux côtés d'une limite au centre afin de s'opposer l'un à l'autre, le premier objet et le deuxième objet de chaque élément à objets possèdent la même superficie, le troisième objet et le quatrième objet de chaque élément à objets possèdent la même superficie, **caractérisé en ce que**
le premier objet et le deuxième objet de chaque élément à objets possèdent une relation négative/positive, le premier objet forme l'une parmi une image positive et une image négative d'une première image invisible, et le deuxième objet forme l'une parmi l'image négative et l'image positive de la première image invisible, et **en ce que**
le troisième objet et le quatrième objet de chaque élément à objets possèdent la relation négative/positive, le troisième objet forme l'une parmi une image positive et une image négative d'une deuxième image invisible, et le quatrième objet forme l'une parmi l'image négative et l'image positive de la deuxième image invisible.

2. Imprimé anti-falsification selon la revendication 1, **caractérisé en ce que** l'élément à objets présente une forme carrée et des côtés possédant chacun une longueur non supérieure à 1 mm.

3. Imprimé anti-falsification selon la revendication 1 ou 2, **caractérisé en ce que**
l'élément à objets comprend en outre un cinquième objet agencé dans une région où le premier objet, le deuxième objet, le troisième objet, et le quatrième objet n'existent pas, et
le cinquième objet forme une image visible.

4. Imprimé anti-falsification selon l'une quelconque des revendications 1 à 3,
**caractérisé en ce que** chacun parmi le premier objet, le deuxième objet, le troisième objet, et le quatrième objet présente l'une parmi une forme circulaire et une forme polygonale.

5. Imprimé anti-falsification selon l'une quelconque des revendications 1 à 3, **caractérisé en ce que**
chacun parmi le premier objet, le deuxième objet, le troisième objet, et le quatrième objet présente une forme semi-circulaire,
le premier objet et le deuxième objet sont agencés afin de s'opposer l'un à l'autre, formant ainsi un cercle,
le troisième objet et le quatrième objet sont agencés afin de s'opposer l'un à l'autre, formant ainsi un cercle, et
une moitié du premier objet chevauche une moitié du troisième objet, une moitié du premier objet chevauche une moitié du quatrième objet, une moitié du deuxième objet chevauche une moitié du troisième objet, et une moitié du deuxième objet chevauche une moitié du quatrième objet pour que le premier objet, le deuxième objet, le troisième objet, et le quatrième objet forment un cercle.

6. Imprimé anti-falsification selon l'une quelconque des revendications 1 à 3, **caractérisé en ce que**
chacun parmi le premier objet, le deuxième objet, le troisième objet, et le quatrième objet présente une forme de triangle isocèle,
le premier objet et le deuxième objet sont agencés afin de s'opposer l'un à l'autre, formant ainsi un rectangle,
le troisième objet et le quatrième objet sont agencés afin de s'opposer l'un à l'autre, formant ainsi un rectangle, et
une moitié du premier objet chevauche une moitié du troisième objet, une moitié du premier objet chevauche une moitié du quatrième objet, une moitié du deuxième objet chevauche une moitié du troisième objet, et une moitié du deuxième objet chevauche une moitié du quatrième objet pour que le premier objet, le deuxième objet, le troisième objet, et le quatrième objet forment un rectangle.

7. Imprimé anti-falsification selon l'une quelconque des revendications 2 à 6, **caractérisé en ce que**
chacun des cinquièmes objets est agencé au centre de l'élément à objets afin de former une première image visible, le premier objet et le deuxième objet sont agencés sur les deux côtés du cinquième objet afin de s'opposer l'un à l'autre, le troisième objet et le quatrième objet sont agencés sur les deux côtés du cinquième objet afin de s'opposer l'un à l'autre, et
des sixièmes objets sont agencés dans quatre coins de l'élément à objets, respectivement, afin de former une deuxième image visible.

8. Imprimé anti-falsification selon la revendication 7, **caractérisé en ce que**
les premiers objets, les deuxièmes objets, les troisièmes objets, les quatrièmes objets, les cinquièmes objets, et les sixièmes objets sont imprimés en utilisant de l'encre contenant une matière luminescente,
l'imprimé anti-falsification comprend en outre des septièmes objets possédant chacun une superficie d'objet non supérieure à une superficie d'objet du cinquième objet et/ou du sixième objet, les septièmes objets étant imprimés, en utilisant une encre de couleur arbitraire, sur au moins certains parmi les cinquièmes objets et/ou les sixièmes objets imprimés en utilisant l'encre contenant la matière luminescente, et
le septième objet forme une troisième image visible.

9. Imprimé anti-falsification selon l'une quelconque des revendications 1 à 6, **caractérisé en ce que**
les premiers objets, les deuxièmes objets, les troisièmes objets, et les quatrièmes objets sont imprimés en utilisant de l'éncre contenant une matière luminescente, et
un motif souhaité est formé, par impression pleine en utilisant une matière transparente sans couleur, sur au moins certains parmi les premiers objets, les deuxièmes objets, les troisièmes objets, et les quatrièmes objets.

10. Imprimé anti-falsification selon la revendication 7, **caractérisé en ce que**
les premiers objets, les deuxièmes objets, les troisièmes objets, les quatrièmes objets, les cinquièmes objets, et les sixièmes objets sont imprimés en utilisant de l'encre contenant une matière luminescente, et
un motif souhaité est formé, par impression pleine en utilisant une matière transparente sans couleur, sur au moins certains parmi les premiers objets, les deuxièmes objets, les troisièmes objets, les quatrièmes objets, les cinquièmes objets, et les sixièmes objets.

11. Imprimé anti-falsification, **caractérisé en ce que**
une pluralité de premiers éléments d'image invisible (10) et une pluralité de seconds éléments d'image invisible (11) sont disposés tour à tour sur un matériau de base,
chaque premier élément d'image invisible (20) incluant une pluralité de premiers éléments à objets (8) périodiquement agencés à un pas prédéterminé le long d'une direction prédéterminée, et chaque premier élément à objets incluant un premier objet (A) et un deuxième objet (A') qui sont agencés sur les deux côtés d'une limite à un centre afin de s'opposer l'un à l'autre,
chaque second élément d'image invisible (11) incluant une pluralité de seconds éléments à objets (9) périodiquement agencés au même pas que le pas prédéterminé le long de la même direction que la direction prédéterminée, et chaque deuxième élément à objets incluant un troisième objet (B) et un quatrième objet (B') qui sont agencés sur les deux côtés d'une limite au centre afin de s'opposer l'un à l'autre,
le premier objet et le deuxième objet de chaque premier élément à objets possèdent une relation négative/positive, la même superficie, et la même couleur,
le premier objet forme l'une parmi une image positive et une image négative d'une première image invisible, et le deuxième objet forme l'une parmi l'image négative et l'image positive de la première image invisible,
le troisième objet et le quatrième objet de chaque second élément à objets possèdent la relation négative/positive, la même superficie, et la même couleur, et
le troisième objet forme l'une parmi une image positive et une image négative d'une deuxième image invisible, et le quatrième objet forme l'une parmi l'image négative et l'image positive de la deuxième image invisible.

12. Imprimé anti-falsification selon la revendication 11, **caractérisé en ce que** le pas des premiers éléments à objets et des seconds éléments à objets n'est pas supérieur à 1 mm.

13. Imprimé anti-falsification selon la revendication 11 ou 12, **caractérisé en ce que** le premier objet et le deuxième objet qui constituent le premier élément à objets et le troisième objet et le quatrième objet qui constituent le second élément à objets présentent la même forme.

14. Imprimé anti-falsification selon l'une quelconque des revendications 11 à 13, **caractérisé en ce que** le premier objet, le deuxième objet, le troisième objet, et le quatrième objet présentent la même forme et la même couleur.

15. Imprimé anti-falsification selon l'une quelconque des revendications 11 à 13, **caractérisé en ce que** le premier élément à objets formé à partir du premier objet et du deuxième objet et le second élément à objets formé à partir du troisième objet et du quatrième objet possèdent des couleurs différentes.

16. Imprimé anti-falsification selon l'une quelconque des revendications 11 à 15, **caractérisé en ce que**
dans le premier élément d'image invisible et le second élément d'image invisible,
des cinquièmes objets sont agencés à des positions chevauchant certains objets parmi le premier objet, le deuxième objet, le troisième objet, et le quatrième objet,
chacun des cinquièmes objets possède une superficie non inférieure à une superficie du premier objet, du deuxième objet, du troisième objet, et du quatrième objet, et
le cinquième objet forme une image visible.

17. Imprimé anti-falsification selon l'une quelconque des revendications 11 à 16, **caractérisé en ce qu'**une densité de couleur du cinquième objet n'est pas supérieure à une densité de couleur du premier objet, du deuxième objet, du troisième objet, et du quatrième objet.

18. Imprimé anti-falsification selon l'une quelconque des revendications 11 à 17, **caractérisé en ce que** le cinquième objet présente la même forme que celle du premier objet, du deuxième objet, du troisième objet, et du quatrième objet.

19. Imprimé anti-falsification selon l'une quelconque des revendications 11 à 18, **caractérisé en ce que** l'agencement des cinquièmes objets aux positions chevauchant certains objets parmi le premier objet, le deuxième objet, le troisième objet, et le quatrième objet indique, lors de la disposition périodique de la pluralité de premiers éléments d'image invisible et de la pluralité des seconds éléments d'image invisible, l'agencement, aux positions des certains objets qui doivent être agencés à l'origine, non des certains objets mais seulement des cinquièmes objets, ou l'agencement des certains objets d'abord et puis l'agencement des cinquièmes objets par surimpression.

20. Imprimé anti-falsification selon l'une quelconque des revendications 11 à 19, **caractérisé en ce que**
les premiers aux quatrièmes objets ou les premiers aux cinquièmes objets sont imprimés en utilisant de l'encre contenant une matière luminescente,
l'imprimé anti-falsification comprend en outre des sixièmes objets chacun possédant une superficie d'objet non supérieure à une superficie d'objet du premier au quatrième objet ou du premier au cinquième objet, les sixièmes objets étant imprimés, en utilisant une encre de couleur arbitraire, sur au moins certains objets sélectionnés parmi les premiers aux quatrièmes objets ou les premiers aux cinquièmes objets imprimés en utilisant l'encre contenant la matière luminescente, et
le sixième objet forme une troisième image visible.

21. Imprimé anti-falsification selon l'une quelconque des revendications 11 à 19, **caractérisé en ce que**
les premiers aux quatrièmes objets ou les premiers aux cinquièmes objets sont imprimés en utilisant de l'encre contenant une matière luminescente, et
un motif souhaité est formé, par impression pleine en utilisant une matière transparente sans couleur, sur au moins certains objets des premiers aux quatrièmes objets ou des premiers aux cinquièmes objets.

22. Imprimé anti-falsification, **caractérisé en ce que**
une pluralité d'unités sont périodiquement agencées à un pas prédéterminé dans une région prédéterminée sur un matériau de base, chaque unité incluant un premier objet et un deuxième objet qui sont agencés le long d'une première direction sur les deux côtés d'une limite à un centre afin de s'opposer l'un à l'autre,
dans chacune parmi la pluralité d'unités agencées, le premier objet et le deuxième objet possèdent une relation négative/positive, la même superficie, et la même couleur,
le premier objet et le deuxième objet forment une image invisible en combinant un objet allumé avec l'autre objet éteint, et
un troisième objet possédant un rapport de superficie d'objet sensiblement d'1/2 de celui du premier objet et du deuxième objet et sensiblement la même couleur que celle du premier objet et du deuxième objet est agencé sur une ligne de limite entre le premier objet et le deuxième objet pour assouplir un déséquilibre de densité, dans la région prédéterminée de la pluralité d'unités agencées adjacentes, à une position où, parmi les premiers objets et les deuxièmes objets agencés pour former l'image invisible, des objets éteints sont agencés adjacents les uns aux autres.

23. Imprimé anti-falsification selon la revendication 22, **caractérisé en ce que** le pas prédéterminé des unités n'est pas supérieur à 1 mm.

24. Imprimé anti-falsification selon la revendication 22 ou 23, **caractérisé en ce que**
des quatrièmes objets sont agencés par surimpression, ou seulement les quatrièmes objets sont agencés à des positions de certains objets où le premier objet et/ou le deuxième objet doivent former l'image invisible à l'origine,
chacun des quatrièmes objets possède une superficie non inférieure à une superficie du premier objet et du deuxième objet, et
le quatrième objet forme une image visible.

25. Imprimé anti-falsification selon l'une quelconque des revendications 22 à 24, **caractérisé en ce qu'**une densité de couleur du quatrième objet n'est pas supérieure à une densité de couleur du premier objet et du deuxième objet.

26. Imprimé anti-falsification selon l'une quelconque des revendications 22 à 25, **caractérisé en ce que**
les premiers objets, les deuxièmes objets, les troisièmes objets, et les quatrièmes objets sont imprimés en utilisant de l'encre contenant une matière luminescente, et
un motif souhaité est formé, par impression pleine en utilisant une matière transparente sans couleur, sur certains objets parmi les premiers objets, les deuxièmes objets, les troisièmes objets, et les quatrièmes objets.

27. Imprimé anti-falsification, **caractérisé en ce que**
une pluralité d'unités sont périodiquement agencées à un pas prédéterminé dans une région prédéterminée sur un matériau de base, chaque unité incluant un premier objet et un deuxième objet qui sont agencés le long d'une première direction sur les deux côtés d'une limite à un centre afin de s'opposer l'un à l'autre et un troisième objet et un quatrième objet qui sont agencés le long d'une deuxième direction perpendiculaire à la première direction sur les deux côtés d'une limite au centre afin de s'opposer l'un à l'autre,
dans chacune parmi la pluralité d'unités agencées, le premier objet et le deuxième objet possèdent une relation négative/positive, et le troisième objet et le quatrième objet possèdent la relation négative/positive,
le premier objet, le deuxième objet, le troisième objet, et le quatrième objet possèdent la même superficie et la même couleur,
le premier objet et le deuxième objet forment une première image invisible en combinant un objet allumé avec l'autre objet éteint,
un cinquième objet possédant un rapport de superficie d'objet sensiblement d'1/2 de celui du premier objet et du deuxième objet est agencé sur une ligne de limite entre les unités pour assouplir un déséquilibre de densité, dans la région prédéterminée de la pluralité d'unités agencées adjacentes, à une position où, parmi les premiers objets et les deuxièmes objets agencés pour former la première image invisible, des objets éteints sont agencés adjacents les uns aux autres,
le troisième objet et le quatrième objet forment une deuxième image invisible en combinant un objet allumé avec l'autre objet éteint, et
un sixième objet possédant un rapport de superficie d'objet sensiblement d'1/2 de celui du troisième objet et du quatrième objet est agencé sur une ligne de limite entre les unités pour assouplir un déséquilibre de densité, dans la région prédéterminée de la pluralité d'unités agencées adjacentes, à une position où, parmi les troisièmes objets et les quatrièmes objets agencés pour former la deuxième image invisible, des objets éteints sont agencés adjacents les uns aux autres.

28. Imprimé anti-falsification selon la revendication 27, **caractérisé en ce que** l'unité présente une forme carrée et des côtés chaque possédant une longueur non supérieure à 1 mm.

29. Imprimé anti-falsification selon la revendication 27 à 28, **caractérisé en ce que**
l'unité comprend en outre un septième objet agencé dans une région où le premier objet, le deuxième objet, le troisième objet, et le quatrième objet n'existent pas, et
le septième objet forme une image visible.

30. Imprimé anti-falsification selon l'une quelconque des revendications 27 à 29, **caractérisé en ce que** chacun parmi le premier objet, le deuxième objet, le troisième objet, et le quatrième objet présente l'une parmi une forme circulaire et une forme polygonale.

31. Imprimé anti-falsification selon l'une quelconque des revendications 27 à 29, **caractérisé en ce que**
chacun parmi le premier objet, le deuxième objet, le troisième objet, et le quatrième objet présente une parmi une forme semi-circulaire et une forme de triangle isocèle,
lorsque chacun parmi le premier objet et le deuxième objet présente la forme semi-circulaire, le premier objet et le deuxième objet forment un cercle, et lorsque chacun parmi le premier objet et le deuxième objet présente la forme de triangle isocèle, le premier objet et le deuxième objet forment un rectangle,
lorsque chaque parmi le troisième objet et le quatrième objet présente la forme semi-circulaire, le troisième objet et le quatrième objet forment un cercle, et lorsque chacun parmi le troisième objet et le quatrième objet présente la forme de triangle isocèle, le troisième objet et le quatrième objet forment un rectangle, et
une moitié du premier objet chevauche une moitié du troisième objet, une moitié du premier objet chevauche une moitié du quatrième objet, une moitié du deuxième objet chevauche une moitié du troisième objet, et une moitié du deuxième objet chevauche une moitié du quatrième objet pour que le premier objet, le deuxième objet, le troisième objet, et le quatrième objet forment l'un parmi un cercle et un rectangle.

32. Imprimé anti-falsification selon l'une quelconque des revendications 27 à 31, **caractérisé en ce que**
le septième objet est agencé à un centre de l'unité afin de former une première image visible,
le premier objet et le deuxième objet sont agencés sur les deux côtés du septième objet afin de s'opposer l'un à l'autre, et le troisième objet et le quatrième objet sont agencés sur les deux côtés du septième objet afin de s'opposer l'un à l'autre, et
des huitièmes objets sont agencés dans quatre coins de l'unité, respectivement, afin de former une deuxième image visible.

33. Imprimé anti-falsification selon la revendication 32, **caractérisé en ce qu'**un neuvième objet possédant un rapport de superficie d'objet sensiblement d'1/2 de celui du premier objet, du deuxième objet, du troisième objet, et du quatrième objet est agencé au centre de l'unité pour assouplir un déséquilibre de densité, dans la région prédéterminée, à une position où le premier objet et le deuxième objet doivent à l'origine être agencés adjacents l'un à l'autre dans la première direction afin de former la première image invisible et le troisième objet et le quatrième objet doivent à l'origine être agencés adjacents l'un à l'autre dans la deuxième direction afin de former la deuxième image invisible.

34. Imprimé anti-falsification selon l'une quelconque des revendications 27 à 30, **caractérisé en ce qu'**une unité dans laquelle le premier objet, le deuxième objet, le troisième objet, et le quatrième objet n'existent pas comprend en outre un neuvième objet agencé au centre de l'unité, et le neuvième objet possède sensiblement la même superficie d'objet qu'une superficie d'objet de l'un parmi le premier objet, le deuxième objet, le troisième objet, et le quatrième objet.

35. Imprimé anti-falsification selon l'une quelconque des revendications 27 à 34, **caractérisé en ce que**
les premiers objets, les deuxièmes objets, les troisièmes objets, les quatrièmes objets, les cinquièmes objets, les sixièmes objets, les septièmes objets, les huitièmes objets, et les neuvièmes objets sont imprimés en utilisant de l'encre contenant une matière luminescente,
l'imprimé anti-falsification comprend en outre des dixièmes objets possédant chacun une superficie d'objet non supérieure à une superficie d'objet du septième objet et/ou du huitième objet, les dixièmes objets étant imprimés, en utilisant une encre de couleur arbitraire, sur certains objets parmi les septièmes objets et/ou les huitièmes objets imprimés en utilisant l'encre contenant la matière luminescente, et
le dixième objet forme une troisième image visible.

36. Imprimé anti-falsification selon l'une quelconque des revendications 27 à 34, **caractérisé en ce que**
les premiers objets, les deuxièmes objets, les troisièmes objets, les quatrièmes objets, les cinquièmes objets, les sixièmes objets, les septièmes objets, les huitièmes objets, et les neuvièmes objets sont imprimés en utilisant de l'encre contenant une matière luminescente, et
un motif souhaité est formé, par impression pleine en utilisant une matière transparente sans couleur, sur certains objets parmi les premiers objets, les deuxièmes objets, les troisièmes objets, les quatrièmes objets, les cinquièmes objets, les sixièmes objets, les septièmes objets, les huitièmes objets, et les neuvièmes objets.

37. Imprimé anti-falsification, **caractérisé en ce que**
une pluralité de premiers éléments à objets sont agencés à un pas prédéterminé sur un matériau de base, chaque premier élément à objets étant formé en réalisant des paires de premiers objets agencés le long d'une première direction et de deuxièmes objets agencés dans la même direction que celle des premiers objets,
une pluralité de deuxièmes éléments à objets sont agencés à un pas prédéterminé, chaque deuxième élément à objets étant formé en réalisant des paires de troisièmes objets agencés le long d'une deuxième direction différente de la première direction et de quatrièmes objets agencés dans la même direction que celle des troisièmes objets,
une pluralité de troisièmes éléments à objets sont agencés à un pas prédéterminé, chaque troisième élément à objets étant formé en réalisant des paires de cinquièmes objets agencés le long d'une troisième direction différente de la première direction et de la deuxième direction et de sixièmes objets agencés dans la même direction que celle des cinquièmes objets,
le premier objet et le deuxième objet qui sont appariés possèdent la même superficie,
le troisième objet et le quatrième objet qui sont appariés possèdent la même superficie,
le cinquième objet et le sixième objet qui sont appariés possèdent la même superficie,
chaque premier élément à objets incluant le premier objet et le deuxième objet forme une première image invisible par une relation allumée/éteinte, le premier objet forme l'une parmi une image positive et une image négative de la première image invisible, et le deuxième objet forme l'une parmi l'image négative et l'image positive de la première image invisible,
chaque deuxième élément à objets incluant le troisième objet et le quatrième objet forme une deuxième image invisible par la relation allumée/éteinte, le troisième objet forme l'une parmi une image positive et une image négative de la deuxième image invisible, et le quatrième objet forme l'une parmi l'image négative et l'image positive de la deuxième image invisible, et
chaque troisième élément à objets incluant le cinquième objet et le sixième objet forme une troisième image invisible par la relation allumée/éteinte, le cinquième objet forme l'une parmi une image positive et une image négative de la troisième image invisible, et le sixième objet forme l'une parmi l'image négative et l'image positive de la troisième image invisible.

38. Imprimé anti-falsification selon la revendication 37, **caractérisé en ce que**, en tant que différentes directions, lorsque la première direction dans laquelle les premiers objets et les deuxièmes objets sont disposés est 0°, la deuxième direction dans laquelle les troisièmes objets et les quatrièmes objets sont disposés est 60°, et la troisième direction dans laquelle les cinquièmes objets et les sixièmes objets sont disposés est 120°.

39. Imprimé anti-falsification selon la revendication 37 ou 38, **caractérisé en ce que** le premier objet, le deuxième objet, le troisième objet, le quatrième objet, le cinquième objet, et le sixième objet présentent la même forme et la même couleur.

40. Imprimé anti-falsification selon la revendication 37 ou 38, **caractérisé en ce que** le premier élément à objets incluant le premier objet et le deuxième objet, le deuxième élément à objets incluant le troisième objet et le quatrième objet, et le troisième élément à objets incluant le cinquième objet et le sixième objet possèdent des couleurs différentes.

41. Imprimé anti-falsification selon l'une quelconque des revendications 37 à 39, **caractérisé en ce que**
les premiers objets, les deuxièmes objets, les troisièmes objets, les quatrièmes objets, les cinquièmes objets, et les sixièmes objets sont imprimés en utilisant de l'encre contenant une matière luminescente, et
un motif souhaité est formé, par impression pleine en utilisant une matière transparente sans couleur, sur au moins certains objets parmi les premiers objets, les deuxièmes objets, les troisièmes objets, les quatrièmes objets, les cinquièmes objets, et les sixièmes objets.

42. Imprimé anti-falsification selon l'une quelconque des revendications 37 à 41, **caractérisé en ce qu'**il comprend en outre les deux ou l'un parmi un septième objet et un huitième objet agencés dans une région où le premier objet, le deuxième objet, le troisième objet, le quatrième objet, le cinquième objet, et le sixième objet n'existent pas,
dans lequel le septième objet forme une première image visible, et
le huitième objet forme une deuxième image visible.

43. Imprimé anti-falsification selon la revendication 42, **caractérisé en ce que** le septième objet et/ou le huitième objet sont agencés et formés à un centre de l'une parmi une matrice hexagonale et une matrice triangulaire formées par de quelconques parmi les premiers objets, les deuxièmes objets, les troisièmes objets, les quatrièmes objets, les cinquièmes objets, et les sixièmes objets.

44. Imprimé anti-falsification selon l'une quelconque des revendications 37 à 43, **caractérisé en ce que** chacun parmi le premier objet, le deuxième objet, le troisième objet, le quatrième objet, le cinquième objet, et le sixième objet présente l'une parmi une forme circulaire, une forme semi-circulaire ou forme plus petite, et une forme polygonale.

45. Imprimé anti-falsification selon l'une quelconque des revendications 42 à 44, **caractérisé en ce que** le septième objet et/ou le huitième objet présentent l'une parmi une forme circulaire et une forme polygonale.

46. Imprimé anti-falsification selon l'une quelconque des revendications 41 à 45, **caractérisé en ce que**
les septièmes objets et les huitièmes objets sont imprimés en utilisant de l'encre contenant une matière luminescente, et
un motif souhaité est formé, par impression pleine en utilisant une matière transparente sans couleur, sur au moins certains objets parmi les septièmes objets et les huitièmes objets.

47. Imprimé anti-falsification selon l'une quelconque des revendications 42 à 45, **caractérisé en ce que**
les premiers objets, les deuxièmes objets, les troisièmes objets, les quatrièmes objets, les cinquièmes objets, les sixièmes objets, les septièmes objets, et les huitièmes objets sont imprimés en utilisant de l'encre contenant une matière luminescente,
l'imprimé anti-falsification comprend en outre de neuvièmes objets possédant chacun une superficie d'objet non supérieure à une superficie d'objet du septième objet et/ou du huitième objet, les neuvièmes objets étant imprimés, en utilisant une encre de couleur arbitraire, sur certains objets parmi les septièmes objets et/ou les huitièmes objets, et
le neuvième objet forme une troisième image visible.
